# EUROPEAN PATENT SPECIFICATION

(11) **EP 3 810 720 B1**
(45) Date of publication and mention of the grant of the patent: **10.08.2022**
(21) Application number: 19731972.6
(22) Date of filing: 18.06.2019
(51) Int. Cl.: C09K 11/02, C07F 5/02, C09K 11/06, C09B 57/00, G02F 1/13, G02B 5/23

(54) **EXTRUDED PET FILMS WITH PHOTOSTABLE DYES FOR COLOR CONVERSION**
PHOTOSTABILER GRÜNER CYANO-SUBSTITUIERTER BORDIPYRROMETHEN-FARBSTOFF FÜR ANZEIGE UND BELEUCHTUNG
COLORANT BORE-DIPYRROMÉTHÈNE VERT CYANO-SUBSTITUÉ PHOTOSTABLE POUR APPLICATION D'AFFICHAGE ET D'ÉCLAIRAGE

(30) Priority: 22.06.2018 EP 18179281; 26.10.2018 EP 18202938; 21.12.2018 EP 18215371
(43) Date of publication of application: 28.04.2021
(73) Proprietor: BASF SE, 67056 Ludwigshafen am Rhein (DE)
(72) Inventor: MANGOLD, Hannah Stephanie, 67056 Ludwigshafen (DE); KOENEMANN, Martin, 67056 Ludwigshafen (DE); IVANOVICI, Sorin, 67056 Ludwigshafen (DE); INDERBITZIN, Bruno, 4057 Basel (CH); PAGANO, Sandro, 67063 Ludwigshafen (DE)
(74) Representative: BASF IP Association
(86) International application number: PCT/EP2019/065941
(87) International publication number: WO 2019/243288

(56) References cited:
- US-A1- 2016 230 960
- US-A1- 2018 134 953
- US-B2- 9 897 285

## Description

The present invention relates to a color converter comprising a polyethylene terephthalate (PET) matrix material and at least one boron-dipyrromethene (BODIPY) compound carrying at least two electron-withdrawing groups on the core carbon skeleton, a backlight unit, a liquid crystal display device and a lighting device each containing said color converter. The present invention also relates to novel boron-dipyrromethene compounds carrying cyano at the 2-, 6-positions.

### BACKGROUND OF THE INVENTION

Color converters also known as color conversion films are used in a great variety of optical devices such as liquid crystal display (LCD) panels or general lighting devices. The LCD panel typically includes a liquid crystal display unit which uses liquid crystals as the optical modulator and a backlight unit for irradiating the LCD panel. The backlight unit typically comprises an array of blue or white light-emitting diodes (LED) as light source in combination with a color converter. White light is typically created by using a blue LED in combination with the color converter. The color converter typically includes or consists of a layer comprising a polymeric material and one or more phosphors as wavelength-conversion material. The wavelength conversion material converts light emitted from the LED light source into light having a second longer wavelength, for example blue emission is converted into green or red emission and the mixing of the blue light transmitted and of the converted light gives rise to white light. The phosphor material in the polymeric material may be applied directly on a LED chip, and a configuration in which the phosphor material is applied directly and without intervening space to the LED chip is also referred to as "phosphor on chip" configuration. In phosphor on chip LEDs, the polymeric material and the phosphor are subject to relatively high thermal and radiative stress. For this reason, inorganic phosphors are used. Inorganic oxides doped with rare earth ions are most commonly used as inorganic phosphor material. The most widely used white LED is based on the emission of blue light from an InGaN chip coated with cerium-doped yttrium aluminium garnet (Ce:YAG) phosphor (emission in the yellow spectral range (around 560 nm)). The emission of the Ce:YAG phosphor is fairly broad. In addition, this type of white LED does not exhibit a separate emission band for green.

In order to produce white light from blue light by color conversion, there is a further concept in which the color converter, which generally comprises an organic phosphor material (organic fluorescent dye) and a polymeric matrix material, is at a certain distance from the LED chip. Such a structure is referred to as "remote phosphor". The spatial distance between the primary light source, the LED, and the color converter reduces the stress resulting from heat and radiation to such an extent that the requirements on the stability can often be achieved by organic fluorescent dyes. However, a main drawback hampering the application of prior art organic fluorescent dyes in remote phosphor applications based on LED lighting systems often still remains their poor photostability. The organic fluorescent dye is typically embedded in a thermoplastic polymer matrix materials such as polycarbonate (PC), polystyrene (PS) or polymethylmethacrylate (PMMA). Organic fluorescent dyes have a number of advantages as compared with inorganic phosphors: Firstly, they are distinguished by a high mass-specific absorption, which means that considerably less material is required for efficient radiation conversion than in the case of inorganic phosphors. Secondly, their emission spectrum can be easily adjusted with respect to wavelength and band width. In addition, they usually have a narrower width of spectrum as compared to that of inorganic phosphors. Thirdly, they do not require any materials comprising rare earths, which have to be mined and provided in a costly and inconvenient manner and are available only to a limited degree. Fourthly, they are soluble in the polymer matrix in which they are embedded, and are thus do not aggregate. Furthermore, they often are easily processable via solution casting or extrusion.

Backlights based on blue or white LEDs in combination with color converters are often used in conventional liquid crystal displays (LCD). The light source emits at the same time red, green and blue (RGB) light. A wide range of colors can be obtained by mixing different intensities of the primary colors red, green and blue. When the light from a prior art white LED passes through the color filters, the reds and greens often appear unsaturated. The same applies for blue LEDs in combination with a prior art color converter. The known displays, however, often suffer from a narrow color gamut. The color gamut of the display is typically evaluated by comparing the area the triangle connecting the chromaticity points of the RGB primaries in the CIE 1931 or CIE 1976 u'v' chromaticity diagramm to that of a RGB standard such as rec 709 (for highdefinition TV), DPI-P3 (for digital movie projection and 4K Ultra HD TV) or rec 2020 (for ultra-high definition TV). To create a large gamut or saturated colors, the backlight should provide narrow emission bands in the primary wavelengths. Most current wide color gamut solutions are based on adjustment of backlight structure, such as quantum dot enhancement film (QDEF) which is used as a color conversion film. Principially, organic fluorescent dyes with narrow emission bands in the primary wavelengths can play the same role as quantum dots, but they are more cost competitive and environment friendly.

Currently, boron-dipyrromethene (BODIPY) compounds have received great attention as organic fluorescent dyes in optical applications due to their high extinction coefficient, high fluorescence quantum yield and narrow emission bandwidth. However, it is known that nitro-substituted BODIPYs are characterized by low fluorescence quantum yield or even show no fluorescence and thus they are not suitable for use in color converters for LCD backlights and lighting devices. It is also known that the absorption and emission spectra of BODIPYs can be tuned by altering the substitution pattern on the core carbon skeleton. For example, extension of the conjugation with aromatic systems or alkenes shifts the absorbance and fluorescence spectra to the red part of the visible spectrum.

WO 2017/155297, US 2016/0223162, US 2017/267921, US 2018/0134953, US 2018/0274753 and US 2019/093008 describe a color converter comprising a BODIPY dye, which may be inter alia a cyano-substituted BODIPY dye, in a resin matrix, a backlight unit comprising the same and its use in a display device.

US 2016/230960 describes a color conversion layer comprising a BODIPY compound in a resin matrix. The resin matrix material is preferably a thermosetting polymer or a thermoset polymer. The color conversion layer may have a substrate such as PET provided on one surface.

US 2017/0247610 proposes a color conversion film including a resin matrix and fluorescent substances. A high color gamut may be obtained by using a green emitting BODIPY compound having a maximum light emission wavelength in the range from 510 to 560 nm with a FWHM of 50 nm or less and a red emitting BODIPY compound having a maximum light emission wavelength in the range from 600 to 660 nm with a FWHM of 90 nm or less. Suitable BODIPY compounds are inter alia those, which carry cyano at the core carbon skeleton. The resin matrix preferably is a thermosetting polymer or a thermal curing polymer, especially a poly(meth)acryl-based, a polycarbonate-based, a polystyrene-based, a polyarylene-based, a polyurethane based, a styrene-acrylonitrile-based, a polyvinylidene fluoride-based, a modified polyvinylidene fluoride based resin matrix material. A polyethylene terephthalate film may be used as support for the color conversion film. The color conversion film may be prepared by coating a resin solution in which the BODIPY compounds are dissolved on the substrate and drying or by extruding the BODIPY compounds with a resin such as a polycarbonate-based, a poly(meth)acryl-based or a styrene-acrylonitrile-based.

US 2018/0208838, and US 2018/0134952 and US 2018/0134953 describe a color conversion composition comprising red and green emitting BODIPY compounds and a binder resin. The BODIPY compound may be inter alia a cyano substituted one. The binder resin is preferably a thermoplastice resin such as an epoxy resin, a silicone resin, an acrylic resin or a mixture thereof. The color conversion films produced from the color conversion composition have good emission properties but low photostability in the acrylate or silicone matrix.

US 2019/0062348 relates to red fluorescent BODIPY compounds which may carry cyano groups at the 2-, 6-positions of the carbon core skeleton and their use in a color conversion film. The color conversion film comprises these compounds dispersed into a resin matrix. The resin matrix material is preferably a thermoplastic polymer or a thermocurable polymer, specifically, a poly(meth)acryl-based, a polycarbonate (PC)-based, a polystyrene (PS)-based, a polyarylene (PAR)-based, a polyurethane (TPU)-based, a styrene-acrylonitrile (SAN)-based, a polyvinylidene fluoride (PVDF)-based, a modified polyvinylidene fluoride (modified-PVDF)-based.

WO 2018/068299 describes a light emitting device comprising a blue backlight unit and a color conversion array comprising a green color conversion layer and a red color conversion layer, comprising surface-modified particles that emit green or red light respectively, the surface-modified particles comprising sol-gel nanoparticles and a plurality of lumiphores such as BODIPY dyes attached to the surface of the sol-gel nanoparticles

None of these documents concretely describes the use of a BODIPY compound in a polyethylene terephthalate matrix material.

Unpublished EP 18179281.3 describes a color converter comprising at least one green fluorescent cyano-substituted BODIPY dye and a backlight unit for a liquid crystal display comprising the same.

The color converters are usually exposed to blue LED light for long periods. As such it is important to maintain the stability of the organic fluorescent dye for a long time. US 9,897,285 describes a color converter with prolonged lifetime comprising an organic fluorescent compound and a polymeric carrier material having a low oxygen diffusion coefficient at 25°C. It is said that polyethylene terephthalate (PET) is particularly suitable as polymeric carrier material.

The color converters of prior art often suffer from insufficient photostability and/or unsatisfactory color performance, especially they do not provide high quality color via combination of high purity red, green and blue colors. In addition, the fluorescent dye(s) of prior art often fade or bleed out the color converter.

Accordingly, it was an object of the present invention to provide stable organic green fluorescent dyes with emission spectra with narrow full width at half maximum (FWHM) and preferably their central wavelength of emission should be close to the primary green wavelength of the standard DCI-P3 or rec 2020 (spectral locus of the pure primary color green at ca 530 nm). It was also an object of the present invention to provide stable organic red fluorescent dyes with emission spectra with narrow FWHM and preferably their central wavelength of emission should be close to the primary red wavelength of the standard DCI-P3 or rec 2020 (spectral locus of the pure primary color red at ca 630-640 nm). It was also an object to provide a color converter with longterm durability and preferably high color purity emission according to DCI-P3 or rec 2020 (emission wavelengths close to the spectral locus of the pure primary colors red and green) for use in a liquid crystal display or LED lighting. From an economic point of view, it was an object to prepare the color converter by extrusion. It was also an object to provide a liquid crystal display with wide color gamut and high photostability.

### SUMMARY OF THE INVENTION

It has been found surprisingly that the introduction of at least two electron-withdrawing groups at the core carbon skeleton of BODIPY compounds significantly increases their thermal stability which enables extrusion in polyethylene terephthalate (PET). Further, it has been found that the incorporation of these BODIPYs in a polyethylene terephthalate matrix material allows to provide color converters with excellent photostability and thus improved lifetime when illuminated with blue light. Advantageously, the BODIPY compounds according to the present invention and used according to the present invention have sharp emission spectra with narrow bandwiths and their central wavelength of emission is very close to or even fits the DPI-P3 or rec 2020 wavelength of the primary color in question. The BODIPYs according to the present invention also have high fluorescence quantum yields.

Thus, the present invention relates to a color converter comprising
(a) a polyethylene terephthalate matrix material; and
(b) at least one organic fluorescent dye selected from a compound of formulae (I.a), (I.b), (I.c) or mixtures thereof 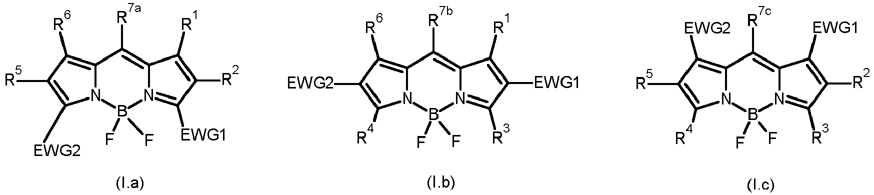
wherein
- EWG1 and EWG2,: are independently selected from CN, CH(O), C(O)R¹³, OC(O)R¹³, COOR¹⁴, CH(COOR¹⁴)₂, SO₂R¹⁴, C(O)NR¹⁵R¹⁶, SO₂NR¹⁵R¹⁶ or C₁-C₂₀-fluoroalkyl;
- R¹, R², R³, R⁴, R⁵, R⁶,: if present, in formulae (I.a), (I.b) and (I.c) are independently selected from hydrogen, fluorine, COOR¹⁴, CH(COOR¹⁴)₂, C₁-C₂₀-alkyl, C₂-C₂₀-alkenyl, C₂-C₂₀-alkynyl, C₃-C₂₀-cycloalkyl, C₄-C₂₀-cycloalkenyl, C₆-C₁₄-aryl, heterocyclyl or hetaryl;

wherein the C₁-C₂₀-alkyl, the C₂-C₂₀-alkenyl and the C₂-C₂₀-alkynyl are unsubstituted or substituted with one or more substituents R⁸,
wherein the C₃-C₂₀-cycloalkyl and the C₄-C₂₀-cycloalkenyl are unsubstituted or substituted with one or more substituents R⁹,
wherein the C₆-C₁₄-aryl is unsubstituted or is substituted with one or more substituents R¹⁰,
wherein the heterocyclyl and the hetaryl are unsubstituted or substituted by one or more substituents R¹⁰;
   - R7a, R^{7b} and R^{7c}: are hydrogen, fluorine, cyano, C₁-C₂₀-alkyl, C₂-C₂₀-alkenyl, C₂-C₂₀-alkynyl, C₃-C₂₀-cycloalkyl, C₄-C₂₀-cycloalkenyl, C₆-C₁₄-aryl or hetaryl;
wherein the C₁-C₂₀-alkyl, the C₂-C₂₀-alkenyl and the C₂-C₂₀-alkynyl are unsubstituted or substituted with one or more substituents R⁸,
wherein the C₃-C₂₀-cycloalkyl and the C₄-C₂₀-cycloalkenyl are unsubstituted or substituted with one or more substituents R⁹,
wherein the C₆-C₁₄-aryl is unsubstituted or substituted with one or more substituents R¹¹;
   - each R⁸: is independently selected from fluorine,C₃-C₂₀-cycloalkyl, C₄-C₂₀-cycloalkenyl, C₆-C₁₄-aryl, C₆-C₁₄-aryloxy or hetaryl;
wherein the C₃-C₂₀-cycloalkyl and the C₄-C₂₀-cycloalkenyl are unsubstituted or substituted with one or more substituents R⁹,
wherein the C₆-C₁₄-aryl and the C₆-C₁₄-aryloxy are unsubstituted or substituted with one or more substituents R¹⁰;

- each R⁹: is independently selected from cyano, fluorine, C₁-C₁₀-alkyl, C₁-C₁₀-fluoroalkyl, C₁-C₁₀-alkoxy, C₁-C₁₀-fluoroalkoxy or tri-(C₁-C₁₀-alkyl)silyl;
- each R¹⁰: is independently selected from cyano, fluorine, C₁-C₁₀-alkyl, C₁-C₁₀-fluoroalkyl, C₁-C₁₀-alkoxy, C₁-C₁₀-fluoroalkoxy, tri-(C₁-C₁₀-alkyl)silyl, hetaryl, phenyl, or phenoxy, wherein the aromatic ring of the two last-mentioned radicals may be substituted by one or more substituents R¹²;
- each R¹¹: is independently selected from EWG1, fluorine, chlorine, bromine, C₁-C₁₀-alkyl, C₁-C₁₀-alkoxy, C₁-C₁₀-fluoroalkoxy, tri-(C₁-C₁₀-alkyl)silyl, N(C₁-C₂₀-alkyl)₂, N(C₆-C₁₄-aryl)₂, hetaryl, biphenylyl, terphenylyl, spirofluorenyl, C₆-C₁₄-aryl, C₆-C₁₄-aryl-Ci-Cio-alkylene, C₆-C₁₄-aryl-C₁-C₁₀-alkylene-O-, where the last six radicals mentioned are unsubstituted in the aryl moiety or substituted by one or more substituents R¹²;
- each R¹²: is independently selected from EWG1, C₁-C₁₀-alkyl, C₁-C₁₀-alkoxy, C₁-C₁₀-fluoroalkoxy, tri-(C₁-C₁₀-alkyl)silyl or C₃-C₂₀-cycloalkyl;
- R¹³: is selected from C₁-C₁₀-alkyl, C₁-C₁₀-fluoroalkyl, C₃-C₂₀-cycloalkyl, C₃-C₂₀-cycloalkyl-Ci-Cio-alkylene, C₆-C₁₄-aryl or C₆-C₁₄-aryl-C₁-C₁₀-alkylene, wherein the C₆-C₁₄-aryl and the aryl moiety of C₆-C₁₄-aryl-C₁-C₁₀-alkylene is unsubstituted or substituted by one or more substituents R¹⁰;
- R¹⁴: is selected from hydrogen, C₁-C₁₀-alkyl, C₁-C₁₀-fluoroalkyl, C₃-C₂₀-cycloalkyl, C₃-C₂₀-cycloalkyl-C₁-C₁₀-alkylene, C₆-C₁₄-aryl or C₆-C₁₄-aryl-C₁-C₁₀-alkylene, wherein the C₆-C₁₄-aryl and the aryl moiety of C₆-C₁₄-aryl-C₁-C₁₀-alkylene is unsubstituted or substituted by one or more substituents R¹⁰;

- R¹⁵ and R¹⁶,: at each occurrence, are each independently hydrogen, C₁-C₁₀-alkyl, or C₁-C₁₀-fluoroalkyl.

The inventors found that the thermal stability of BODIPY dyes is remarkedly improved, when the core carbon skeleton is substituted with the electron-withdrawing groups EWG1 and EWG2. This allows the manufacture of a color converter comprising the BODIPY compound and a polyethylene terephthalate matrix material by extrusion. This also allows the manufacture of a color converter without additional added solvent. In addition, the inventors found that the incorporation of said BODIPY dyes into the polyethylene terephthalate matrix material increases the lifetime of the BODIPY dyes and thus the lifetime of color converters. Accordingly, the color converters of the invention are characterized by a high photostability, high fluorescence quantum yield as well as narrow emission bandwidth of the fluorescent BODIPY dye. Due to these properties, the color converter is especially favorable for use in a backlight or in a LED lighting.

Yet another aspect of the invention relates to a backlight unit, comprising a light source configured to emit light; and a color converter as defined above, where the color converter is in a remote arrangement from the LED.

Yet another aspect of the invention relates to a liquid crystal display module comprising
(i) a liquid crystal panel comprising a thin film transistor (TFT) array, a liquid crystal layer, and a color filter array comprising red, green and blue color filters;
(ii) at least one of light source; and
(iii) at least one color converter as defined above.

Yet another aspect of the present invention relates to a light emitting device comprising (i) at least one LED selected from a blue LED with a center wavelength of emission from 400 nm to 480 nm and a cool white LED having a correlated color temperature between 3 000 K and 20 000 K; and (ii) at least one color converter as defined above, wherein the at least one color converter is in a remote arrangement from the at least one LED.

Yet another aspect of the present invention relates to novel compounds of formula (I.b), wherein R¹ and R⁶ are each phenyl; R³ and R⁴ are each 4-methoxyphenyl or 4-(2,6-diisopropylphenoxy)phenyl; EGW1 and EWG2 are each cyano; and R^{7b} is phenyl which is unsubstituted or substituted with 1, 2, 3, 4 or 5 radicals R¹¹ selected from EWG1, fluorine, chlorine, C₁-C₁₀-alkyl, C₁-C₁₀-alkoxy, phenyl, biphenylyl, terphenylyl or phenyl-Ci-Cio-alkylene.

Yet another aspect of the present invention relates to novel compounds of formula (I.b), wherein R¹, R³, R⁴ and R⁶ are each methyl; EWG1 and EWG2 are each cyano; and R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

Yet another aspect of the present invention relates to novel compounds of formula (I.b), wherein R¹ and R⁶ are each methyl; R³ and R⁴ are each 4-cyanophenylvinyl; EWG1 and EWG2 are each cyano; and R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

### DESCRIPTION OF THE INVENTION

In the context of the present invention, the term "luminescent material(s)" is also referred to as "phosphor(s)" or "conversion material". The terms refer to a material which is capable of absorbing light of a particular wavelength or wavelength range and converting it by re-emission at a different wavelength or wavelength range (longer wavelengths).

In the context of the present invention, the term "color converter", which is also referred to simply as converter, is understood to mean all physical devices capable of absorbing light of particular wavelengths and converting it to light of a second wavelength. The color converter consists of one or more layers, at least one of which comprises the at least one organic fluorescent dye according to the present invention in a polyethylene terephthalate matrix material. Each layer comprising the organic fluorescent dye according to the present invention has a flat structure with an essentially two-dimensional extension. The color converter may include further layers such as a substrate layer and/or barrier layer(s).

In the context of the present invention, the term "polyethylene terephthalate matrix material" means that the at least one organic fluorescent dye according to the invention is dispersed or molecularly dissolved in polyethylene terephthalate.

According to the color of light (wavelength of light), the organic fluorescent dye can be classified as green emitting dye, red emitting dye etc.

In the context of the present invention, the term "blue light" is light having a wavelength in the range from 400 to less than 500 nm, preferably in the range of 420 to 480 nm.

In the context of the present invention, the term "green light" is light having a wavelength in the range from 500 to 560 nm.

In the context of the present invention, the term "yellow light" is light having a wavelength in the range from more than 560 to less than 595 nm.

In the context of the present invention, the term "red light" refers to light having a wavelength in the range from 595 to 780 nm, preferably from 610 to 660 nm.

In the context of the present invention, the term "center wavelength" of a given spectral distribution F(λ) is defined as the following average: λ_{c} = ∫λ•F(λ) dλ / ∫F(λ) dλ.

In the context of the present invention, the term "full width at half maximum (FWHM)" means the width of a line shape at half of its maximum amplitude.

In the context of the present invention, the term "fluorescence quantum yield (QY)" is defined as ratio of the number of photons emitted to the number of photons absorbed.

The term "LED" as used herein, refers to an inorganic light-emitting diode. In the context of the present invention, a "blue LED" is understood to mean an LED which emits light in the blue range of the electromagnetic spectrum with a center wavelength of emission in the range of 400 to 480 nm, preferably 420 to 480 nm, more preferably 440 to 470 nm, most preferably at 440 to 460 nm. Suitable semiconductor materials are silicon carbide, zinc selenide and nitrides such as aluminum nitride (AIN), gallium nitride (GaN), indium nitride (InN) and indium gallium nitride (InGaN). LEDs typically have a narrow wavelength distribution that is tightly centered about their peak wavelength. Standard InGaN-based blue LEDs are fabricated on a sapphire substrate and peak emission wavelength is usually centered at 445 to 455 nm.

In the context of the present invention, a "micro-LED" and a "mini-LED" is understood to mean an LED that primarily emits blue light. It is formed of a semiconductor material such as gallium nitride (GaN) or zinc selenide (ZnSe). The chip size of the mini LED is usually between 100 and 200 µm. The micro-LED (µ-LED) usually has a maximum width of 1 to 100 µm.

In the context of the present invention, a "white LED" (white light-generating or white light-emitting LED) is understood to mean an LED that emits light which is perceived as white by a human eye. Examples are multi-LEDs (also called RGB LED system) consisting of a red, a green and a blue LED whose light emissions are mixed to form white light. A further representative example includes a blue LED whose light passes through a color converter comprising a phosphor material. Preferred are blue LEDs coated with an inorganic phosphor material, especially a yellow phosphor material such as doped yttrium aluminium garnet.

In the context of the present invention, the term "white light" relates to light having a correlated color temperature (CCT) between 2 000 to 20 000 K, especially 2 500 to 20 000 K. A commercially available white LED often has a correlated color temperature of 3 000 K or above, for example in the range of 3 000 to 20 000 K or 4°000 to 20°000 K.

In the context of the present invention, an electromagnetic radiation comprising the visible spectral range from 420 to 780 nm is also designated as visible light.

In the context of the present invention, the term "color gamut" defines the range of colors that a display can produce. A common method to express the color gamut of displays is the xy chromaticity diagram of the XYZ color system established by the International Commission on Illumination (CIE). The color gamut is defined by the area of the triangle on the xy chromaticity diagram. Additionally or alternatively, the u'v' diagram established by the International Commission on Illumination is used to evaluate the color gamut.

In the context of the present invention, the term "RGB color space" is defined by the chroamaticities of the three primary colors red, green and blue, where red, green and blue light are added together to produce a color.

As used in this specification and the claims, the singular form "a", "an" and "the" includes plural references unless the content clearly dictates otherwise.

Likewise, the terms "a first", "a second" do not preclude a plurality.

The term "at least" is meant to define one or more than one, for example one, two, three or four, preferably one, two or three. Likewise preferably, the term "at least" defines a plurality.

The term "optionally substituted" means, that the radical to which it refers is either unsubstituted or substituted.

The term "essentially" in the context of the present invention encompasses the words "completely", "wholly" and "all". The word encompasses a proportion of 90% or more, such as 95% or more, especially 99% or 100%.

The definitions of the variables specified in the above formulae use collective terms which are generally representative of the respective substituents. The definition Cₙ-Cₘ gives the number of carbon atoms possible in each case in the respective substituent or substituent moiety.

The term "BODIPY" refers to a compound having a boron-dipyrromethene core (also referred to as 4-bora-3a,4a-diaza-s-indacene core). The numbering of the BODIPY core as used herein is depicted below. The 8-position is also referred to as meso position.

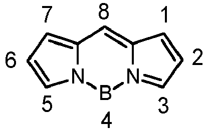

The organic moieties mentioned in the above definitions of the variables are - like the term halogen - collective terms for individual listings of the individual group members. The prefix Cₙ-Cₘ indicates in each case the possible number of carbon atoms in the group.

The term "halogen" denotes in each case fluorine, bromine, chlorine or iodine, particularly chlorine, bromide or iodine.

The term "alkyl" as used herein (and in the alkyl moieties of other groups comprising an alkyl group, e.g. alkoxy, alkylamino, alkylcarbonyl, alkoxycarbonyl) denotes in each case a straight-chain or branched alkyl group having usually from 1 to 20 carbon atoms, generally from 1 to 10 carbon atoms, frequently from 1 to 6 carbon atoms and preferably 1 to 4 carbon atoms. Examples of C₁-C₄-alkyl are methyl, ethyl, n-propyl, iso-propyl, n-butyl, 2-butyl (= sec-butyl), isobutyl and tert-butyl. Examples of C₁-C₆-alkyl are, apart those mentioned for C₁-C₄-alkyl, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl. Examples for C₁-C₁₀-alkyl, apart those mentioned for C₁-C₆-alkyl, include, but are not limited to, n-heptyl, 1-methylhexyl, 2-methylhexyl, 3-methylhexyl, 4-methylhexyl, 5-methylhexyl, 1-ethylpentyl, 2-ethylpentyl, 3-ethylpentyl, n-octyl, 1-methyloctyl, 2-methylheptyl, 1-ethylhexyl, 2-ethylhexyl, 1,2-dimethylhexyl, 1-propylpentyl, 2-propylpentyl, nonyl, decyl, 2-propylheptyl and 3-propylheptyl.

The term "alkylene" (or alkanediyl) as used herein in each case denotes an alkyl radical as defined above, wherein one hydrogen atom at any position of the carbon backbone is replaced by one further binding site, thus forming a bivalent moiety. C₁-C₁₀-Alkylene or C₁-C₁₀-alkanediyl is a linear or branched divalent alkyl radical having 1 to 10 carbon atoms.Representative examples include, but are not limited to, -CH₂-, - CH₂CH₂-, -CH(CH₃)-, -CH₂CH₂CH₂-, -CH(CH₃)CH₂-, -CH₂CH(CH₃)-, -C(CH₃)₂-, - CH₂CH₂CH₂CH₂-, -CH(CH₃)CH₂CH₂-, -CH₂CH₂CH(CH₃)-, -C(CH₃)₂CH₂-, and - CH₂C(CH₃)₂-.

The term "fluoroalkyl" refers to saturated straight-chain or branched hydrocarbon radicals having 2 to 20 ("C₂-C₂₀-fluoroalkyl) carbon atoms, wherein at least one, e.g. 1, 2, 3, 4 or all of the hydrogen atoms are replaced by fluorine atoms. Preferred fluoroalkyl moieties are selected from C₁-C₄-fluoroalkyl, more preferably from C₁-C₂-fluoroalkyl. Representative examples for C₁-C₂-fluoroalkyl include, but are not limited to, fluoromethyl, difluoromethyl, trifluoromethyl, 1-fluoroethyl, 2-fluoroethyl, 2,2-difluoroethyl, 2,2,2-trifluoroethyl and pentafluoroethyl.

The term "alkoxy" as used herein refers in each case to a straight-chain or branched alkyl group which is bound to the remainder of the molecule through an oxygen atom, that is, an "alkoxy" group may be represented as -O-alkyl where alkyl is as defined above. Representative examples for C₁-C₁₀-alkoxy include, but are not limited to, methoxy, ethoxy, n-propoxy, 1-methylethoxy (isopropoxy), butoxy, 1-methylpropoxy (sec-butoxy), 2-methylpropoxy (isobutoxy), 1,1-dimethylethoxy (tertbutoxy), pentyloxy, hexyloxy, heptyloxy, octyloxy, nonyloxy and decyloxy and the positional isomers of the last 6 metnioned radicals.

The term "fluoroalkoxy" as used herein refers in each case to a straight-chain or branched alkoxy group, as defined above, having from 1 to 10 carbon atoms ("C₁-C₁₀-fluoroalkoxy"), frequently from 1 to 8 carbon atoms ("C₁-C₈-fluoroalkoxy"), preferably 1 to 6 carbon atoms ("C₁-C₆-fluoroalkoxy"), more preferably 1 to 4 carbon atoms ("C₁-C₄-fluoroalkoxy"), wherein the hydrogen atoms of this group are partially or totally replaced with fluorine atoms.

The term "alkenyl" as used herein refers to a straight or branched hydrocarbon chain containing from 2 to 20 carbons and containing at least one carbon-carbon double bond, e.g. one, two, three or four. Representative examples of alkenyl with 2 to 10 carbon atoms and one carbon-carbon double bond include, but are not limited to, ethenyl, 2-propenyl, 2-methyl-2-propenyl, 3-butenyl, 4-pentenyl, 5-hexenyl, 2-heptenyl, 2-methyl-1-heptenyl, and 3-decenyl. Representative examples of alkenyl with 4 to 10 carbon atoms and two carbon-carbon double bonds are buta-1,3-dienyl, 1-methyl-buta-1,3-dienyl, penta-1,3-dienyl, 4-methyl-penta-1,3-dienyl and the like. Representative examples of alkenyl with 6 to 10 carbon atoms and three carbon-carbon double bonds are hexa-1,3,5-trienyl, 1-methyl-hexa-1,3,5-trienyl, hepta-1,3,5-trienyl, 6-methyl-hepta-1,3,5-trienyl and the like.

The term "fluoroalkenyl" refers to unsaturated straight-chain or branched hydrocarbon radicals having 2 to 20 carbon atoms and at least one carbon-carbon double bond as defined above, wherein at least one, e.g. 1, 2, 3, 4 or all of the hydrogen atoms are replaced by fluorine atoms.

The term "alkynyl" as used herein, means a straight or branched chain hydrocarbon group containing from 2 to 20 carbon atoms and containing at least one carbon-carbon triple bond. Representative examples of alkynyl with 2 to 6 carbon atoms include, but are not limited to, ethynyl, 1-propynyl, 2-propynyl, 1-butynyl, 2-butynyl, 3-butynyl, 1-methyl-2-propynyl.

The term "fluoroalkynyl" refers to unsaturated straight-chain or branched hydrocarbon radicals having 2 to 20 carbon atoms and at least one carbon-carbon triple bond as defined above, wherein at least one, e.g. 1, 2, 3, 4 or all of the hydrogen atoms are replaced by fluorine atoms.

The term "cycloalkyl" as used herein denotes in each case a mono- or bi- or tri or tetracyclic saturated hydrocarbon radical having usually from 3 to 20 ("C₃-C₂₀-cycloalkyl") atoms, preferably 3 to 8 ("C₃-C₈-cycloalkyl") or 3 to 6 carbon atoms ("C₃-C₆-cycloalkyl"). Representative examples of monocyclic radicals having 3 to 6 carbon atoms include, but are not limited to, cyclopropyl, cyclobutyl, cyclopentyl and cyclohexyl. Representative examples of monocyclic radicals having 3 to 8 carbon atoms comprise cyclopropyl, cyclobutyl, cyclopentyl, cyclohexyl, cycloheptyl and cyclooctyl. Representative examples of bicyclic radicals having 7 to 12 carbon atoms include, but are not limited to, bicyclo[2.2.1]heptyl, bicyclo[3.1.1]heptyl, bicyclo[2.2.2]octyl, bicyclo[3.3.0]octyl, bicyclo[3.2.1]octyl, bicyclo[3.3.1]nonyl, bicyclo[4.2.1]nonyl, bicyclo[4.3.1]decyl, bicyclo[3.3.2]decyl, bicyclo[4.4.0]decyl, bicyclo[4.2.2]decyl, bicyclo[4.3.2] undecyl, bicyclo[3.3.3]undecyl, bicyclo[4.3.3]dodecyl,and perhydronaphthyl. Representative examples of tricyclic and tetracyclic rings having 10 to 20 carbon atoms include, but are not limited to, perhydroanthracyl, perhydrofluorenyl, perhydrochrysenyl, and adamantyl.

The term "cycloalkyl-alkyl" used herein denotes a cycloalkyl group, as defined above, which is bound to the remainder of the molecule via an alkylene group (or inversely expressed, it denotes an alkyl group, as described above, in which one hydrogen atom is replaced by a cycloalkyl group, as defined above). The term "C₃-C₂₀-cycloalkyl-Ci-Cio-alkylene" refers to a C₃-C₂₀-cycloalkyl group as defined above which is bound to the remainder of the molecule via a C₁-C₁₀-alkyl group, as defined above. Representative examples include, but are not limited to, cyclopropylmethyl, cyclopropylethyl, cyclopropylpropyl, cyclobutylmethyl, cyclobutylethyl, cyclobutylpropyl, cyclobutylbutyl, cyclopentylmethyl, cyclopentylethyl, cyclopentylpropyl, cylopentylbutyl, cylopentylpentyl, cyclopentylhexyl, cyclohexylmethyl, cyclohexylethyl, cyclohexylpropyl, cycloheptylmethyl, cycloheptylethyl, cycloheptylpropyl, cyclopropylpropyl, cyclobutylmethyl, cyclobutylethyl, cyclobutylpropyl, cyclopentylmethyl, cyclopentylethyl, cyclopentylpropyl, cyclohexylmethyl, cyclohexylethyl, cyclohexylpropyl, cyclohexylbutyl, cyclohexylpentyl, cyclohexylhexyl and the like.

The term "cycloalkenyl" as used herein denotes in each case a mono- or bi- or tri-or tetracyclic partially unsaturated, non-aromatic hydrocarbon radical having usually from 4 to 20 ("C₄-C₂₀-cycloalkenyl") carbon atoms, preferably 4 to 8 ("C₄-C₈-cycloalkenyl"). Representative examples for monocyclic radicals having 4 to 8 carbon atoms include, but are not limited to, cyclopropenyl, cycobutenyl, cyclopentenyl, cyclohexenyl, cycloheptenyl, cyclooctenyl, cyclopenta-1,3-dien-1-yl, cyclopenta-1,3-dien-2-yl, cyclopenta-1,3-dien-5-yl, cyclohex-1-en-1-yl, cyclohex-1-en-3-yl, cyclohex-1-en-4-yl, cyclohexa-1,3-dien-1-yl, cyclohexa-1,3-dien-2-yl, cyclohexa-1,3-dien-5-yl, cyclohexa-1,4-dien-1-yl, cyclohexa-1,4-dien-3-yl.

The term "aryl" as used herein refers to a monocyclic aromatic hydrocarbon radical (i.e. phenyl) or fused bi-, tri- or polycyclic aromatic hydrocarbon radical having 6 to 14 carbon atoms. Representative examples of bi- or tricyclic aromatic carbocycles include, but are not limited to, naphthyl, phenanthrenyl, anthracenyl, 9H-fluorenyl etc. The term "C₆-C₁₀-aryl" denotes phenyl and naphthyl.

The term "aryloxy" is aryl, as defined above, bound via an oxygen atom to the remainder of the molecule. The term "C₆-C₁₀-aryloxy" is phenoxy or naphthyloxy.

The term "arylalkyl" refers to aryl as defined above bound to the remainder of the molecule via an alkyl group as defined above. The aryl radical in turn may be unsubstituted or substituted. Representative examples of arylalkyl include, but are not limited to, phenyl-C₁-C₄-alkyl such as benzyl, 1-phenylethyl, 2-phenylethyl (phenethyl), 1-phenylpropyl, 2-phenylpropyl, 3-phenyl-1-propyl, 2-phenyl-2-propyl and napthyl-C₁-C₄-alkyl such as 1-naphthylmethyl, 1-naphthylethyl, 2-naphthylmethyl, 2-naphthylethyl.

The term "aryl-alkenyl" used herein denotes an alkenyl group, as described above, in which one hydrogen atom is replaced by an aryl group, as defined above. The aryl radical in turn may be unsubstituted or substituted. Preferred examples of arylalkenyl include, but are not limited to, phenyl-C₂-C₆-alkenyl such as phenylvinyl (styryl) or 2-phenyl-prop-1-enyl.

Heterocyclic rings or heterocyclyl or heteroaromatic rings or heteroaryl or hetaryl contain one or more heteroatoms as ring members, i.e. atoms different from carbon. In the terms of the present invention, these heteroatoms are N, O and S, where N and S can also be present as oxidized heteroatom groups, namely as NO, SO or SO₂. Thus, in the terms of the present invention, rings termed as heterocyclic rings or heterocyclyl or heteroaromatic rings or heteroaryl or hetaryl contain one or more heteroatoms and/or heteroatom groups selected from the group consisting of N, O, S, NO, SO and SO₂ as ring members, preferably from the group consisting of N, O and S.

The heterocyclic rings or heterocyclyl or heteroaromatic rings or heteroaryl or hetaryl may be attached to the remainder of the molecule via a carbon ring member or via a nitrogen ring member. As a matter of course, the ring contains at least one carbon ring atom. If the ring contains more than one O ring atom, these are not adjacent.

The term "heterocyclyl" (also referred to as heterocycloalkyl) refers to nonaromatic, partially unsaturated or fully saturated, monocyclic, bicyclic, or tricyclic heterocyclic ring having generally 3 to 20 ring members. Representative examples of monocyclic heterocycloalkyl groups include, but are not limited to, pyrrolidinyl, piperidinyl, imidazolidinyl, pyrazolidinyl, oxazolidinyl, morpholinyl, thiazolidinyl, isothiazolidinyl, isoxazolidinyl, piperazinyl, tetrahydrothiophenyl, dihydrothien-2-yl, tetrahydrofuranyl, dihydrofuran-2-yl, tetrahydropyranyl, 2-oxazolinyl, 3-oxazolinyl, 4-oxazolinyl and dioxanyl. The bicyclic heterocycle usually is a 8-, 9-or 10-membered ring comprising besides carbon ring members contains one to three nitrogen atoms and/or one oxygen or sulfur atom or one or two oxygen or sulfur atoms. Representative examples of bicyclic heterocycles include, but are not limited to, benzopyranyl, benzothiopyranyl, chromanyl, 2,3-dihydrobenzofuranyl.

The term "hetaryl" (also referred to as heteroaryl) as used herein comprises heteroaromatic, mono- or polycyclic groups. The heteroatoms are preferably selected from oxygen, nitrogen and sulfur. The hetaryl groups have preferably 5 to 18, e.g. 5, 6, 8, 9, 10, 11, 12, 13 or 14, ring atoms. The monocyclic heteroaryl is a five- or six-membered ring. The five-membered ring contains two double bonds. The five-membered ring may contain one heteroatom selected from O or S; or one, two, three, or four nitrogen atoms and optionally one oxygen or sulfur atom. The six-membered ring contains three double bonds and one, two, three or four nitrogen atoms. Representative examples of monocyclic heteroaryl include, but are not limited to, furanyl, imidazolyl, isoxazolyl, isothiazolyl, oxadiazolyl, 1,3-oxazolyl, pyridinyl, pyridazinyl, pyrimidinyl, pyrazinyl, pyrazolyl, pyrrolyl, tetrazolyl, thiadiazolyl, 1,3-thiazolyl, thienyl, triazolyl, and triazinyl. The bicyclic heteroaryl consists of a monocyclic heteroaryl fused to a phenyl, Representative examples of bicyclic heteroaryl groups include quinolinyl, isoquinolinyl, indolyl, isoindolyl, indolizinyl, benzofuranyl, isobenzofuranyl, benzothiophenyl, benzoxazolyl, benzisoxazolyl, benzthiazolyl, benzoxadiazolyl, benzothiadiazolyl, benzoxazinyl, benzopyrazolyl, benzimidazolyl, benzotriazolyl. Polycyclic hetaryl groups have 3 or 4 fused rings.

The term "electron-withdrawing group" ("EWG") refers to a functional group that draws electrons to itself more than a hydrogen atom would if it occupied the same position in a molecule.

The term "cyano" means CN.

When # or * appear in a formula showing a substructure of a compound of the present invention, it denotes the attachment bond in the remainder molecule.

### BRIEF DESCRIPTION OF THE FIGURES

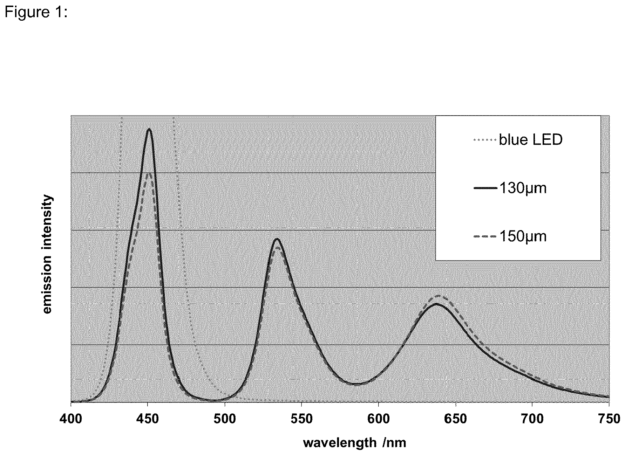

Fig. 1 shows the emission intensity vs wavelength of two color converters according the invention in a thickness of 130 µm and 150 µm, respectively, obtained by irradiation with a Fortimo blue LED measured in an integrating sphere.

### DETAILED DESCRIPTION OF THE INVENTION

A special embodiment of the invention relates to a color converter comprising
(a) a polyethylene terephthalate matrix material; and
(b) at least one organic fluorescent dye selected from a compound of formulae (I.a), (I.b), (I.c) or mixtures thereof 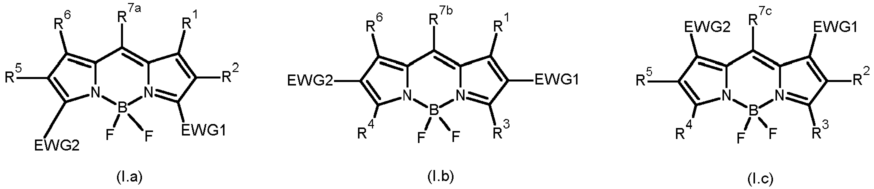
   wherein EWG1 and EWG2, R¹, R², R³, R⁴, R⁵, R⁶, R^{7a}, R^{7b}, R^{7c}, R⁸, R⁹, R¹², R¹³, R¹⁴, R¹⁵ and R¹⁶ are as defined above; and
      - each R¹⁰: is independently selected from cyano, fluorine, C₁-C₁₀-alkyl, C₁-C₁₀-fluoroalkyl, C₁-C₁₀-alkoxy, C₁-C₁₀-fluoroalkoxy, tri-(C₁-C₁₀-alkyl)silyl, phenyl, phenoxy or hetaryl;
      - each R¹¹: is independently selected from EWG1, fluorine, C₁-C₁₀-alkyl, C₁-C₁₀-fluoroalkyl, C₁-C₁₀-alkoxy, C₁-C₁₀-fluoroalkoxy, tri-(C₁-C₁₀-alkyl)silyl, N(C₁-C₂₀-alkyl)₂, N(C₆-C₁₄-aryl)₂, hetaryl, biphenyl, terphenyl, spirofluorenyl, C₆-C₁₄-aryl, C₆-C₁₄-aryl-C₁-C₁₀-alkylene, C₆-C₁₄-aryl-C₁-C₁₀-alkylene-O-, where the last six radicals mentioned are unsubstituted in the aryl moiety or sub-stituted by one or more substituents R¹².

A further special embodiment relates to a color converter, comprising
(a) a polyethylene terephthalate matrix material; and
(b) at least one organic fluorescent dye selected from a compound of formulae (I.a), (I.b), (I.c) or mixtures thereof 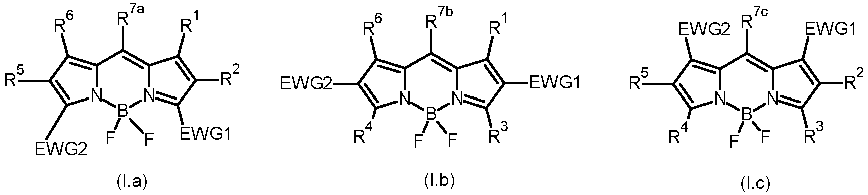
wherein
EWG1 and EWG2, R¹, R², R³, R⁴, R⁵, R⁶, R^{7a}, R^{7b}, R^{7c}, R⁸, R⁹, R¹², R¹³, R¹⁴, R¹⁵ and R¹⁶ are as defined above; and
- each R¹⁰: is independently selected from cyano, fluorine, C₁-C₁₀-alkyl, C₁-C₁₀-fluoroalkyl, C₁-C₁₀-alkoxy, C₁-C₁₀-fluoroalkoxy, tri-(C₁-C₁₀-alkyl)silyl, phenyl, phenoxy or hetaryl;
- each R¹¹: is independently selected from EWG1, fluorine, chlorine, bromine, C₁-C₁₀-alkyl, C₁-C₁₀-alkoxy, C₁-C₁₀-fluoroalkoxy, tri-(C₁-C₁₀-alkyl)silyl, N(C₁-C₂₀-alkyl)₂, N(C₆-C₁₄-aryl)₂, hetaryl, biphenylyl, terphenylyl, spirofluorenyl, C₆-C₁₄-aryl, C₆-C₁₄-aryl-C₁-C₁₀-alkylene, C₆-C₁₄-aryl-C₁-C₁₀-alkylene-O-, where the last six radicals mentioned are unsubstituted in the aryl moiety or sub-stituted by one or more substituents R¹².

According to the invention, the color converter comprises a polyethylene terephthalate matrix material. The term "polyethylene terephthalate matrix material" includes a homopolymer of polyethylene terephthalate or a copolymer thereof. The polyethylene terephthalate or a copolymer thereof can be a recycled or virgin polyethylene terephthalate or a copolymer thereof. The homopolymer of polyethylene terephthalate is usually obtained by the polycondensation of ethylene glycol with dimethyl terephthalate or terephthalic acid at elevated temperatures with the removal of methanol (or water). Copolymers are obtainable by partially substituting ethylene glycol by another diol, triol or higher functional-based polyols and/or by partially substituting terephthalic acid by another dicarboxylic acid. Representative examples of diols different from ethyleneglycol are 1,2-propanediol, 1,3-propanediol, 1,4-butandiol, neopentylenediol, 1,4-cyclohexanediol, 1,4-cyclohexanedimethanol and polyether diols such as diethylene glycol, and combinations thereof. A representative example of a higher functional based polyol is pentaerythritol. Representative examples of suitable dicarboxylic acids different from terephthalic acid are isopthalic acid, 1-naphthoic acid, 2-naphthoic acid, glutaric acid and combinations thereof. The same effect is achieved by substituting the dimethylester formed from terephthalic acid by another diester formed from dicarboxylic acid different from terephthalic acid. For example, a copolymer of polyethylene terephthalate known as PETG (glycol modified polyethylene terephthalate) comprises structural units derived from terephthalic acid and a mixture of predominately ethylene glycol and a lesser amount of 1,4-cyclohexane dimethanol. The copolymers suppress the crystallization of polyethylene terephthalate.

The term "polyethylene terephthalate matrix material" also includes high molecular weight polyethylene terephalate having chain extender units incorporated in the polymer backbone or polymer chain. Especially, chain extenders are used to connect terminal carboxy groups of two separate ester molecules. Representative examples of chain extenders include tetracarboxylic dianhydrides such as pyromellitic dianhydride, polyacyllactams, di- and polyamines and compounds with high epoxy functionality such as the Jonacryl^{®} brand chain extender commercially available from BASF SE, Germany.

Preferably, the polyethylene terephthalate matrix material comprises at least 90 wt.% of the homopolymer polyethylene terephthalate based on the total polymer content of the polyethylene terephthalate matrix material. In other words, at most 10% by wt. of the polyethylene terephthalate based on the total polymer content is a copolymer of polyethylene terephthalate. More preferably, the polyethylene terephthalate matrix material comprises at least 95 wt.% of the homopolymer of polyethylene terephthalate based on the total polymer content of the polyethylene terephthalate matrix material. Especially, the polyethylene terephthalate matrix material consists completely of the homopolymer of polyethylene terephthalate. According to a further embodiment, the polyethylene terephthalate polymer matrix material does not comprise any chain extenders in the polymer backbone.

In one embodiment of the invention, the polyethylene terephthalate has a semicrystalline structure and appears opaque. In another embodiment of the invention, the polyethylene terephthalate has an amorphous structure and appears transparent.

The remarks made below as to preferred embodiments of the variables (substituents) of the compounds of formulae (I.a), (I.b) and (I.c) are valid on their own as well as preferably in combination with each other.

The groups EWG1 and EWG2 in the compounds of formulae (I.a), (I.b) and (I.c) are electron-withdrawing groups which decrease the electron density of the BODIPY core carbon skeleton and thus increase the stability of the BODIPY compounds. Especially, they do not impair the color purity of the BODIPY compounds used according to the invention. Preferably EWG1 and EWG2 are independently selected at each occurrence from cyano (CN), C₁-C₁₀-fluoroalkyl, CH(O), C(O)R¹³, COOR¹⁴, CH(COOR¹⁴)₂, SO₂R¹⁴, C(O)NR¹⁵R¹⁶ or SO₂NR¹⁵R¹⁶, wherein R¹³, R¹⁴, R¹⁵ and R¹⁶ are as defined herein. In the context of EWG1 and EWG2, R¹³ is preferably C₁-C₆-alkyl, C₁-C₆-fluoroalkyl, C₃-C₈-cycloalkyl, C₃-C₈-cycloalkyl-C₁-C₄-alkylene, phenyl or phenyl-C₁-C₄-alkylene. In the context of EWG1 and EWG2, in COOR¹⁴ and CH(COOR¹⁴)₂, R¹⁴ is preferably C₁-C₆-alkyl, phenyl-C₁-C₄-alkylene, C₃-C₈-cycloalkyl, or C₃-C₈-cycloalkyl-C₁-C₄-alkylene; and in SO₂R¹⁴, R¹⁴ is preferably C₁-C₆-alkyl or phenyl which is unsubstituted or substituted by C₁-C₆-alkyl. In the context of EWG1 and EWG2, R¹⁵ and R¹⁶, are independently selected at each occurrence from C₁-C₆-alkyl.

More preferred compounds according to the invention are compounds of formulae (I.a), (I.b) and (I.c), wherein EWG1 and EWG2 are independently selected at each occurrence from CN, CF₃, CH(O), C(O)(C₁-C₄-alkyl), COO(C₁-C₄-alkyl) or CH(COO(C₁-C₄-alkyl))₂. Especially, EWG1 and EWG2 are independently selected at each occurrence, from CN, CF₃, CHO, C(O)CH₃, C(O)C₂H₅, C(O)C₃H₇, CH(COOCH₃)₂, CH(COOC₂H₅)₂, CH(COOC₃H₇)₂, COOCH₃, COOC₂H₅ or COOC₃H₇.

Furthermore, the preparation of the compounds of the formulae (I.a), (I.b) and (I.c), where EWG1 and EWG2 are identical, is generally simpler than the synthesis of the compounds of the formulae (I.a), (I.b) and (I.c), where EWG1 is different from EWG2. Thus, further preferred are compounds of the formulae (I.a), (I.b) and (I.c), where EWG1 and EWG2 have the same meaning. In particular, EWG1 and EWG2 are each cyano.

Preferred compounds according to the invention are compounds of formulae (I.a), (I.b) and (I.c), wherein R¹, R², R³, R⁴, R⁵ and R⁶, if present, independently of each other are selected from hydrogen, C₁-C₁₀-alkyl, C₂-C₁₀-alkenyl, C₃-C₂₀-cycloalkyl, C(O)O(C₁-C₆-alkyl), CH(COO(C₁-C₆-alkyl))₂, phenyl or naphthyl, wherein the C₁-C₁₀alkyl and the C₂-C₁₀-alkenyl are unsubstituted or substituted by one or two substituents R⁸ and wherein the phenyl and the naphthyl are unsubstituted, or are substituted with one, two, three, four or five substituents R¹⁰, wherein R⁸ and R¹⁰ are as defined herein. In particular, it is preferred that R¹ and R⁶ are different from hydrogen. Likewise it is preferred that R¹, R², R³, R⁴, R⁵ and R⁶, if present, are all different from hydrogen.

More preferably, R¹, R², R³, R⁴, R⁵ and R⁶, if present, in formulae (I.a), (I.b) and (I.c), independently of each other are selected from C₁-C₁₀-alkyl, C₂-C₁₀-alkenyl, C₃-C₂₀cycloalkyl, CH(COO(C₁-C₄-alkyl))₂ or phenyl, wherein the C₁-C₁₀-alkyl and the C₂-C₁₀alkenyl are unsubstituted or substituted by one or two substituents R⁸ and wherein the phenyl is unsubstituted or substituted with one, two, three, four or five substituents R¹⁰. Each R⁸ is preferably selected from phenyl and naphthyl, wherein the phenyl and the naphthyl are unsubstituted or substituted with one, two, three, four or five substituents R¹⁰. In one embodiment, R¹⁰ is independently selected from cyano, fluorine, C₁-C₁₀-alkyl, C₁-C₁₀-fluoroalkyl, C₁-C₁₀-alkoxy, C₁-C₁₀-fluoroalkoxy, tri-(C₁-C₁₀-alkyl)silyl, phenyl, phenoxy or hetaryl. Preferably, R¹⁰ is selected from CN, F, C₁-C₆-alkyl, C₁-C₆-fluoroalkyl, C₁-C₆-alkoxy, C₁-C₆-fluoroalkoxy, phenyl or phenoxy. In addition, R¹⁰ is selected from phenoxy which is substituted by one, two, three, four or five substituents R¹². More preferably, each R⁸ is selected from phenyl which is unsubstituted or substituted by one or two substituents R¹⁰. Each R¹⁰ is more preferably selected from CN, C₁-C₆-alkyl, C₁-C₆-fluoroalkyl, C₁-C₆-alkoxy, C₁-C₆-fluoroalkoxy, tri-(C₁-C₁₀-alkyl)silyl, phenyl, phenoxy, 5- or 6-membered monocyclic hetaryl having besides carbon atoms one or two heteroatoms selected from oxygen, sulfur or nitrogen atoms as ring members and phenoxy which is substituted by one, two or three subsituents R¹². Each R¹⁰ is in particular selected from CN, CF₃, OCF₃, C₁-C₄-alkyl, C₁-C₄-alkoxy, phenyl or phenoxy, wherein phenoxy may be substituted by one, two or three substituents R¹². In this context, R¹² is preferably C₁-C₄-alkyl, e.g. isopropyl or tert-butyl.

Even more preferably, R¹, R², R³, R⁴, R⁵ and R⁶, if present, independently of each other are selected from C₁-C₁₀-alkyl, especially C₁-C₄-alkyl, C₂-C₆-alkenyl, CH(COO(C₁-C₄-alkyl))₂, phenyl, phenyl-C₁-C₄-alkyl and phenyl-C₂-C₆-alkenyl, especially phenyl-CH=CH-, wherein the phenyl and the phenyl moiety of phenyl-C₁-C₄-alkyl and phenyl-C₂-C₆-alkenyl, especially phenyl-CH=CH- is unsubstituted or substituted by one, two, three, four or five radicals R¹⁰, wherein R¹⁰ is as defined above and especially has one of the meanings mentioned as preferred. Still even more preferably, in formulae (I.a), (I.b) and (I.c), R¹, R², R³, R⁴, R⁵ and R⁶, if present, are independently of each other selected from C₁-C₁₀-alkyl, phenyl or phenyl-C₂-C₆-alkenyl, where phenyl and the phenyl moiety in phenyl-C₂-C₆-alkenyl in the two last-mentioned radicals may be substituted by one, two or three substituents R¹⁰, wherein R¹⁰ is as defined above and especially has one of the meanings mentioned as preferred.

According to a preferred embodiment, all of R¹, R², R³, R⁴, R⁵ and R⁶, if present, in formulae (I.a), (I.b) and (I.c) are independently of each other selected from C₁-C₁₀-alkyl and especially from C₁-C₄-alkyl and more especially selected from the group consisting of methyl, ethyl, n-propyl, isopropyl, and tert-butyl. In particular, R¹, R², R³, R⁴, R⁵ and R⁶, if present, in formulae (I.a), (I.b) and (I.c) are independently of each other selected from methyl or ethyl. These compounds of formulae (I.a), (I.b) and (I.c) are green-emitting fluorescent dyes.

According to another preferred embodiment, all of R¹, R², R³, R⁴, R⁵ and R⁶, if present, in formulae (I.a), (I.b) and (I.c), are independently of each other selected from phenyl, which is unsubstituted or carries one, two, three, four or five substituents R¹⁰, wherein R¹⁰ is as defined above and especially has one of the meanings mentioned as preferrd. Especially, R¹, R², R³, R⁴, R⁵ and R⁶, if present, in formulae (I.a), (I.b) and (I.c), are independently of each other selected from phenyl, 4-methylphenyl, 4-ethylphenyl, 4-n-propylphenyl, 4-isopropylphenyl, 4-n-butylphenyl, 4-tert-butylphenyl, 4-methoxyphenyl, 4-ethoxyphenyl, 4-propylphenyl, 4-butylphenyl, 4-trifluoromethylphenyl, 4-fluorophenyl, 4-cyanophenyl, 4-trimethylsilyphenyl, 4-phenylphenyl, 2,4-dimethylphenyl, 3,4-dimethylphenyl, 2,4-dimethoxyphenyl, 3,4-dimethoxyphenyl, 4-(3-pyridyl)phenyl, 4-(2-thienyl)phenyl, 4-(2-furyl)phenyl, 4-oxazol-5-ylphenyl. These compounds of formulae (I.a), (I.b) and (I.c) are red-emitting fluorescent dyes.

According to another preferred embodiment, in formulae (I.b), R¹ and R⁶ are selected from C₁-C₁₀-alkyl, preferably C₁-C₄-alkyl. R³ and R⁴ are selected from phenyl-C₂-C₆-alkenyl, preferably phenyl-CH=CH-, where the phenyl moiety in the last mentioned radical is unsubstituted or substituted by one, two, three, four or five substituents R¹². These compounds are red-emitting dyes. Preferably, R³ and R⁴ are independently of each other selected 4-(2,6-diisopropylphenoxy)phenyl, 4-(4-tert-butylphenoxy)phenyl, 4-(2,4-di(tert-butyl)phenoxy)phenyl or 4-(2,6-di(tert-butyl)phenoxy)phenyl. Preferably, R³ and R⁴ have the same meaning and R¹ and R⁶ have the same meaning.

Preferably, R^{7a} in formula (I.a), R^{7b} in formula (I.b) and R^{7c} in formula (I.c) are hydrogen, CF₃, cyano, C₁-C₄-alkyl, pyridyl, dibenzofuranyl, C₆-C₁₄-aryl, wherein the C₆-C₁₄-aryl is unsubstituted or substituted with one, two, three, four or five substituents R¹¹, wherein R¹¹ is as defined above. More preferably, R^{7a} in formula (I.a), R^{7b} in formula (I.b) and R^{7c} in formula (I.c) are hydrogen, cyano, CF₃, C₁-C₄-alkyl, pyridyl, dibenzofuranyl or phenyl, wherein the phenyl is unsubstituted or substituted with one, two or three substituents R¹¹. Likewise more preferably, R^{7a} in formula (I.a), R^{7b} in formula (I.b) and R^{7c} in formula (I.c) are phenyl, which is substituted with four or five substituents R¹¹. Each R¹¹ is preferably selected from EWG1, C₁-C₄-alkyl, C₁-C₄-alkoxy, C₁-C₄-fluoroalkoxy, tri-(C₁-C₁₀-alkyl)silyl, N(C₁-C₁₀-alkyl)₂, N(C₆-C₁₀-aryl)₂, hetaryl, phenyl, biphenylyl, terphenylyl, spirofluorenyl, naphthyl, C₆-C₁₀-aryl-C₁-C₁₀-alkylene, C₆-C₁₀-aryl-C₁-C₁₀-alkylene-O-, where the last seven radicals mentioned are unsubstituted in the aryl moiety or substituted in the aryl moiety by one or more substituents R¹², wherein R¹² is as defined above. In the context of R¹¹, EWG1 is preferably C₁-C₄-fluoroalkyl, COR¹³, C(O)NR¹⁵R¹⁶ or SO₂NR¹⁵R¹⁶. In addition, each R¹¹ may also be selected from fluorine, chlorine, cyano, C₅-C₁₀-alkyl or C₅-C₁₀-alkoxy. In this context, each R¹² is preferably selected from CN, CF₃, C(O)(C₁-C₄-alkyl), C₁-C₄-alkyl, C₁-C₄-alkoxy, C₁-C₄-fluoroalkoxy or tri-(C₁-C₄-alkyl)silyl. More preferably, each R¹¹ is independently of each other selected from fluorine, chlorine, cyano, C₁-C₄-alkyl, C₁-C₄-fluoroalkyl, C₁-C₄-alkoxy, C₁-C₄-fluoroalkoxy, benzyloxy, COO(C₁-C₄-alkyl), pyridine, phenyl-C₁-C₁₀-alkylene, phenyl, biphenylyl, terphenylyl, 9,9-dimethylfluorenyl, wherein the aromatic moiety of the last five mentioned radicals is unsubstituted or substituted by one, two or three radicals R¹² selected from CN, C₁-C₄-alkyl, C(O)C₁-C₄-alkyl or COO(C₁-C₄-alkyl).

Especially, R^{7a} in formula (I.a), R^{7b} in formula (I.b) and R^{7c} in formula (I.c) are hydrogen, C₁-C₄-alkyl, especially C₁-C₂-alkyl, or phenyl which is unsubstituted or substituted with one, two, three, four or five substituents R¹¹ selected from fluorine, chlorine, cyano, C₁-C₄-alkyl, C₁-C₄-fluoroalkyl, C₁-C₄-alkoxy, C₁-C₄-fluoroalkoxy, benzyloxy, C(O)C₁-C₄-alkyl, COO(C₁-C₄-alkyl), pyridine, phenyl, biphenylyl, terphenylyl, or 9,9-dimethylfluorenyl, wherein the aromatic moiety of the last four mentioned radicals are unsubstituted or substituted by one, two or three radicals R¹² selected from CN, C₁-C₄-alkyl, C(O)C₁-C₄-alkyl or COO(C₁-C₄-alkyl). Especially, R¹¹ is selected from fluorine, chlorine or C₁-C₄-alkyl. R^{7b} may also be hydrogen.

Apart from that, the variable R⁹, irrespectively of its occurrence, in particular is cyano, fluorine, C₁-C₄-alkyl, C₁-C₄-fluoroalkyl, C₁-C₄-alkoxy or C₁-C₄-fluoroalkoxy.

In a particular embodiment, the compound of formula (I.a) is a green emitting compound
where
- R¹, R², R⁵ and R⁶,: are independently selected from C₁-C₄-alkyl or phenyl-C₁-C₄-alkyl, wherein the phenyl moiety in phenyl-C₁-C₄-alkyl is unsubstituted or substituted by 1, 2 or 3 radicals R¹⁰, wherein R¹⁰ is as defined above and especially has one of the meanings mentioned as preferred; preferably R¹, R², R⁵ and R⁶, are inde-pendently selected from C₁-C₄-alkyl
- EGW1 and EWG2: are identical and selected from cyano, CF₃, CH(O), C(O)(C₁-C₄-alkyl), C(O)O-C₁-C₄-alkyl or CH(COOC₁-C₄-alkyl)₂; preferably cyano; and
- R^{7a}: is hydrogen, cyano, CF₃, C₁-C₄-alkyl, or phenyl, wherein the phenyl is unsubstituted or substituted with one, two or three substituents R¹¹, wherein R¹¹ is as defined above and especially has one of the meanings mentioned as preferred. Likewise preferably, R^{7a} is 2,3,4,5,6-pentafluorophenyl or 2,3,4,5,6-pentachlorophenyl.

In a further particular embodiment, the compound of formula (I.a) is a red emitting compound,
where
- R¹, R², R⁵ and R⁶,: are independently selected from phenyl, which is unsubstituted or substituted with one, two or three substituents R¹⁰, wherein R¹⁰ is as defined above and especially has one of the meanings mentioned as preferred;
- EGW1 and EWG2: are identical and are selected from cyano, CF₃, CH(O), C(O)(C₁-C₄-alkyl), C(O)O-C₁-C₄-alkyl and CH(COOC₁-C₄-alkyl)₂; preferably cyano; and
- R^{7a}: is hydrogen, cyano, CF₃, C₁-C₄-alkyl, or phenyl, wherein the phenyl is unsubstituted or substituted with one, two or three substituents R¹¹, wherein R¹¹ is as defined above and especially has one of the meanings mentioned as preferred. Likewise preferably, R^{7a} is 2,3,4,5,6-pentafluorophenyl or 2,3,4,5,6pentachlorophenyl.

In a further particular embodiment, the compound of formula (I.b) is a green emitting compound
where
- R¹, R³, R⁴ and R⁶,: are independently selected from C₁-C₄-alkyl or phenyl-C₁-C₄-alkyl, wherein the phenyl moiety in phenyl-C₁-C₄-alkyl is unsubstituted or substituted by 1, 2 or 3 radicals R¹⁰, wherein R¹⁰ is as defined above and especially has one of the meanings mentioned as preferred; preferably R¹, R³, R⁴ and R⁶, are independently selected from C₁-C₄-alkyl;
- EGW1 and EWG2: are identical and are selected from cyano, CF₃, CH(O), C(O)(C₁-C₄-alkyl), C(O)O-C₁-C₄-alkyl and CH(COOC₁-C₄-alkyl)₂; preferably cyano; and
- R^{7b}: is hydrogen, cyano, CF₃, C₁-C₄-alkyl, or phenyl, wherein the phenyl is unsubstituted or substituted with one, two or three substituents R¹¹, wherein R¹¹ is as defined above and especially has one of the meanings mentioned as preferred. Especially, each R¹¹ is independently selected from EWG1, fluorine, chlorine, C₁-C₁₀-alkyl, C₁-C₁₀-alkoxy, phenyl, biphenylyl, terphenylyl or phenyl-C₁C₁₀-alkylene.

More especially, each R¹¹ is independently selected from fluorine, chlorine, cyano, C₁-C₄-alkyl, C₁-C₄-fluoroalkyl, C₁-C₄-alkoxy, C₁-C₄-fluoroalkoxy, phenyl-C₁-C₄-alkylene, phenyl, biphenylyl or terphenylyl. Likewise preferably, R^{7b} is 2,3,4,5,6-pentafluorophenyl or 2,3,4,5,6-pentachlorophenyl.

In a further particular embodiment, the compound of formula (I.b) is a red emitting compound,
where
- R¹, R³, R⁴ and R⁶,: are independently selected from phenyl, which is unsubstituted or substituted with one, two or three substituents R¹⁰, wherein R¹⁰ is as defined above and especially has one of the meanings mentioned as preferred;
- EGW1 and EWG2: are identical and are selected from cyano, CF₃, CH(O), C(O)(C₁-C₄-alkyl), C(O)O-C₁-C₄-alkyl and CH(COOC₁-C₄-alkyl)₂ and preferably cyano; and
- R^{7b}: is hydrogen, cyano, CF₃, C₁-C₄-alkyl, or phenyl, wherein the phenyl is unsubstituted or substituted with one, two or three substituents R¹¹, wherein R¹¹ is as defined above and especially has one of the meanings mentioned as preferred. Especially, each R¹¹ is independently selected from EWG1, fluorine, chlorine, C₁-C₁₀-alkyl, C₁-C₁₀-alkoxy, phenyl, biphenylyl, terphenylyl or phenyl-C₁C₁₀-alkylene.

More especially, each R¹¹ is independently selected from fluorine, chlorine, cyano, C₁-C₄-alkyl, C₁-C₄-fluoroalkyl, C₁-C₄-alkoxy, C₁-C₄-fluoroalkoxy, phenyl-C₁-C₄-alkylene, phenyl, biphenylyl or terphenylyl. More especially, each R¹¹ is independently selected from fluorine, chlorine, cyano, C₁-C₄-alkyl, C₁-C₄-fluoroalkyl, C₁-C₄-alkoxy, C₁-C₄-fluoroalkoxy, phenyl-C₁-C₄-alkylene, phenyl, biphenylyl or terphenylyl. Likewise preferably, R^{7b} is 2,3,4,5,6-pentafluorophenyl or 2,3,4,5,6-pentachlorophenyl.

In a further particular embodiment, the compound of formula (I.b) is a red emitting compound,
where
- R¹ and R⁶: are independently selected from C₁-C₄-alkyl;
- R³ and R⁴: are independently selected from phenyl-C₂-C₆-alkenyl, wherein the phenyl moiety of phenyl-C₂-C₆-alkenyl is unsubstituted or substituted by one, two or three substituents R¹⁰, wherein R¹⁰ is as defined above and especially has one of the meanings mentioned as preferred;
- EGW1 and EWG2: are identical and are selected from cyano, CF₃, CH(O), C(O)(C₁-C₄-alkyl), C(O)O-C₁-C₄-alkyl and CH(COOC₁-C₄-alkyl)₂ and preferably cyano; and
- R^{7b}: is hydrogen, cyano, CF₃, C₁-C₄-alkyl, or phenyl, wherein the phenyl is unsubstituted or substituted with one, two or three substituents R¹¹, wherein R¹¹ is as defined above and especially has one of the meanings mentioned as preferred. Especially, each R¹¹ is independently selected from EWG1, fluorine, chlorine, C₁-C₁₀-alkyl, C₁-C₁₀-alkoxy, phenyl, biphenylyl, terphenylyl or phenyl-C₁C₁₀-alkylene.

More especially, each R¹¹ is independently selected from fluorine, chlorine, cyano, C₁-C₄-alkyl, C₁-C₄-fluoroalkyl, C₁-C₄-alkoxy, C₁-C₄-fluoroalkoxy, phenyl-C₁-C₄-alkylene, phenyl, biphenylyl or terphenylyl. More especially, each R¹¹ is independently selected from fluorine, chlorine, cyano, C₁-C₄-alkyl, C₁-C₄-fluoroalkyl, C₁-C₄-alkoxy, C₁-C₄-fluoroalkoxy, phenyl-C₁-C₄-alkylene, phenyl, biphenylyl or terphenylyl. Likewise preferably, R^{7b} is 2,3,4,5,6-pentafluorophenyl or 2,3,4,5,6-pentachlorophenyl.

In a further particular embodiment, the compound of formula (I.c) is a green emitting compound
where
- R², R³, R⁴ and R⁵,: are independently selected from C₁-C₄-alkyl or phenyl-C₁-C₄-alkyl, wherein the phenyl moiety in phenyl-C₁-C₄-alkyl is unsubstituted or substituted by 1, 2 or 3 radicals R¹⁰, wherein R¹⁰ is as defined above and especially has one of the meanings mentioned as preferred; preferably, R², R³, R⁴ and R⁵, are independently selected from C₁-C₄-alkyl;
- EGW1 and EWG2: are identical and are selected from cyano, CF₃, CH(O), C(O)(C₁-C₄-alkyl), C(O)O-C₁-C₄-alkyl and CH(COOC₁-C₄-alkyl)₂, preferably cyano; and
- R^{7c}: is hydrogen, cyano, CF₃, C₁-C₄-alkyl, or phenyl, wherein the phenyl is unsubstituted or substituted with one, two or three substituents R¹¹, wherein R¹¹ is as defined above and especially has one of the meanings mentioned as preferred.

Likewise preferably, R^{7c} is 2,3,4,5,6-pentafluorophenyl or 2,3,4,5,6-pentachlorophenyl.

In a further particular embodiment, the compound of formula (I.c) is a red emitting compound,
where
- R²,: R³, R⁴ and R⁵, are independently selected from phenyl, which is unsubstituted, partially or completely fluorinated and/or carry one, two or three substituents R¹⁰, wherein R¹⁰ is as defined above and especially has one of the meanings mentioned as preferred;
- EGW1 and EWG2: are identical and are selected from cyano, CF₃, CH(O), C(O)(C₁-C₄alkyl), C(O)O-C₁-C₄-alkyl and CH(COOC₁-C₄-alkyl)₂, preferably cyano; and
- R^{7c}: is hydrogen, cyano, CF₃, C₁-C₄-alkyl, or phenyl, wherein the phenyl is unsubstituted, or substituted with one, two or three substituents R¹¹, wherein R¹¹ is as defined above and especially has one of the meanings mentioned as preferred.

Likewise preferably, R^{7c} is 2,3,4,5,6-pentafluorophenyl or 2,3,4,5,6-pentachlorophenyl.

Examples of preferred green emitting compounds of formulae (I.a), (I.b) and (I.c) are the individual compounds compiled in the tables 1 to 21 below. Moreover, the meanings mentioned below for the individual variables in the tables are per se, independently of the combination in which they are mentioned, a particularly preferred embodiment of the substituents in question.

### Table 1

Compounds of the formula (I.a), in which EWG1 is cyano, EWG2 is cyano and the combination of R¹, R², R⁵, R⁶ and R^{7a} for a compound corresponds in each case to one row of Table A.

### Table 2

Compounds of the formula (I.a), in which EWG1 is CF₃, EWG2 is CF₃ and the combination of R¹, R², R⁵, R⁶ and R^{7a} for a compound corresponds in each case to one row of Table A.

### Table 3

Compounds of the formula (I.a), in which EWG1 is CH(O), EWG2 is CH(O) and the combination of R¹, R², R⁵, R⁶ and R^{7a} for a compound corresponds in each case to one row of Table A.

### Table 4

Compounds of the formula (I.a), in which EWG1 is C(O)CH₃, EWG2 is C(O)CH₃ and the combination of R¹, R², R⁵, R⁶ and R^{7a} for a compound corresponds in each case to one row of Table A.

### Table 5

Compounds of the formula (I.a), in which EWG1 is C(O)C₂H₅, EWG2 is C(O)C₂H₅ and the combination of R¹, R², R⁵, R⁶ and R^{7a} for a compound corresponds in each case to one row of Table A.

### Table 6

Compounds of the formula (I.a), in which EWG1 is COOCH₃, EWG2 is COOCH₃ and the combination of R¹, R², R⁵, R⁶ and R^{7a} for a compound corresponds in each case to one row of Table A.

### Table 7

Compounds of the formula (I.a), in which EWG1 is COOC₂H₅, EWG2 is COOC₂H₅ and the combination of R¹, R², R⁵, R⁶ and R^{7a} for a compound corresponds in each case to one row of Table A.

### Table 8

Compounds of the formula (I.b), in which EWG1 is cyano, EWG2 is cyano and the combination of R¹, R³, R⁴, R⁶ and R^{7b} for a compound corresponds in each case to one row of Table B.

### Table 9

Compounds of the formula (I.b), in which EWG1 is CF₃, EWG2 is CF₃ and the combination of R¹, R³, R⁴, R⁶ and R^{7b} for a compound corresponds in each case to one row of Table B.

### Table 10

Compounds of the formula (I.b), in which EWG1 is CH(O), EWG2 is CH(O) and the combination of R¹, R³, R⁴, R⁶ and R^{7b} for a compound corresponds in each case to one row of Table B.

### Table 11

Compounds of the formula (I.b), in which EWG1 is C(O)CH₃, EWG2 is C(O)CH₃ and the combination of R¹, R³, R⁴, R⁶ and R^{7b} for a compound corresponds in each case to one row of Table B.

### Table 12

Compounds of the formula (I.b), in which EWG1 is C(O)C₂H₅, EWG2 is C(O)C₂H₅ and the combination of R¹, R³, R⁴, R⁶ and R^{7b} for a compound corresponds in each case to one row of Table B.

### Table 13

Compounds of the formula (I.b), in which EWG1 is COOCH₃, EWG2 is COOCH₃ and the combination of R¹, R³, R⁴, R⁶ and R^{7b} for a compound corresponds in each case to one row of Table B.

### Table 14

Compounds of the formula (I.b), in which EWG1 is COOC₂H₅, EWG2 is COOC₂H₅ and the combination of R¹, R³, R⁴, R⁶ and R^{7b} for a compound corresponds in each case to one row of Table B.

### Table 15

Compounds of the formula (I.c), in which EWG1 is cyano, EWG2 is cyano and the combination of R¹, R², R⁵ and R⁶ for a compound corresponds in each case to one row of Table C.

### Table 16

Compounds of the formula (I.c), in which EWG1 is CF₃, EWG2 is CF₃ and the combination of R², R³, R⁴, R⁵ and R^{7c} for a compound corresponds in each case to one row of Table C.

### Table 17

Compounds of the formula (I.c), in which EWG1 is CH(O), EWG2 is CH(O) and the combination of R², R³, R⁴, R⁵ and R^{7c} for a compound corresponds in each case to one row of Table C.

### Table 18

Compounds of the formula (I.c), in which EWG1 is C(O)CH₃, EWG2 is C(O)CH₃ and the combination of R², R³, R⁴, R⁵ and R^{7c} for a compound corresponds in each case to one row of Table C.

### Table 19

Compounds of the formula (I.c), in which EWG1 is C(O)C₂H₅, EWG2 is C(O)C₂H₅ and the combination of R², R³, R⁴, R⁵ and R^{7c} for a compound corresponds in each case to one row of Table C.

### Table 20

Compounds of the formula (I.c), in which EWG1 is COOCH₃, EWG2 is COOCH₃ and the combination of R², R³, R⁴, R⁵ and R^{7c} for a compound corresponds in each case to one row of Table C.

### Table 21

Compounds of the formula (I.c), in which EWG1 is COOC₂H₅, EWG2 is COOC₂H₅ and the combination of R², R³, R⁴, R⁵ and R^{7c} for a compound corresponds in each case to one row of Table C.

**Table A**

| Compound | R¹ | R2 | R5 | R6 | R^{7a} |
|---|---|---|---|---|---|
| I.a-g1 | CH₃ | CH₃ | CH₃ | CH₃ | CH₃ |
| I.a-g2 | C₂H₅ | C₂H₅ | C₂H₅ | C₂H₅ | CH₃ |
| I.a-g3 | CH₃ | CH₃ | CH₃ | CH₃ | C₂H₅ |
| I.a-g4 | C₂H₅ | C₂H₅ | C₂H₅ | C₂H₅ | C₂H₅ |
| I.a-g5 | CH₃ | CH₃ | CH₃ | CH₃ | C₆H₅ |
| I.a-g6 | C₂H₅ | C₂H₅ | C₂H₅ | C₂H₅ | C₆H₅ |
| I.a-g7 | CH₃ | CH₃ | CH₃ | CH₃ | 4-CH₃-C₆H₄ |
| I.a-g8 | C₂H₅ | C₂H₅ | C₂H₅ | C₂H₅ | 4-CH₃-C₆H₄ |
| I.a-g9 | CH₃ | CH₃ | CH₃ | CH₃ | mes |
| I.a-g10 | C₂H₅ | C₂H₅ | C₂H₅ | C₂H₅ | mes |
| I.a-g11 | CH₃ | CH₃ | CH₃ | CH₃ | 2-chlorophenyl |
| I.a-g12 | C₂H₅ | C₂H₅ | C₂H₅ | C₂H₅ | 2-chlorophenyl |
| I.a-g13 | CH₃ | CH₃ | CH₃ | CH₃ | 2-fluorophenyl |
| I.a-g14 | C₂H₅ | C₂H₅ | C₂H₅ | C₂H₅ | 2-fluorophenyl |
| I.a-g15 | CH₃ | CH₃ | CH₃ | CH₃ | 2,6-dichlorophenyl |
| I.a-g16 | C₂H₅ | C₂H₅ | C₂H₅ | C₂H₅ | 2,6-dichlorophenyl |
| I.a-g17 | CH₃ | CH₃ | CH₃ | CH₃ | 2,6-difluorophenyl |
| I.a-g18 | C₂H₅ | C₂H₅ | C₂H₅ | C₂H₅ | 2,6-difluorophenyl |
| I.a-g19 | CH₃ | CH₃ | CH₃ | CH₃ | 2,3,4,5,6-pentafluorophenyl |
| I.a-g20 | C₂H₅ | C₂H₅ | C₂H₅ | C₂H₅ | 2,3,4,5,6-pentafluorophenyl |
| I.a-g21 | CH₃ | CH₃ | CH₃ | CH₃ | 2,3,4,5,6-pentachlorophenyl |
| I.a-g22 | C₂H₅ | C₂H₅ | C₂H₅ | C₂H₅ | 2,3,4,5,6-pentachlorophenyl |
| I.a-g23 | CH₃ | CH₃ | CH₃ | CH₃ | H |
| I.a-g24 | C₂H₅ | C₂H₅ | C₂H₅ | C₂H₅ | H |
| I.a-g25 | CH₃ | CH₃ | C₂H₅ | C₂H₅ | CH₃ |
| I.a-g26 | CH₃ | CH₃ | C₂H₅ | C₂H₅ | C₂H₅ |
| I.a-g27 | CH₃ | CH₃ | C₂H₅ | C₂H₅ | C₆H₅ |
| I.a-g28 | CH₃ | CH₃ | C₂H₅ | C₂H₅ | 4-CH₃-C₆H₄ |
| I.a-g29 | CH₃ | CH₃ | C₂H₅ | C₂H₅ | mes |
| I.a-g30 | CH₃ | CH₃ | C₂H₅ | C₂H₅ | 2-chlorophenyl |
| I.a-g31 | CH₃ | CH₃ | C₂H₅ | C₂H₅ | 2-fluorphenyl |
| I.a-g32 | CH₃ | CH₃ | C₂H₅ | C₂H₅ | 2,6-dichlorophenyl |
| I.a-g33 | CH₃ | CH₃ | C₂H₅ | C₂H₅ | 2,6-difluorophenyl |
| I.a-g34 | CH₃ | CH₃ | C₂H₅ | C₂H₅ | 2,3,4,5,6-pentafluorophenyl |
| I.a-g35 | CH₃ | CH₃ | C₂H₅ | C₂H₅ | 2,3,4,5,6-pentachlorophenyl |
| I.a-g36 | CH₃ | CH₃ | C₂H₅ | C₂H₅ | H |

| | | | | | |
|---|---|---|---|---|---|
| mes = mesityl = 2,4,6-(CH₃)₃C₆H₂ 4-CH₃-C₆H₄ = 4-methylphenyl | | | | | |

**Table B**

| Compound | R¹ | R3 | R4 | R6 | R^{7b} |
|---|---|---|---|---|---|
| I.b-g1 | CH₃ | CH₃ | CH₃ | CH₃ | CH₃ |
| I.b-g2 | C₂H₅ | C₂H₅ | C₂H₅ | C₂H₅ | CH₃ |
| I.b-g3 | CH₃ | C₂H₅ | C₂H₅ | CH₃ | CH₃ |
| I.b-g4 | C₂H₅ | CH₃ | CH₃ | C₂H₅ | CH₃ |
| I.b-g5 | CH₃ | CH₃ | CH₃ | CH₃ | C₂H₅ |
| I.b-g6 | C₂H₅ | C₂H₅ | C₂H₅ | C₂H₅ | C₂H₅ |
| I.b-g7 | CH₃ | C₂H₅ | C₂H₅ | CH₃ | C₂H₅ |
| I.b-g8 | C₂H₅ | CH₃ | CH₃ | C₂H₅ | C₂H₅ |
| I.b-g9 | CH₃ | CH₃ | CH₃ | CH₃ | C₆H₅ |
| I.b-g10 | C₂H₅ | C₂H₅ | C₂H₅ | C₂H₅ | C₆H₅ |
| I.b-g11 | CH₃ | C₂H₅ | C₂H₅ | CH₃ | C₆H₅ |
| I.b-g12 | C₂H₅ | CH₃ | CH₃ | C₂H₅ | C₆H₅ |
| I.b-g13 | CH₃ | CH₃ | CH₃ | CH₃ | 4-CH₃-C₆H₄ |
| I.b-g14 | C₂H₅ | C₂H₅ | C₂H₅ | C₂H₅ | 4-CH₃-C₆H₄ |
| I.b-g15 | CH₃ | C₂H₅ | C₂H₅ | CH₃ | 4-CH₃-C₆H₄ |
| I.b-g16 | C₂H₅ | CH₃ | CH₃ | C₂H₅ | 4-CH₃-C₆H₄ |
| I.b-g17 | CH₃ | CH₃ | CH₃ | CH₃ | 2-chlorophenyl |
| I.b-g18 | C₂H₅ | C₂H₅ | C₂H₅ | C₂H₅ | 2-chlorophenyl |
| I.b-g19 | CH₃ | C₂H₅ | C₂H₅ | CH₃ | 2-chlorophenyl |
| I.b-g20 | C₂H₅ | CH₃ | CH₃ | C₂H₅ | 2-chlorophenyl |
| I.b-g21 | CH₃ | CH₃ | CH₃ | CH₃ | 2-fluorophenyl |
| I.b-g22 | C₂H₅ | C₂H₅ | C₂H₅ | C₂H₅ | 2-fluorophenyl |
| I.b-g23 | CH₃ | C₂H₅ | C₂H₅ | CH₃ | 2-fluorophenyl |
| I.b-g24 | C₂H₅ | CH₃ | CH₃ | C₂H₅ | 2-fluorophenyl |
| I.b-g25 | CH₃ | CH₃ | CH₃ | CH₃ | 2,6-dichlorophenyl |
| I.b-g26 | C₂H₅ | C₂H₅ | C₂H₅ | C₂H₅ | 2,6-dichlorophenyl |
| I.b-g27 | CH₃ | C₂H₅ | C₂H₅ | CH₃ | 2,6-dichlorophenyl |
| I.b-g28 | C₂H₅ | CH₃ | CH₃ | C₂H₅ | 2,6-dichlorophenyl |
| I.b-g29 | CH₃ | CH₃ | CH₃ | CH₃ | 2,6-difluorophenyl |
| I.b-g30 | C₂H₅ | C₂H₅ | C₂H₅ | C₂H₅ | 2,6-difluorophenyl |
| I.b-g31 | CH₃ | C₂H₅ | C₂H₅ | CH₃ | 2,6-difluorophenyl |
| I.b-g32 | C₂H₅ | CH₃ | CH₃ | C₂H₅ | 2,6-difluorophenyl |
| I.b-g33 | CH₃ | CH₃ | CH₃ | CH₃ | 2,3,4,5,6-pentafluorophenyl |
| I.b-g34 | C₂H₅ | C₂H₅ | C₂H₅ | C₂H₅ | 2,3,4,5,6-pentafluorophenyl |
| I.b-g35 | CH₃ | C₂H₅ | C₂H₅ | CH₃ | 2,3,4,5,6-pentafluorophenyl |
| I.b-g36 | C₂H₅ | CH₃ | CH₃ | C₂H₅ | 2,3,4,5,6-pentafluorophenyl |
| I.b-g37 | CH₃ | CH₃ | CH₃ | CH₃ | 2,3,4,5,6-pentachlorophenyl |
| I.b-g38 | C₂H₅ | C₂H₅ | C₂H₅ | C₂H₅ | 2,3,4,5,6-pentachlorophenyl |
| I.b-g39 | CH₃ | C₂H₅ | C₂H₅ | CH₃ | 2,3,4,5,6-pentachlorophenyl |
| I.b-g40 | C₂H₅ | CH₃ | CH₃ | C₂H₅ | 2,3,4,5,6-pentachlorophenyl |
| I.b-g41 | CH₃ | CH₃ | CH₃ | CH₃ | H |
| I.b-g42 | C₂H₅ | C₂H₅ | C₂H₅ | C₂H₅ | H |
| I.b-g43 | CH₃ | C₂H₅ | C₂H₅ | CH₃ | H |
| I.b-g44 | C₂H₅ | CH₃ | CH₃ | C₂H₅ | H |
| I.b-g45 | CH3 | CH₃ | CH₃ | CH₃ | mes |
| I.b-g46 | C₂H₅ | C₂H₅ | C₂H₅ | C₂H₅ | mes |
| I.b-g47 | CH₃ | C₂H₅ | C₂H₅ | CH₃ | mes |
| I.b-g48 | C₂H₅ | CH₃ | CH₃ | C₂H₅ | mes |
| I.b-g49 | CH₃ | CH₃ | C₂H₅ | C₂H₅ | CH₃ |
| I.b-g50 | CH₃ | CH₃ | C₂H₅ | C₂H₅ | C₂H₅ |
| I.b-g51 | CH₃ | CH₃ | C₂H₅ | C₂H₅ | C₆H₅ |
| I.b-g52 | CH₃ | CH₃ | C₂H₅ | C₂H₅ | 4-CH₃-C₆H₄ |
| I.b-g53 | CH₃ | CH₃ | C₂H₅ | C₂H₅ | mes |
| I.b-g54 | CH₃ | CH₃ | C₂H₅ | C₂H₅ | H |
| I.b-g55 | CH₃ | CH₃ | C₂H₅ | C₂H₅ | 2-chlorophenyl |
| I.b-g56 | CH₃ | CH₃ | C₂H₅ | C₂H₅ | 2-fluorophenyl |
| I.b-g57 | CH₃ | CH₃ | C₂H₅ | C₂H₅ | 2,6-dichlorophenyl |
| I.b-g58 | CH₃ | CH₃ | C₂H₅ | C₂H₅ | 2,6-difluorophenyl |
| I.b-g59 | CH₃ | CH₃ | C₂H₅ | C₂H₅ | 2,3,4,5,6-pentafluorophenyl |
| I.b-g60 | CH₃ | CH₃ | C₂H₅ | C₂H₅ | 2,3,4,5,6-pentachlorophenyl |

| | | | | | |
|---|---|---|---|---|---|
| mes = mesityl = 2,4,6-(CH₃)₃C6H₂ 4-CH₃-C₆H₄ = 4-methylphenyl | | | | | |

**Table C**

| Compound | R2 | R3 | R5 | R6 | R^{7c} |
|---|---|---|---|---|---|
| I.c-g1 | CH₃ | CH₃ | CH₃ | CH₃ | CH₃ |
| I.c-g2 | C₂H₅ | C₂H₅ | C₂H₅ | C₂H₅ | C₂H₅ |
| I.c-g3 | CH₃ | CH₃ | CH₃ | CH₃ | C₂H₅ |
| I.c-g4 | C₂H₅ | C₂H₅ | C₂H₅ | C₂H₅ | CH₃ |
| I.c-g5 | CH₃ | CH₃ | CH₃ | CH₃ | C₆H₅ |
| I.c-g6 | C₂H₅ | C₂H₅ | C₂H₅ | C₂H₅ | C₆H₅ |
| I.c-g7 | CH₃ | CH₃ | CH₃ | CH₃ | 4-CH₃-C₆H₄ |
| I.c-g8 | C₂H₅ | C₂H₅ | C₂H₅ | C₂H₅ | 4-CH₃-C₆H₄ |
| I.c-g9 | CH₃ | CH₃ | CH₃ | CH₃ | mes |
| I.c-g10 | C₂H₅ | C₂H₅ | C₂H₅ | C₂H₅ | mes |
| I.c-g11 | CH₃ | CH₃ | CH₃ | CH₃ | 2-chlorophenyl |
| I.c-g12 | C₂H₅ | C₂H₅ | C₂H₅ | C₂H₅ | 2-chlorophenyl |
| I.c-g13 | CH₃ | CH₃ | CH₃ | CH₃ | 2-fluorophenyl |
| I.c-g14 | C₂H₅ | C₂H₅ | C₂H₅ | C₂H₅ | 2-fluorophenyl |
| I.c-g15 | CH₃ | CH₃ | CH₃ | CH₃ | 2,6-dichlorophenyl |
| I.c-g16 | C₂H₅ | C₂H₅ | C₂H₅ | C₂H₅ | 2,6-dichlorophenyl |
| I.c-g17 | CH₃ | CH₃ | CH₃ | CH₃ | 2,6-difluorophenyl |
| I.c-g18 | C₂H₅ | C₂H₅ | C₂H₅ | C₂H₅ | 2,6-difluorophenyl |
| I.c-g19 | CH₃ | CH₃ | CH₃ | CH₃ | 2,3,4,5,6-pentafluorophenyl |
| I.c-g20 | C₂H₅ | C₂H₅ | C₂H₅ | C₂H₅ | 2,3,4,5,6-pentafluorophenyl |
| Ic-g21 | CH₃ | CH₃ | CH₃ | CH₃ | 2,3,4,5,6-pentachlorophenyl |
| I.c-g22 | C₂H₅ | C₂H₅ | C₂H₅ | C₂H₅ | 2,3,4,5,6-pentachlorophenyl |
| I.c-g23 | CH³ | CH³ | CH³ | CH³ | H |
| I.c-g24 | C₂H₅ | C₂H₅ | C₂H₅ | C₂H₅ | H |
| I.c-g25 | CH³ | CH³ | C₂H₅ | C₂H₅ | CH₃ |
| I.c-g26 | CH₃ | CH₃ | C₂H₅ | C₂H₅ | C₂H₅ |
| I.c-g27 | CH₃ | CH₃ | C₂H₅ | C₂H₅ | C₆H₅ |
| I.c-g28 | CH₃ | CH₃ | C₂H₅ | C₂H₅ | 4-CH₃-C₆H₄ |
| I.c-g29 | CH₃ | CH₃ | C₂H₅ | C₂H₅ | mes |
| I.c-g30 | CH₃ | CH₃ | C₂H₅ | C₂H₅ | H |
| I.c-g31 | CH₃ | CH₃ | C₂H₅ | C₂H₅ | 2-chlorophenyl |
| I.c-g32 | CH₃ | CH₃ | C₂H₅ | C₂H₅ | 2-fluorophenyl |
| I.c-g33 | CH₃ | CH₃ | C₂H₅ | C₂H₅ | 2,6-dichlorophenyl |
| I.c-g34 | CH₃ | CH₃ | C₂H₅ | C₂H₅ | 2,6-difluorophenyl |
| I.c-g35 | CH₃ | CH3 | C₂H₅ | C₂H₅ | 2,3,4,5,6-pentafluorophenyl |
| I.c-g36 | CH₃ | CH₃ | C₂H₅ | C₂H₅ | 2,3,4,5,6-pentachlorophenyl |

| | | | | | |
|---|---|---|---|---|---|
| mes = mesityl = 2,4,6-(CH₃)₃C₆H₂ 4-CH₃-C₆H₄ = 4-methylphenyl | | | | | |

Examples of preferred red emitting compounds of formulae (I.a), (I.b) and (I.c) are the individual compounds compiled in the Tables 22 to 42 below. Moreover, the meanings mentioned below for the individual variables in the tables are per se, independently of the combination in which they are mentioned, a particularly preferred embodiment of the substituents in question.

### Table 22

Compounds of the formula (I.a), in which EWG1 is cyano, EWG2 is cyano and the combination of R¹, R², R⁵, R⁶ and R^{7a} for a compound corresponds in each case to one row of Table D.

### Table 23

Compounds of the formula (I.a), in which EWG1 is CF₃, EWG2 is CF₃ and the combination of R¹, R², R⁵, R⁶ and R^{7a} for a compound corresponds in each case to one row of Table D.

### Table 24

Compounds of the formula (I.a), in which EWG1 is CH(O), EWG2 is CH(O) and the combination of R¹, R², R⁵, R⁶ and R^{7a} for a compound corresponds in each case to one row of Table D.

### Table 25

Compounds of the formula (I.a), in which EWG1 is C(O)CH₃, EWG2 is C(O)CH₃ and the combination of R¹, R², R⁵, R⁶ and R^{7a} for a compound corresponds in each case to one row of Table D.

### Table 26

Compounds of the formula (I.a), in which EWG1 is C(O)C₂H₅, EWG2 is C(O)C₂H₅ and the combination of R¹, R², R⁵, R⁶ and R^{7a} for a compound corresponds in each case to one row of Table D.

### Table 27

Compounds of the formula (I.a), in which EWG1 is COOCH₃, EWG2 is COOCH₃ and the combination of R¹, R², R⁵, R⁶ and R^{7a} for a compound corresponds in each case to one row of Table D.

### Table 28

Compounds of the formula (I.a), in which EWG1 is COOC₂H₅, EWG2 is COOC₂H₅ and the combination of R¹, R², R⁵, R⁶ and R^{7a} for a for a compound corresponds in each case to one row of Table D. Table 29 Compounds of the formula (I.b), in which EWG1 is cyano, EWG2 is cyano and the combination of R¹, R³, R⁴, R⁶ and R^{7b} for a compound corresponds in each case to one row of Table E.

### Table 30

Compounds of the formula (I.b), in which EWG1 is CF₃, EWG2 is CF₃ and the combination of R¹, R³, R⁴, R⁶ and R^{7b} for a compound corresponds in each case to one row of Table E.

### Table 31

Compounds of the formula (I.b), in which EWG1 is CH(O), EWG2 is CH(O) and the combination of R¹, R³, R⁴, R⁶ and R^{7b} for a compound corresponds in each case to one row of Table E.

### Table 32

Compounds of the formula (I.b), in which EWG1 is C(O)CH₃, EWG2 is C(O)CH₃ and the combination of R¹, R³, R⁴, R⁶ and R^{7b} for a compound corresponds in each case to one row of Table E.

### Table 33

Compounds of the formula (I.b), in which EWG1 is C(O)C₂H₅, EWG2 is C(O)C₂H₅ and the combination of R¹, R³, R⁴, R⁶ and R^{7b} for a compound corresponds in each case to one row of Table E.

### Table 34

Compounds of the formula (I.b), in which EWG1 is COOCH₃, EWG2 is COOCH₃ and the combination of R¹, R³, R⁴, R⁶ and R^{7b} for a compound corresponds in each case to one row of Table E.

### Table 35

Compounds of the formula (I.b), in which EWG1 is COOC₂H₅, EWG2 is COOC₂H₅ and the combination of R¹, R³, R⁴, R⁶ and R^{7b} for a compound corresponds in each case to one row of Table E.

### Table 36

Compounds of the formula (I.c), in which EWG1 is cyano, EWG2 is cyano and the combination of R¹, R², R⁵ and R⁶ for a compound corresponds in each case to one row of Table F.

### Table 37

Compounds of the formula (I.c), in which EWG1 is CF₃, EWG2 is CF₃ and the combination of R², R³, R⁴, R⁵ and R^{7c} for a compound corresponds in each case to one row of Table F.

### Table 38

Compounds of the formula (I.c), in which EWG1 is CH(O), EWG2 is CH(O) and the combination of R², R³, R⁴, R⁵ and R^{7c} for a compound corresponds in each case to one row of Table F.

### Table 39

Compounds of the formula (I.c), in which EWG1 is C(O)CH₃, EWG2 is C(O)CH₃ and the combination of R², R³, R⁴, R⁵ and R^{7c} for a compound corresponds in each case to one row of Table F.

### Table 40

Compounds of the formula (I.c), in which EWG1 is C(O)C₂H₅, EWG2 is C(O)C₂H₅ and the combination of R², R³, R⁴, R⁵ and R^{7c} for a compound corresponds in each case to one row of Table F.

### Table 41

Compounds of the formula (I.c), in which EWG1 is COOCH₃, EWG2 is COOCH₃ and the combination of R², R³, R⁴, R⁵ and R^{7c} for a compound corresponds in each case to one row of Table F.

### Table 42

Compounds of the formula (I.c), in which EWG1 is COOC₂H₅, EWG2 is COOC₂H₅ and the combination of R², R³, R⁴, R⁵ and R^{7c} for a compound corresponds in each case to one row of Table F.

**Table D**

| Compound | R¹ | R2 | R5 | R6 | R^{7a} |
|---|---|---|---|---|---|
| I.a-r1 | C₆H₅ | C₆H₅ | C₆H₅ | C₆H₅ | CN |
| I.a-r2 | C₆H₅ | C₆H₅ | C₆H₅ | C₆H₅ | C₆H₅ |
| I.a-r3 | C₆H₅ | C₆H₅ | C₆H₅ | C₆H₅ | H |
| I.a-r4 | C₆H₅ | C₆H₅ | C₆H₅ | C₆H₅ | 4-CH₃-C₆H₄ |
| I.a-r5 | C₆H₅ | C₆H₅ | C₆H₅ | C₆H₅ | mes |
| I.a-r6 | C₆H₅ | C₆H₅ | C₆H₅ | C₆H₅ | 2-Cl-C₆H₄ |
| I.a-r7 | C₆H₅ | C₆H₅ | C₆H₅ | C₆H₅ | 2-F-C₆H₄ |
| I.a-r8 | C₆H₅ | C₆H₅ | C₆H₅ | C₆H₅ | 2,6-Cl₂-C₆H₃ |
| I.a-r9 | C₆H₅ | C₆H₅ | C₆H₅ | C₆H₅ | 2,6-F₂-C₆H₃ |
| I.a-r10 | C₆H₅ | C₆H₅ | C₆H₅ | C₆H₅ | C₆F₅ |
| I.a-r11 | C₆H₅ | C₆H₅ | C₆H₅ | C₆H₅ | C₆Cl₅ |
| I.a-r12 | mes | mes | mes | mes | CN |
| I.a-r13 | mes | mes | mes | mes | C₆H₅ |
| I.a-r14 | mes | mes | mes | mes | H |
| I.a-r15 | mes | mes | mes | mes | 4-CH₃-C₆H₄ |
| I.a-r16 | mes | mes | mes | mes | mes |
| I.a-r17 | mes | mes | mes | mes | 2-Cl-C₆H₄ |
| I.a-r18 | mes | mes | mes | mes | 2-F-C₆H₄ |
| I.a-r19 | mes | mes | mes | mes | 2,6-Cl₂-C₆H₃ |
| I.a-r20 | mes | mes | mes | mes | 2,6-F₂-C₆H₃ |
| I.a-r21 | mes | mes | mes | mes | C₆F₅ |
| I.a-r22 | mes | mes | mes | mes | C₆Cl₅ |
| I.a-r23 | 4-CH₃-C₆H₄ | 4-CH₃-C₆H₄ | 4-CH₃-C₆H₄ | 4-CH₃-C₆H₄ | CN |
| I.a-r24 | 4-CH₃-C₆H₄ | 4-CH₃-C₆H₄ | 4-CH₃-C₆H₄ | 4-CH₃-C₆H₄ | C₆H₅ |
| I.a-r25 | 4-CH₃-C₆H₄ | 4-CH₃-C₆H₄ | 4-CH₃-C₆H₄ | 4-CH₃-C₆H₄ | H |
| I.a-r26 | 4-CH₃-C₆H₄ | 4-CH₃-C₆H₄ | 4-CH₃-C₆H₄ | 4-CH₃-C₆H₄ | 4-CH₃-C₆H₄ |
| I.a-r27 | 4-CH₃-C₆H₄ | 4-CH₃-C₆H₄ | 4-CH₃-C₆H₄ | 4-CH₃-C₆H₄ | mes |
| I.a-r28 | 4-CH₃-C₆H₄ | 4-CH₃-C₆H₄ | 4-CH₃-C₆H₄ | 4-CH₃-C₆H₄ | 2-Cl-C₆H₄ |
| I.a-r29 | 4-CH₃-C₆H₄ | 4-CH₃-C₆H₄ | 4-CH₃-C₆H₄ | 4-CH₃-C₆H₄ | 2-F-C₆H₄ |
| I.a-r30 | 4-CH₃-C₆H₄ | 4-CH₃-C₆H₄ | 4-CH₃-C₆H₄ | 4-CH₃-C₆H₄ | 2,6-Cl₂-C₆H₃ |
| I.a-r31 | 4-CH₃-C₆H₄ | 4-CH₃-C₆H₄ | 4-CH₃-C₆H₄ | 4-CH₃-C₆H₄ | 2,6-F₂-C₆H₃ |
| I.a-r32 | 4-CH₃-C₆H₄ | 4-CH₃-C₆H₄ | 4-CH₃-C₆H₄ | 4-CH₃-C₆H₄ | C₆F₅ |
| I.a-r33 | 4-CH₃-C₆H₄ | 4-CH₃-C₆H₄ | 4-CH₃-C₆H₄ | 4-CH₃-C₆H₄ | C₆Cl₅ |
| I.a-r34 | C₆H₅ | C₆H₅ | mes | mes | CN |
| I.a-r35 | C₆H₅ | C₆H₅ | mes | mes | C₆H₅ |
| I.a-r36 | C₆H₅ | C₆H₅ | mes | mes | H |
| I.a-r37 | C₆H₅ | C₆H₅ | mes | mes | 4-CH₃-C₆H₄ |
| I.a-r38 | C₆H₅ | C₆H₅ | mes | mes | mes |
| I.a-r39 | C₆H₅ | C₆H₅ | mes | mes | 2-Cl-C₆H₄ |
| I.a-r40 | C₆H₅ | C₆H₅ | mes | mes | 2-F-C₆H₄ |
| I.a-r41 | C₆H₅ | C₆H₅ | mes | mes | 2,6-Cl₂-C₆H₃ |
| I.a-r42 | C₆H₅ | C₆H₅ | mes | mes | 2,6-F₂-C₆H₃ |
| I.a-r43 | C₆H₅ | C₆H₅ | mes | mes | C₆F₅ |
| I.a-r44 | C₆H₅ | C₆H₅ | mes | mes | C₆Cl₅ |
| I.a-r45 | 4-CH₃-C₆H₄ | 4-CH₃-C₆H₄ | C₆H₅ | C₆H₅ | CN |
| I.a-r46 | 4-CH₃-C₆H₄ | 4-CH₃-C₆H₄ | C₆H₅ | C₆H₅ | C₆H₅ |
| I.a-r47 | 4-CH₃-C₆H₄ | 4-CH₃-C₆H₄ | C₆H₅ | C₆H₅ | H |
| I.a-r48 | 4-CH₃-C₆H₄ | 4-CH₃-C₆H₄ | C₆H₅ | C₆H₅ | 4-CH₃-C₆H₄ |
| I.a-r49 | 4-CH₃-C₆H₄ | 4-CH₃-C₆H₄ | C₆H₅ | C₆H₅ | mes |
| I.a-r50 | 4-CH₃-C₆H₄ | 4-CH₃-C₆H₄ | C₆H₅ | C₆H₅ | 2-Cl-C₆H₄ |
| I.a-r51 | 4-CH₃-C₆H₄ | 4-CH₃-C₆H₄ | C₆H₅ | C₆H₅ | 2-F-C₆H₄ |
| I.a-r52 | 4-CH₃-C₆H₄ | 4-CH₃-C₆H₄ | C₆H₅ | C₆H₅ | 2,6-Cl₂-C₆H₃ |
| I.a-r53 | 4-CH₃-C₆H₄ | 4-CH₃-C₆H₄ | C₆H₅ | C₆H₅ | 2,6-F₂-C₆H₃ |
| I.a-r54 | 4-CH₃-C₆H₄ | 4-CH₃-C₆H₄ | C₆H₅ | C₆H₅ | C₆F₅ |
| I.a-r55 | 4-CH₃-C₆H₄ | 4-CH₃-C₆H₄ | C₆H₅ | C₆H₅ | C₆Cl₅ |
| I.a-r56 | C₆H₅ | 4-MeO-C₆H₄ | 4-MeO-C₆H₄ | C₆H₅ | CN |
| I.a-r57 | C₆H₅ | 4-MeO-C₆H₄ | 4-MeO-C₆H₄ | C₆H₅ | C₆H₅ |
| I.a-r58 | C₆H₅ | 4-MeO-C₆H₄ | 4-MeO-C₆H₄ | C₆H₅ | H |
| I.a-r59 | C₆H₅ | 4-MeO-C₆H₄ | 4-MeO-C₆H₄ | C₆H₅ | 4-CH₃-C₆H₄ |
| I.a-r60 | C₆H₅ | 4-MeO-C₆H₄ | 4-MeO-C₆H₄ | C₆H₅ | mes |
| I.a-r61 | C₆H₅ | 4-MeO-C₆H₄ | 4-MeO-C₆H₄ | C₆H₅ | 2-Cl-C₆H₄ |
| I.a-r62 | C₆H₅ | 4-MeO-C₆H₄ | 4-MeO-C₆H₄ | C₆H₅ | 2-F-C₆H₄ |
| I.a-r63 | C₆H₅ | 4-MeO-C₆H₄ | 4-MeO-C₆H₄ | C₆H₅ | 2,6-Cl₂-C₆H₃ |
| I.a-r64 | C₆H₅ | 4-MeO-C₆H₄ | 4-MeO-C₆H₄ | C₆H₅ | 2,6-F₂-C₆H₃ |
| I.a-r65 | C₆H₅ | 4-MeO-C₆H₄ | 4-MeO-C₆H₄ | C₆H₅ | C₆F₅ |
| I.a-r66 | C₆H₅ | 4-MeO-C₆H₄ | 4-MeO-C₆H₄ | C₆H₅ | C₆Cl₅ |
| I.a-r67 | 4-CH₃-C₆H₄ | 4-MeO-C₆H₄ | 4-MeO-C₆H₄ | 4-CH₃-C₆H₄ | CN |
| I.a-r68 | 4-CH₃-C₆H₄ | 4-MeO-C₆H₄ | 4-MeO-C₆H₄ | 4-CH₃-C₆H₄ | C₆H₅ |
| I.a-r69 | 4-CH₃-C₆H₄ | 4-MeO-C₆H₄ | 4-MeO-C₆H₄ | 4-CH₃-C₆H₄ | H |
| I.a-r70 | 4-CH₃-C₆H₄ | 4-MeO-C₆H₄ | 4-MeO-C₆H₄ | 4-CH₃-C₆H₄ | 4-CH₃-C₆H₄ |
| I.a-r71 | 4-CH₃-C₆H₄ | 4-MeO-C₆H₄ | 4-MeO-C₆H₄ | 4-CH₃-C₆H₄ | mes |
| I.a-r72 | 4-CH₃-C₆H₄ | 4-MeO-C₆H₄ | 4-MeO-C₆H₄ | 4-CH₃-C₆H₄ | 2-Cl-C₆H₄ |
| I.a-r73 | 4-CH₃-C₆H₄ | 4-MeO-C₆H₄ | 4-MeO-C₆H₄ | 4-CH₃-C₆H₄ | 2-F-C₆H₄ |
| I.a-r74 | 4-CH₃-C₆H₄ | 4-MeO-C₆H₄ | 4-MeO-C₆H₄ | 4-CH₃-C₆H₄ | 2,6-Cl₂-C₆H₃ |
| I.a-r75 | 4-CH₃-C₆H₄ | 4-MeO-C₆H₄ | 4-MeO-C₆H₄ | 4-CH₃-C₆H₄ | 2,6-F₂-C₆H₃ |
| I.a-r76 | 4-CH₃-C₆H₄ | 4-MeO-C₆H₄ | 4-MeO-C₆H₄ | 4-CH₃-C₆H₄ | C₆F₅ |
| I.a-r77 | 4-CH₃-C₆H₄ | 4-MeO-C₆H₄ | 4-MeO-C₆H₄ | 4-CH₃-C₆H₄ | C₆Cl₅ |
| I.a-r78 | C₆H₅ | 4-EtO-C₆H₄ | 4-EtO-C₆H₄ | C₆H₅ | CN |
| I.a-r79 | C₆H₅ | 4-EtO-C₆H₄ | 4-EtO-C₆H₄ | C₆H₅ | C₆H₅ |
| I.a-r80 | C₆H₅ | 4-EtO-C₆H₄ | 4-EtO-C₆H₄ | C₆H₅ | H |
| I.a-r81 | C₆H₅ | 4-EtO-C₆H₄ | 4-EtO-C₆H₄ | C₆H₅ | 4-CH₃-C₆H₄ |
| I.a-r82 | C₆H₅ | 4-EtO-C₆H₄ | 4-EtO-C₆H₄ | C₆H₅ | mes |
| I.a-r83 | C₆H₅ | 4-EtO-C₆H₄ | 4-EtO-C₆H₄ | C₆H₅ | 2-Cl-C₆H₄ |
| I.a-r84 | C₆H₅ | 4-EtO-C₆H₄ | 4-EtO-C₆H₄ | C₆H₅ | 2-F-C₆H₄ |
| I.a-r85 | C₆H₅ | 4-EtO-C₆H₄ | 4-EtO-C₆H₄ | C₆H₅ | 2,6-Cl₂-C₆H₃ |
| I.a-r86 | C₆H₅ | 4-EtO-C₆H₄ | 4-EtO-C₆H₄ | C₆H₅ | 2,6-F₂-C₆H₃ |
| I.a-r87 | C₆H₅ | 4-EtO-C₆H₄ | 4-EtO-C₆H₄ | C₆H₅ | C₆F₅ |
| I.a-r88 | C₆H₅ | 4-EtO-C₆H₄ | 4-EtO-C₆H₄ | C₆H₅ | C₆Cl₅ |
| I.a-r89 | 4-CH₃-C₆H₄ | 4-EtO-C₆H₄ | 4-EtO-C₆H₄ | 4-CH₃-C₆H₄ | CN |
| I.a-r90 | 4-CH₃-C₆H₄ | 4-EtO-C₆H₄ | 4-EtO-C₆H₄ | 4-CH₃-C₆H₄ | C₆H₅ |
| I.a-r91 | 4-CH₃-C₆H₄ | 4-EtO-C₆H₄ | 4-EtO-C₆H₄ | 4-CH₃-C₆H₄ | H |
| I.a-r92 | 4-CH₃-C₆H₄ | 4-EtO-C₆H₄ | 4-EtO-C₆H₄ | 4-CH₃-C₆H₄ | 4-CH₃-C₆H₄ |
| I.a-r93 | 4-CH₃-C₆H₄ | 4-EtO-C₆H₄ | 4-EtO-C₆H₄ | 4-CH₃-C₆H₄ | mes |
| I.a-r94 | 4-CH₃-C₆H₄ | 4-EtO-C₆H₄ | 4-EtO-C₆H₄ | 4-CH₃-C₆H₄ | 2-Cl-C₆H₄ |
| I.a-r95 | 4-CH₃-C₆H₄ | 4-EtO-C₆H₄ | 4-EtO-C₆H₄ | 4-CH₃-C₆H₄ | 2-F-C₆H₄ |
| I.a-r96 | 4-CH₃-C₆H₄ | 4-EtO-C₆H₄ | 4-EtO-C₆H₄ | 4-CH₃-C₆H₄ | 2,6-Cl₂-C₆H₃ |
| I.a-r97 | 4-CH₃-C₆H₄ | 4-EtO-C₆H₄ | 4-EtO-C₆H₄ | 4-CH₃-C₆H₄ | 2,6-F₂-C₆H₃ |
| I.a-r98 | 4-CH₃-C₆H₄ | 4-EtO-C₆H₄ | 4-EtO-C₆H₄ | 4-CH₃-C₆H₄ | C₆F₅ |
| I.a-r99 | 4-CH₃-C₆H₄ | 4-EtO-C₆H₄ | 4-EtO-C₆H₄ | 4-CH₃-C₆H₄ | C₆Cl₅ |

| | | | | | |
|---|---|---|---|---|---|
| mes: 2,4,6-trimethylphenyl 4-MeO-C₆H_{4:} 4-methoxyphenyl 4-EtO-C₆H₄: 4-ethoxyphenyl 4-CH₃-C₆H₄: 4-methylphenyl 2-Cl-C₆H_{4:} 2-chlorophenyl 2,6-Cl₂-C₆H₃: 2,6-dichlorphenyl 2,6-F₂-C₆H₃: 2,6-difluorophenyl C₆F₅: 2,3,4,5,6-pentafluorophenyl C₆Cl₅. 2,3,4,5,6-pentachlorophenyl 2-F-C₆H_{4:} 2-fluorophenyl | | | | | |

**Table E**

| Compound | R¹ | R3 | R4 | R6 | R^{7c} |
|---|---|---|---|---|---|
| I.b-r1 | C₆H₅ | C₆H₅ | C₆H₅ | C₆H₅ | CN |
| I.b-r2 | C₆H₅ | C₆H₅ | C₆H₅ | C₆H₅ | C₆H₅ |
| I.b-r3 | C₆H₅ | C₆H₅ | C₆H₅ | C₆H₅ | H |
| I.b-r4 | C₆H₅ | C₆H₅ | C₆H₅ | C₆H₅ | 4-CH₃-C₆H₄ |
| I.b-r5 | C₆H₅ | C₆H₅ | C₆H₅ | C₆H₅ | mes |
| I.b-r6 | C₆H₅ | C₆H₅ | C₆H₅ | C₆H₅ | 2-Cl-C₆H₄ |
| I.b-r7 | C₆H₅ | C₆H₅ | C₆H₅ | C₆H₅ | 2-F-C₆H₄ |
| I.b-r8 | C₆H₅ | C₆H₅ | C₆H₅ | C₆H₅ | 2,6-Cl₂-C₆H₃ |
| I.b-r9 | C₆H₅ | C₆H₅ | C₆H₅ | C₆H₅ | 2,6-F₂-C₆H₃ |
| I.b-r10 | C₆H₅ | C₆H₅ | C₆H₅ | C₆H₅ | C₆F₅ |
| I.b-r11 | C₆H₅ | C₆H₅ | C₆H₅ | C₆H₅ | C₆Cl₅ |
| I.b-r12 | mes | mes | mes | mes | CN |
| I.b-r13 | mes | mes | mes | mes | C₆H₅ |
| I.b-r14 | mes | mes | mes | mes | H |
| I.b-r15 | mes | mes | mes | mes | 4-CH₃-C₆H₄ |
| I.b-r16 | mes | mes | mes | mes | mes |
| I.b-r17 | mes | mes | mes | mes | 2-Cl-C₆H₄ |
| I.b-r18 | mes | mes | mes | mes | 2-F-C₆H₄ |
| I.b-r19 | mes | mes | mes | mes | 2,6-Cl₂-C₆H₃ |
| I.b-r20 | mes | mes | mes | mes | 2,6-F₂-C₆H₃ |
| I.b-r21 | mes | mes | mes | mes | C₆F₅ |
| I.b-r22 | mes | mes | mes | mes | C₆Cl₅ |
| I.b-r23 | 4-CH₃-C₆H₄ | 4-CH₃-C₆H₄ | 4-CH₃-C₆H₄ | 4-CH₃-C₆H₄ | CN |
| I.b-r24 | 4-CH₃-C₆H₄ | 4-CH₃-C₆H₄ | 4-CH₃-C₆H₄ | 4-CH₃-C₆H₄ | C₆H₅ |
| I.b-r25 | 4-CH₃-C₆H₄ | 4-CH₃-C₆H₄ | 4-CH₃-C₆H₄ | 4-CH₃-C₆H₄ | H |
| I.b-r26 | 4-CH₃-C₆H₄ | 4-CH₃-C₆H₄ | 4-CH₃-C₆H₄ | 4-CH₃-C₆H₄ | 4-CH₃-C₆H₄ |
| I.b-r27 | 4-CH₃-C₆H₄ | 4-CH₃-C₆H₄ | 4-CH₃-C₆H₄ | 4-CH₃-C₆H₄ | mes |
| I.b-r28 | 4-CH₃-C₆H₄ | 4-CH₃-C₆H₄ | 4-CH₃-C₆H₄ | 4-CH₃-C₆H₄ | 2-Cl-C₆H₄ |
| I.b-r29 | 4-CH₃-C₆H₄ | 4-CH₃-C₆H₄ | 4-CH₃-C₆H₄ | 4-CH₃-C₆H₄ | 2-F-C₆H₄ |
| I.b-r30 | 4-CH₃-C₆H₄ | 4-CH₃-C₆H₄ | 4-CH₃-C₆H₄ | 4-CH₃-C₆H₄ | 2,6-Cl₂-C₆H₃ |
| I.b-r31 | 4-CH₃-C₆H₄ | 4-CH₃-C₆H₄ | 4-CH₃-C₆H₄ | 4-CH₃-C₆H₄ | 2,6-F₂-C₆H₃ |
| I.b-r32 | 4-CH₃-C₆H₄ | 4-CH₃-C₆H₄ | 4-CH₃-C₆H₄ | 4-CH₃-C₆H₄ | C₆F₅ |
| I.b-r33 | 4-CH₃-C₆H₄ | 4-CH₃-C₆H₄ | 4-CH₃-C₆H₄ | 4-CH₃-C₆H₄ | C₆Cl₅ |
| I.b-r34 | C₆H₅ | C₆H₅ | mes | mes | CN |
| I.b-r35 | C₆H₅ | C₆H₅ | mes | mes | C₆H₅ |
| I.b-r36 | C₆H₅ | C₆H₅ | mes | mes | H |
| I.b-r37 | C₆H₅ | C₆H₅ | mes | mes | 4-CH₃-C₆H₄ |
| I.b-r38 | C₆H₅ | C₆H₅ | mes | mes | mes |
| I.b-r39 | C₆H₅ | C₆H₅ | mes | mes | 2-Cl-C₆H₄ |
| I.b-r40 | C₆H₅ | C₆H₅ | mes | mes | 2-F-C₆H₄ |
| I.b-r41 | C₆H₅ | C₆H₅ | mes | mes | 2,6-Cl₂-C₆H₃ |
| I.b-r42 | C₆H₅ | C₆H₅ | mes | mes | 2,6-F₂-C₆H₃ |
| I.b-r43 | C₆H₅ | C₆H₅ | mes | mes | C₆F₅ |
| I.b-r44 | C₆H₅ | C₆H₅ | mes | mes | C₆Cl₅ |
| I.b-r45 | 4-CH₃-C₆H₄ | 4-CH₃-C₆H₄ | C₆H₅ | C₆H₅ | CN |
| I.b-r46 | 4-CH₃-C₆H₄ | 4-CH₃-C₆H₄ | C₆H₅ | C₆H₅ | C₆H₅ |
| I.b-r47 | 4-CH₃-C₆H₄ | 4-CH₃-C₆H₄ | C₆H₅ | C₆H₅ | H |
| I.b-r48 | 4-CH₃-C₆H₄ | 4-CH₃-C₆H₄ | C₆H₅ | C₆H₅ | 4-CH₃-C₆H₄ |
| I.b-r49 | 4-CH₃-C₆H₄ | 4-CH₃-C₆H₄ | C₆H₅ | C₆H₅ | mes |
| I.b-r50 | 4-CH₃-C₆H₄ | 4-CH₃-C₆H₄ | C₆H₅ | C₆H₅ | 2-Cl-C₆H₄ |
| I.b-r51 | 4-CH₃-C₆H₄ | 4-CH₃-C₆H₄ | C₆H₅ | C₆H₅ | 2-F-C₆H₄ |
| I.b-r52 | 4-CH₃-C₆H₄ | 4-CH₃-C₆H₄ | C₆H₅ | C₆H₅ | 2,6-Cl₂-C₆H₃ |
| I.b-r53 | 4-CH₃-C₆H₄ | 4-CH₃-C₆H₄ | C₆H₅ | C₆H₅ | 2,6-F₂-C₆H₃ |
| I.b-r54 | 4-CH₃-C₆H₄ | 4-CH₃-C₆H₄ | C₆H₅ | C₆H₅ | C₆F₅ |
| I.b-r55 | 4-CH₃-C₆H₄ | 4-CH₃-C₆H₄ | C₆H₅ | C₆H₅ | C₆Cl₅ |
| I.b-r56 | C₆H₅ | 4-MeO-C₆H₄ | 4-MeO-C₆H₄ | C₆H₅ | CN |
| I.b-r57 | C₆H₅ | 4-MeO-C₆H₄ | 4-MeO-C₆H₄ | C₆H₅ | C₆H₅ |
| I.b-r58 | C₆H₅ | 4-MeO-C₆H₄ | 4-MeO-C₆H₄ | C₆H₅ | H |
| I.b-r59 | C₆H₅ | 4-MeO-C₆H₄ | 4-MeO-C₆H₄ | C₆H₅ | 4-CH₃-C₆H₄ |
| I.b-r60 | C₆H₅ | 4-MeO-C₆H₄ | 4-MeO-C₆H₄ | C₆H₅ | mes |
| I.b-r61 | C₆H₅ | 4-MeO-C₆H₄ | 4-MeO-C₆H₄ | C₆H₅ | 2-Cl-C₆H₄ |
| I.b-r62 | C₆H₅ | 4-MeO-C₆H₄ | 4-MeO-C₆H₄ | C₆H₅ | 2-F-C₆H₄ |
| I.b-r63 | C₆H₅ | 4-MeO-C₆H₄ | 4-MeO-C₆H₄ | C₆H₅ | 2,6-Cl₂-C₆H₃ |
| I.b-r64 | C₆H₅ | 4-MeO-C₆H₄ | 4-MeO-C₆H₄ | C₆H₅ | 2,6-F₂-C₆H₃ |
| I.b-r65 | C₆H₅ | 4-MeO-C₆H₄ | 4-MeO-C₆H₄ | C₆H₅ | C₆F₅ |
| I.b-r66 | C₆H₅ | 4-MeO-C₆H₄ | 4-MeO-C₆H₄ | C₆H₅ | C₆Cl₅ |
| I.b-r67 | 4-CH₃-C₆H₄ | 4-MeO-C₆H₄ | 4-MeO-C₆H₄ | 4-CH₃-C₆H₄ | CN |
| I.b-r68 | 4-CH₃-C₆H₄ | 4-MeO-C₆H₄ | 4-MeO-C₆H₄ | 4-CH₃-C₆H₄ | C₆H₅ |
| I.b-r69 | 4-CH₃-C₆H₄ | 4-MeO-C₆H₄ | 4-MeO-C₆H₄ | 4-CH₃-C₆H₄ | H |
| I.b-r70 | 4-CH₃-C₆H₄ | 4-MeO-C₆H₄ | 4-MeO-C₆H₄ | 4-CH₃-C₆H₄ | 4-CH₃-C₆H₄ |
| I.b-r71 | 4-CH₃-C₆H₄ | 4-MeO-C₆H₄ | 4-MeO-C₆H₄ | 4-CH₃-C₆H₄ | mes |
| I.b-r72 | 4-CH₃-C₆H₄ | 4-MeO-C₆H₄ | 4-MeO-C₆H₄ | 4-CH₃-C₆H₄ | 2-Cl-C₆H₄ |
| I.b-r73 | 4-CH₃-C₆H₄ | 4-MeO-C₆H₄ | 4-MeO-C₆H₄ | 4-CH₃-C₆H₄ | 2-F-C₆H₄ |
| I.b-r74 | 4-CH₃-C₆H₄ | 4-MeO-C₆H₄ | 4-MeO-C₆H₄ | 4-CH₃-C₆H₄ | 2,6-Cl₂-C₆H₃ |
| I.b-r75 | 4-CH₃-C₆H₄ | 4-MeO-C₆H₄ | 4-MeO-C₆H₄ | 4-CH₃-C₆H₄ | 2,6-F₂-C₆H₃ |
| I.b-r76 | 4-CH₃-C₆H₄ | 4-MeO-C₆H₄ | 4-MeO-C₆H₄ | 4-CH₃-C₆H₄ | C₆F₅ |
| I.b-r77 | 4-CH₃-C₆H₄ | 4-MeO-C₆H₄ | 4-MeO-C₆H₄ | 4-CH₃-C₆H₄ | C₆Cl₅ |
| I.b-r78 | C₆H₅ | 4-EtO-C₆H₄ | 4-EtO-C₆H₄ | C₆H₅ | CN |
| I.b-r79 | C₆H₅ | 4-EtO-C₆H₄ | 4-EtO-C₆H₄ | C₆H₅ | C₆H₅ |
| I.b-r80 | C₆H₅ | 4-EtO-C₆H₄ | 4-EtO-C₆H₄ | C₆H₅ | H |
| I.b-r81 | C₆H₅ | 4-EtO-C₆H₄ | 4-EtO-C₆H₄ | C₆H₅ | 4-CH₃-C₆H₄ |
| I.b-r82 | C₆H₅ | 4-EtO-C₆H₄ | 4-EtO-C₆H₄ | C₆H₅ | mes |
| I.b-r83 | C₆H₅ | 4-EtO-C₆H₄ | 4-EtO-C₆H₄ | C₆H₅ | 2-Cl-C₆H₄ |
| I.b-r84 | C₆H₅ | 4-EtO-C₆H₄ | 4-EtO-C₆H₄ | C₆H₅ | 2-F-C₆H₄ |
| I.b-r85 | C₆H₅ | 4-EtO-C₆H₄ | 4-EtO-C₆H₄ | C₆H₅ | 2,6-Cl₂-C₆H₃ |
| I.b-r86 | C₆H₅ | 4-EtO-C₆H₄ | 4-EtO-C₆H₄ | C₆H₅ | 2,6-F₂-C₆H₃ |
| I.b-r87 | C₆H₅ | 4-EtO-C₆H₄ | 4-EtO-C₆H₄ | C₆H₅ | C₆F₅ |
| I.b-r88 | C₆H₅ | 4-EtO-C₆H₄ | 4-EtO-C₆H₄ | C₆H₅ | C₆Cl₅ |
| I.b-r89 | 4-CH₃-C₆H₄ | 4-EtO-C₆H₄ | 4-EtO-C₆H₄ | 4-CH₃-C₆H₄ | CN |
| I.b-r90 | 4-CH₃-C₆H₄ | 4-EtO-C₆H₄ | 4-EtO-C₆H₄ | 4-CH₃-C₆H₄ | C₆H₅ |
| I.b-r91 | 4-CH₃-C₆H₄ | 4-EtO-C₆H₄ | 4-EtO-C₆H₄ | 4-CH₃-C₆H₄ | H |
| I.b-r92 | 4-CH₃-C₆H₄ | 4-EtO-C₆H₄ | 4-EtO-C₆H₄ | 4-CH₃-C₆H₄ | 4-CH₃-C₆H₄ |
| I.b-r93 | 4-CH₃-C₆H₄ | 4-EtO-C₆H₄ | 4-EtO-C₆H₄ | 4-CH₃-C₆H₄ | mes |
| I.b-r94 | 4-CH₃-C₆H₄ | 4-EtO-C₆H₄ | 4-EtO-C₆H₄ | 4-CH₃-C₆H₄ | 2-Cl-C₆H₄ |
| I.b-r95 | 4-CH₃-C₆H₄ | 4-EtO-C₆H₄ | 4-EtO-C₆H₄ | 4-CH₃-C₆H₄ | 2-F-C₆H₄ |
| I.b-r96 | 4-CH₃-C₆H₄ | 4-EtO-C₆H₄ | 4-EtO-C₆H₄ | 4-CH₃-C₆H₄ | 2,6-Cl₂-C₆H₃ |
| I.b-r97 | 4-CH₃-C₆H₄ | 4-EtO-C₆H₄ | 4-EtO-C₆H₄ | 4-CH₃-C₆H₄ | 2,6-F₂-C₆H₃ |
| I.b-r98 | 4-CH₃-C₆H₄ | 4-EtO-C₆H₄ | 4-EtO-C₆H₄ | 4-CH₃-C₆H₄ | C₆F₅ |
| I.b-r99 | 4-CH₃-C₆H₄ | 4-EtO-C₆H₄ | 4-EtO-C₆H₄ | 4-CH₃-C₆H₄ | C₆Cl₅ |
| I.b-r100 | CH₃ | 4-CN-PV | 4-CN-PV | CH₃ | CN |
| I.b-r101 | CH₃ | 4-CN-PV | 4-CN-PV | CH₃ | C₆H₅ |
| I.b-r102 | CH₃ | 4-CN-PV | 4-CN-PV | CH₃ | H |
| I.b-r103 | CH₃ | 4-CN-PV | 4-CN-PV | CH₃ | 4-CH₃-C₆H₄ |
| I.b-r104 | CH₃ | 4-CN-PV | 4-CN-PV | CH₃ | mes |
| I.b-r105 | CH₃ | 4-CN-PV | 4-CN-PV | CH₃ | 2-Cl-C₆H₄ |
| I.b-r106 | CH₃ | 4-CN-PV | 4-CN-PV | CH₃ | 2-F-C₆H₄ |
| I.b-r107 | CH₃ | 4-CN-PV | 4-CN-PV | CH₃ | 2,6-Cl₂-C₆H₃ |
| I.b-r108 | CH₃ | 4-CN-PV | 4-CN-PV | CH₃ | 2,6-F₂-C₆H₃ |
| I.b-r109 | CH₃ | 4-CN-PV | 4-CN-PV | CH₃ | C₆F₅ |
| I.b-r110 | CH₃ | 4-CN-PV | 4-CN-PV | CH₃ | C₆Cl₅ |
| I.b-r111 | C₆H₅ | DIPP | DIPP | C₆H₅ | CN |
| I.b-r112 | C₆H₅ | DIPP | DIPP | C₆H₅ | C₆H₅ |
| I.b-r113 | C₆H₅ | DIPP | DIPP | C₆H₅ | H |
| I.b-r114 | C₆H₅ | DIPP | DIPP | C₆H₅ | 4-CH₃-C₆H₄ |
| I.b-r115 | C₆H₅ | DIPP | DIPP | C₆H₅ | mes |
| I.b-r116 | C₆H₅ | DIPP | DIPP | C₆H₅ | 2-Cl-C₆H₄ |
| I.b-r117 | C₆H₅ | DIPP | DIPP | C₆H₅ | 2-F-C₆H₄ |
| I.b-r118 | C₆H₅ | DIPP | DIPP | C₆H₅ | 2,6-Cl₂-C₆H₃ |
| I.b-r119 | C₆H₅ | DIPP | DIPP | C₆H₅ | 2,6-F₂-C₆H₃ |
| I.b-r120 | C₆H₅ | DIPP | DIPP | C₆H₅ | C₆F₅ |
| I.b-r121 | C₆H₅ | DIPP | DIPP | C₆H₅ | C₆Cl₅ |

| | | | | | |
|---|---|---|---|---|---|
| mes: 2,4,6-trimethylphenyl 4-MeO-C₆H_{4:} 4-methoxyphenyl 4-EtO-C₆H₄: 4-ethoxyphenyl 4-CH₃-C₆H₄: 4-methylphenyl 2-CI-C₆H₄: 2-chlorophenyl 4-CN-PV: 2-(4-cyanophenyl)vinyl 2,6-Cl₂-C₆H₃: 2,6-dichlorophenyl 2,6-F₂-C₆H₃: 2,6-difluorophenyl C₆F₅: 2,3,4,5,6-pentafluorophenyl C₆Cl₅: 2,3,4,5,6-pentachlorophenyl 2-F-C₆H₄: 2-fluorophenyl DIPP: 4-(2,6-diisopropylphenoxy)phenyl | | | | | |

**Table F**

| Compound | R2 | R3 | R4 | R5 | R^{7c} |
|---|---|---|---|---|---|
| I.c-r1 | C₆H₅ | C₆H₅ | C₆H₅ | C₆H₅ | CN |
| I.c-r2 | C₆H₅ | C₆H₅ | C₆H₅ | C₆H₅ | C₆H₅ |
| I.c-r3 | C₆H₅ | C₆H₅ | C₆H₅ | C₆H₅ | H |
| I.c-r4 | C₆H₅ | C₆H₅ | C₆H₅ | C₆H₅ | 4-CH₃-C₆H₄ |
| I.c-r5 | C₆H₅ | C₆H₅ | C₆H₅ | C₆H₅ | mes |
| I.c-r6 | C₆H₅ | C₆H₅ | C₆H₅ | C₆H₅ | 2-Cl-C₆H₄ |
| I.c-r7 | C₆H₅ | C₆H₅ | C₆H₅ | C₆H₅ | 2-F-C₆H₄ |
| I.c-r8 | C₆H₅ | C₆H₅ | C₆H₅ | C₆H₅ | 2,6-Cl₂-C₆H₃ |
| I.c-r9 | C₆H₅ | C₆H₅ | C₆H₅ | C₆H₅ | 2,6-F₂-C₆H₃ |
| I.c-r10 | C₆H₅ | C₆H₅ | C₆H₅ | C₆H₅ | C₆F₅ |
| I.c-r11 | C₆H₅ | C₆H₅ | C₆H₅ | C₆H₅ | C₆Cl₅ |
| I.c-r12 | mes | mes | mes | mes | CN |
| I.c-r13 | mes | mes | mes | mes | C₆H₅ |
| I.c-r14 | mes | mes | mes | mes | H |
| I.c-r15 | mes | mes | mes | mes | 4-CH₃-C₆H₄ |
| I.c-r16 | mes | mes | mes | mes | mes |
| I.c-r17 | mes | mes | mes | mes | 2-Cl-C₆H₄ |
| I.c-r18 | mes | mes | mes | mes | 2-F-C₆H₄ |
| I.c-r19 | mes | mes | mes | mes | 2,6-Cl₂-C₆H₃ |
| I.c-r20 | mes | mes | mes | mes | 2,6-F₂-C₆H₃ |
| I.c-r21 | mes | mes | mes | mes | C₆F₅ |
| I.c-r22 | mes | mes | mes | mes | C₆Cl₅ |
| I.c-r23 | 4-CH₃-C₆H₄ | 4-CH₃-C₆H₄ | 4-CH₃-C₆H₄ | 4-CH₃-C₆H₄ | CN |
| I.c-r24 | 4-CH₃-C₆H₄ | 4-CH₃-C₆H₄ | 4-CH₃-C₆H₄ | 4-CH₃-C₆H₄ | C₆H₅ |
| I.c-r25 | 4-CH₃-C₆H₄ | 4-CH₃-C₆H₄ | 4-CH₃-C₆H₄ | 4-CH₃-C₆H₄ | H |
| I.c-r26 | 4-CH₃-C₆H₄ | 4-CH₃-C₆H₄ | 4-CH₃-C₆H₄ | 4-CH₃-C₆H₄ | 4-CH₃-C₆H₄ |
| I.c-r27 | 4-CH₃-C₆H₄ | 4-CH₃-C₆H₄ | 4-CH₃-C₆H₄ | 4-CH₃-C₆H₄ | mes |
| I.c-r28 | 4-CH₃-C₆H₄ | 4-CH₃-C₆H₄ | 4-CH₃-C₆H₄ | 4-CH₃-C₆H₄ | 2-Cl-C₆H₄ |
| I.c-r29 | 4-CH₃-C₆H₄ | 4-CH₃-C₆H₄ | 4-CH₃-C₆H₄ | 4-CH₃-C₆H₄ | 2-F-C₆H₄ |
| I.c-r30 | 4-CH₃-C₆H₄ | 4-CH₃-C₆H₄ | 4-CH₃-C₆H₄ | 4-CH₃-C₆H₄ | 2,6-Cl₂-C₆H₃ |
| I.c-r31 | 4-CH₃-C₆H₄ | 4-CH₃-C₆H₄ | 4-CH₃-C₆H₄ | 4-CH₃-C₆H₄ | 2,6-F₂-C₆H₃ |
| I.c-r32 | 4-CH₃-C₆H₄ | 4-CH₃-C₆H₄ | 4-CH₃-C₆H₄ | 4-CH₃-C₆H₄ | C₆F₅ |
| I.c-r33 | 4-CH₃-C₆H₄ | 4-CH₃-C₆H₄ | 4-CH₃-C₆H₄ | 4-CH₃-C₆H₄ | C₆Cl₅ |
| I.c-r34 | 4-MeO-C₆H₄ | 4-MeO-C₆H₄ | 4-MeO-C₆H₄ | 4-MeO-C₆H₄ | CN |
| I.c-r35 | 4-MeO-C₆H₄ | 4-MeO-C₆H₄ | 4-MeO-C₆H₄ | 4-MeO-C₆H₄ | C₆H₅ |
| I.c-r36 | 4-MeO-C₆H₄ | 4-MeO-C₆H₄ | 4-MeO-C₆H₄ | 4-MeO-C₆H₄ | H |
| I.c-r37 | 4-MeO-C₆H₄ | 4-MeO-C₆H₄ | 4-MeO-C₆H₄ | 4-MeO-C₆H₄ | 4-CH₃-C₆H₄ |
| I.c-r38 | 4-MeO-C₆H₄ | 4-MeO-C₆H₄ | 4-MeO-C₆H₄ | 4-MeO-C₆H₄ | mes |
| I.c-r39 | 4-MeO-C₆H₄ | 4-MeO-C₆H₄ | 4-MeO-C₆H₄ | 4-MeO-C₆H₄ | 2-Cl-C₆H₄ |
| I.c-r40 | 4-MeO-C₆H₄ | 4-MeO-C₆H₄ | 4-MeO-C₆H₄ | 4-MeO-C₆H₄ | 2-F-C₆H₄ |
| I.c-r41 | 4-MeO-C₆H₄ | 4-MeO-C₆H₄ | 4-MeO-C₆H₄ | 4-MeO-C₆H₄ | 2,6-Cl₂-C₆H₃ |
| I.c-r42 | 4-MeO-C₆H₄ | 4-MeO-C₆H₄ | 4-MeO-C₆H₄ | 4-MeO-C₆H₄ | 2,6-F₂-C₆H₃ |
| I.c-r43 | 4-MeO-C₆H₄ | 4-MeO-C₆H₄ | 4-MeO-C₆H₄ | 4-MeO-C₆H₄ | C₆F₅ |
| I.c-r44 | 4-MeO-C₆H₄ | 4-MeO-C₆H₄ | 4-MeO-C₆H₄ | 4-MeO-C₆H₄ | C₆Cl₅ |
| I.c-r45 | 4-EtO-C₆H₄ | 4-EtO-C₆H₄ | 4-EtO-C₆H₄ | 4-EtO-C₆H₄ | CN |
| I.c-r46 | 4-EtO-C₆H₄ | 4-EtO-C₆H₄ | 4-EtO-C₆H₄ | 4-EtO-C₆H₄ | C₆H₅ |
| I.c-r47 | 4-EtO-C₆H₄ | 4-EtO-C₆H₄ | 4-EtO-C₆H₄ | 4-EtO-C₆H₄ | H |
| I.c-r48 | 4-EtO-C₆H₄ | 4-EtO-C₆H₄ | 4-EtO-C₆H₄ | 4-EtO-C₆H₄ | 4-CH₃-C₆H₄ |
| I.c-r49 | 4-EtO-C₆H₄ | 4-EtO-C₆H₄ | 4-EtO-C₆H₄ | 4-EtO-C₆H₄ | mes |
| I.c-r50 | 4-EtO-C₆H₄ | 4-EtO-C₆H₄ | 4-EtO-C₆H₄ | 4-EtO-C₆H₄ | 2-Cl-C₆H₄ |
| I.c-r51 | 4-EtO-C₆H₄ | 4-EtO-C₆H₄ | 4-EtO-C₆H₄ | 4-EtO-C₆H₄ | 2-F-C₆H₄ |
| I.c-r52 | 4-EtO-C₆H₄ | 4-EtO-C₆H₄ | 4-EtO-C₆H₄ | 4-EtO-C₆H₄ | 2,6-Cl₂-C₆H₃ |
| I.c-r53 | 4-EtO-C₆H₄ | 4-EtO-C₆H₄ | 4-EtO-C₆H₄ | 4-EtO-C₆H₄ | 2,6-F₂-C₆H₃ |
| I.c-r54 | 4-EtO-C₆H₄ | 4-EtO-C₆H₄ | 4-EtO-C₆H₄ | 4-EtO-C₆H₄ | C₆F₅ |
| I.c-r55 | 4-EtO-C₆H₄ | 4-EtO-C₆H₄ | 4-EtO-C₆H₄ | 4-EtO-C₆H₄ | C₆Cl₅ |
| I.c-r56 | C₆H₅ | C₆H₅ | mes | mes | CN |
| I.c-r57 | C₆H₅ | C₆H₅ | mes | mes | C₆H₅ |
| I.c-r58 | C₆H₅ | C₆H₅ | mes | mes | H |
| I.c-r59 | C₆H₅ | C₆H₅ | mes | mes | 4-CH₃-C₆H₄ |
| I.c-r60 | C₆H₅ | C₆H₅ | mes | mes | mes |
| I.c-r61 | C₆H₅ | C₆H₅ | mes | mes | 2-Cl-C₆H₄ |
| I.c-r62 | C₆H₅ | C₆H₅ | mes | mes | 2-F-C₆H₄ |
| I.c-r63 | C₆H₅ | C₆H₅ | mes | mes | 2,6-Cl₂-C₆H₃ |
| I.c-r64 | C₆H₅ | C₆H₅ | mes | mes | 2,6-F₂-C₆H₃ |
| I.c-r65 | C₆H₅ | C₆H₅ | mes | mes | C₆F₅ |
| I.c-r66 | C₆H₅ | C₆H₅ | mes | mes | C₆Cl₅ |
| I.c-r67 | 4-CH₃-C₆H₄ | 4-CH₃-C₆H₄ | C₆H₅ | C₆H₅ | CN |
| I.c-r68 | 4-CH₃-C₆H₄ | 4-CH₃-C₆H₄ | C₆H₅ | C₆H₅ | C₆H₅ |
| I.c-r69 | 4-CH₃-C₆H₄ | 4-CH₃-C₆H₄ | C₆H₅ | C₆H₅ | H |
| I.c-r70 | 4-CH₃-C₆H₄ | 4-CH₃-C₆H₄ | C₆H₅ | C₆H₅ | 4-CH₃-C₆H₄ |
| I.c-r71 | 4-CH₃-C₆H₄ | 4-CH₃-C₆H₄ | C₆H₅ | C₆H₅ | mes |
| I.c-r72 | 4-CH₃-C₆H₄ | 4-CH₃-C₆H₄ | C₆H₅ | C₆H₅ | 2-Cl-C₆H₄ |
| I.c-r73 | 4-CH₃-C₆H₄ | 4-CH₃-C₆H₄ | C₆H₅ | C₆H₅ | 2-F-C₆H₄ |
| I.c-r74 | 4-CH₃-C₆H₄ | 4-CH₃-C₆H₄ | C₆H₅ | C₆H₅ | 2,6-Cl₂-C₆H₃ |
| I.c-r75 | 4-CH₃-C₆H₄ | 4-CH₃-C₆H₄ | C₆H₅ | C₆H₅ | 2,6-F₂-C₆H₃ |
| I.c-r76 | 4-CH₃-C₆H₄ | 4-CH₃-C₆H₄ | C₆H₅ | C₆H₅ | C₆F₅ |
| I.c-r77 | 4-CH₃-C₆H₄ | 4-CH₃-C₆H₄ | C₆H₅ | C₆H₅ | C₆Cl₅ |
| I.c-r78 | C₆H₅ | 4-MeO-C₆H₄ | 4-MeO-C₆H₄ | C₆H₅ | CN |
| I.c-r79 | C₆H₅ | 4-MeO-C₆H₄ | 4-MeO-C₆H₄ | C₆H₅ | C₆H₅ |
| I.c-r80 | C₆H₅ | 4-MeO-C₆H₄ | 4-MeO-C₆H₄ | C₆H₅ | H |
| I.c-r81 | C₆H₅ | 4-MeO-C₆H₄ | 4-MeO-C₆H₄ | C₆H₅ | 4-CH₃-C₆H₄ |
| I.c-r82 | C₆H₅ | 4-MeO-C₆H₄ | 4-MeO-C₆H₄ | C₆H₅ | mes |
| I.c-r83 | C₆H₅ | 4-MeO-C₆H₄ | 4-MeO-C₆H₄ | C₆H₅ | 2-Cl-C₆H₄ |
| I.c-r84 | C₆H₅ | 4-MeO-C₆H₄ | 4-MeO-C₆H₄ | C₆H₅ | 2-F-C₆H₄ |
| I.c-r85 | C₆H₅ | 4-MeO-C₆H₄ | 4-MeO-C₆H₄ | C₆H₅ | 2,6-Cl₂-C₆H₃ |
| I.c-r86 | C₆H₅ | 4-MeO-C₆H₄ | 4-MeO-C₆H₄ | C₆H₅ | 2,6-F₂-C₆H₃ |
| I.c-r87 | C₆H₅ | 4-MeO-C₆H₄ | 4-MeO-C₆H₄ | C₆H₅ | C₆F₅ |
| I.c-r88 | C₆H₅ | 4-MeO-C₆H₄ | 4-MeO-C₆H₄ | C₆H₅ | C₆Cl₅ |
| I.c-r89 | 4-CH₃-C₆H₄ | 4-MeO-C₆H₄ | 4-MeO-C₆H₄ | 4-CH₃-C₆H₄ | CN |
| I.c-r90 | 4-CH₃-C₆H₄ | 4-MeO-C₆H₄ | 4-MeO-C₆H₄ | 4-CH₃-C₆H₄ | C₆H₅ |
| I.c-r91 | 4-CH₃-C₆H₄ | 4-MeO-C₆H₄ | 4-MeO-C₆H₄ | 4-CH₃-C₆H₄ | H |
| I.c-r92 | 4-CH₃-C₆H₄ | 4-MeO-C₆H₄ | 4-MeO-C₆H₄ | 4-CH₃-C₆H₄ | 4-CH₃-C₆H₄ |
| I.c-r93 | 4-CH₃-C₆H₄ | 4-MeO-C₆H₄ | 4-MeO-C₆H₄ | 4-CH₃-C₆H₄ | mes |
| I.c-r94 | 4-CH₃-C₆H₄ | 4-MeO-C₆H₄ | 4-MeO-C₆H₄ | 4-CH₃-C₆H₄ | 2-Cl-C₆H₄ |
| I.c-r95 | 4-CH₃-C₆H₄ | 4-MeO-C₆H₄ | 4-MeO-C₆H₄ | 4-CH₃-C₆H₄ | 2-F-C₆H₄ |
| I.c-r96 | 4-CH₃-C₆H₄ | 4-MeO-C₆H₄ | 4-MeO-C₆H₄ | 4-CH₃-C₆H₄ | 2,6-Cl₂-C₆H₃ |
| I.c-r97 | 4-CH₃-C₆H₄ | 4-MeO-C₆H₄ | 4-MeO-C₆H₄ | 4-CH₃-C₆H₄ | 2,6-F₂-C₆H₃ |
| I.c-r98 | 4-CH₃-C₆H₄ | 4-MeO-C₆H₄ | 4-MeO-C₆H₄ | 4-CH₃-C₆H₄ | C₆F₅ |
| I.c-r99 | 4-CH₃-C₆H₄ | 4-MeO-C₆H₄ | 4-MeO-C₆H₄ | 4-CH₃-C₆H₄ | C₆Cl₅ |
| I.c-r100 | C₆H₅ | 4-EtO-C₆H₄ | 4-EtO-C₆H₄ | C₆H₅ | CN |
| I.c-r101 | C₆H₅ | 4-EtO-C₆H₄ | 4-EtO-C₆H₄ | C₆H₅ | C₆H₅ |
| I.c-r102 | C₆H₅ | 4-EtO-C₆H₄ | 4-EtO-C₆H₄ | C₆H₅ | H |
| I.c-r103 | C₆H₅ | 4-EtO-C₆H₄ | 4-EtO-C₆H₄ | C₆H₅ | 4-CH₃-C₆H₄ |
| I.c-r104 | C₆H₅ | 4-EtO-C₆H₄ | 4-EtO-C₆H₄ | C₆H₅ | mes |
| I.c-r105 | C₆H₅ | 4-EtO-C₆H₄ | 4-EtO-C₆H₄ | C₆H₅ | 2-Cl-C₆H₄ |
| I.c-r106 | C₆H₅ | 4-EtO-C₆H₄ | 4-EtO-C₆H₄ | C₆H₅ | 2-F-C₆H₄ |
| I.c-r107 | C₆H₅ | 4-EtO-C₆H₄ | 4-EtO-C₆H₄ | C₆H₅ | 2,6-Cl₂-C₆H₃ |
| I.c-r108 | C₆H₅ | 4-EtO-C₆H₄ | 4-EtO-C₆H₄ | C₆H₅ | 2,6-F₂-C₆H₃ |
| I.c-r109 | C₆H₅ | 4-EtO-C₆H₄ | 4-EtO-C₆H₄ | C₆H₅ | C₆F₅ |
| I.c-r110 | C₆H₅ | 4-EtO-C₆H₄ | 4-EtO-C₆H₄ | C₆H₅ | C₆Cl₅ |
| I.c-r111 | 4-CH₃-C₆H₄ | 4-EtO-C₆H₄ | 4-EtO-C₆H₄ | 4-CH₃-C₆H₄ | CN |
| I.c-r112 | 4-CH₃-C₆H₄ | 4-EtO-C₆H₄ | 4-EtO-C₆H₄ | 4-CH₃-C₆H₄ | C₆H₅ |
| I.c-r113 | 4-CH₃-C₆H₄ | 4-EtO-C₆H₄ | 4-EtO-C₆H₄ | 4-CH₃-C₆H₄ | H |
| I.c-r114 | 4-CH₃-C₆H₄ | 4-EtO-C₆H₄ | 4-EtO-C₆H₄ | 4-CH₃-C₆H₄ | 4-CH₃-C₆H₄ |
| I.c-r115 | 4-CH₃-C₆H₄ | 4-EtO-C₆H₄ | 4-EtO-C₆H₄ | 4-CH₃-C₆H₄ | mes |
| I.c-r116 | 4-CH₃-C₆H₄ | 4-EtO-C₆H₄ | 4-EtO-C₆H₄ | 4-CH₃-C₆H₄ | 2-Cl-C₆H₄ |
| I.c-r117 | 4-CH₃-C₆H₄ | 4-EtO-C₆H₄ | 4-EtO-C₆H₄ | 4-CH₃-C₆H₄ | 2-F-C₆H₄ |
| I.c-r118 | 4-CH₃-C₆H₄ | 4-EtO-C₆H₄ | 4-EtO-C₆H₄ | 4-CH₃-C₆H₄ | 2,6-Cl₂-C₆H₃ |
| I.c-r119 | 4-CH₃-C₆H₄ | 4-EtO-C₆H₄ | 4-EtO-C₆H₄ | 4-CH₃-C₆H₄ | 2,6-F₂-C₆H₃ |
| I.c-r120 | 4-CH₃-C₆H₄ | 4-EtO-C₆H₄ | 4-EtO-C₆H₄ | 4-CH₃-C₆H₄ | C₆F₅ |
| I.c-r121 | 4-CH₃-C₆H₄ | 4-EtO-C₆H₄ | 4-EtO-C₆H₄ | 4-CH₃-C₆H₄ | C₆Cl₅ |

| | | | | | |
|---|---|---|---|---|---|
| mes: 2,4,6-trimethylphenyl 4-MeO-C₆H_{4:} 4-methoxyphenyl 4-EtO-C₆H₄: 4-ethoxyphenyl 4-CH₃-C₆H₄: 4-methylphenyl 2-Cl-C₆H₄: 2-chlorophenyl 2,6-Cl₂-C₆H₃: 2,6-dichlorophenyl 2,6-F₂-C₆H₃: 2,6-difluorophenyl C₆F₅: 2,3,4,5,6-pentafluorophenyl C₆Cl₅: 2,3,4,5,6-pentachlorophenyl 2-F-C₆H₄: 2-fluorophenyl | | | | | |

Among these compounds, in particular preference is given to those of formula (I.b), especially the green emitting compounds of formula (I.b) compiled in tables 8, 9, 10, 11, 12, 13 and 14. Likewise in particular, preference is given to the red emitting compounds of formula (I.b) compiled in tables 30, 31, 32, 33, 34 and 35.

In accordance with a particular embodiment of the invention, the at least one organic fluorescent dye is a fluorescent dye of formula (I.b) selected from the compounds (1), (2), (3), (4), (5), (6), (7), (8), (9), (10), (11), (12), (13), (14), (15), (16) (17), (18), (19), (20), (21), (22), (23), (24), (25), (26), (27), (28), (29), (30), (31), (32), (33), (34), (35), (36), (37), (38), (39) or mixtures thereof indicated below.

| Compound | R¹ | R3 | R4 | R6 | EWG1 | EWG2 | R^{7b} |
|---|---|---|---|---|---|---|---|
| (1) | CH₃ | CH₃ | CH₃ | CH₃ | CN | CN | ethyl |
| (2) | CH₃ | CH₃ | CH₃ | CH₃ | CN | CN | phenyl |
| (3) | CH₃ | CH₃ | CH₃ | CH₃ | CN | CN | 2,4,6-(CH₃)₃-C₆H₂ |
| (4) | CH₃ | CH₃ | CH₃ | CH₃ | CN | CN | 2-Cl-C₆H₄ |
| (5) | CH₃ | CH₃ | CH₃ | CH₃ | CN | CN | 2-F-C₆H₄ |
| (6) | CH₃ | CH₃ | CH₃ | CH₃ | CN | CN | 2,6-Cl₂-C₆H₃ |
| (7) | CH₃ | CH₃ | CH₃ | CH₃ | CN | CN | 2,6-F₂-C₆H₃ |
| (8) | CH₃ | CH₃ | CH₃ | CH₃ | CN | CN | C₆F₅ |
| (9) | CH₃ | CH₃ | CH₃ | CH₃ | CN | CN | C₆Cl₅ |
| (10) | phenyl | phenyl | phenyl | phenyl | CN | CN | 2,4,6-(CH₃)₃-C₆H₂ |
| (11) | phenyl | phenyl | phenyl | phenyl | CN | CN | 2-Cl-C₆H₄ |
| (12) | phenyl | phenyl | phenyl | phenyl | CN | CN | 2-F-C₆H₄ |
| (13) | phenyl | phenyl | phenyl | phenyl | CN | CN | 2,6-Cl₂-C₆H₃ |
| (14) | phenyl | phenyl | phenyl | phenyl | CN | CN | 2,6-F₂-C₆H₃ |
| (15) | phenyl | phenyl | phenyl | phenyl | CN | CN | C₆F₅ |
| (16) | phenyl | phenyl | phenyl | phenyl | CN | CN | C₆Cl₅ |
| (17) | phenyl | 4-(CH₃O)-C₆H₄ | 4-(CH₃O)-C₆H₄ | phenyl | CN | CN | 2,4,6-(CH₃)₃-C₆H₂ |
| (18) | phenyl | 4-(CH₃O)-C₆H₄ | 4-(CH₃O)-C₆H₄ | phenyl | CN | CN | 2-Cl-C₆H₄ |
| (19) | phenyl | 4-(CH₃O)-C₆H₄ | 4-(CH₃O)-C₆H₄ | phenyl | CN | CN | 2-F-C₆H₄ |
| (20) | phenyl | 4-(CH₃O)-C₆H₄ | 4-(CH₃O)-C₆H₄ | phenyl | CN | CN | 2,6-Cl₂-C₆H₃ |
| (21) | phenyl | 4-(CH₃O)-C₆H₄ | 4-(CH₃O)-C₆H₄ | phenyl | CN | CN | 2,6-F₂-C₆H₃ |
| (22) | phenyl | 4-(CH₃O)-C₆H₄ | 4-(CH₃O)-C₆H₄ | phenyl | CN | CN | C₆F₅ |
| (23) | phenyl | 4-(CH₃O)-C₆H₄ | 4-(CH₃O)-C₆H₄ | phenyl | CN | CN | C₆Cl₅ |
| (24) | methyl | 4-CN-PV | 4-CN-PV | methyl | CN | CN | phenyl |
| (25) | methyl | 4-CN-PV | 4-CN-PV | methyl | CN | CN | 2,4,6-(CH₃)₃-C₆H₂ |
| (26) | methyl | 4-CN-PV | 4-CN-PV | methyl | CN | CN | 2-Cl-C₆H₄ |
| (27) | methyl | 4-CN-PV | 4-CN-PV | methyl | CN | CN | 2-F-C₆H₄ |
| (28) | methyl | 4-CN-PV | 4-CN-PV | methyl | CN | CN | 2,6-Cl₂-C₆H₃ |
| (29) | methyl | 4-CN-PV | 4-CN-PV | methyl | CN | CN | 2,6-F₂-C₆H₃ |
| (30) | methyl | 4-CN-PV | 4-CN-PV | methyl | CN | CN | C₆F₅ |
| (31) | methyl | 4-CN-PV | 4-CN-PV | methyl | CN | CN | C₆F₅ |
| (32) | phenyl | DIPPP | DIPPP | phenyl | CN | CN | phenyl |
| (33) | phenyl | DIPPP | DIPPP | phenyl | CN | CN | 2,4,6-(CH₃)₃-C₆H₂ |
| (34) | phenyl | DIPPP | DIPPP | phenyl | CN | CN | 2-Cl-C₆H₄ |
| (35) | phenyl | DIPPP | DIPPP | phenyl | CN | CN | 2-F-C₆H₄ |
| (36) | phenyl | DIPPP | DIPPP | phenyl | CN | CN | 2,6-Cl₂-C₆H₃ |
| (37) | phenyl | DIPPP | DIPPP | phenyl | CN | CN | 2,6-F₂-C₆H₃ |
| (38) | phenyl | DIPPP | DIPPP | phenyl | CN | CN | C₆F₅ |
| (39) | phenyl | DIPPP | DIPPP | phenyl | CN | CN | C₆Cl₅ |

| | | | | | | | |
|---|---|---|---|---|---|---|---|
| mes: 2,4,6-trimethylphenyl 4-MeO-C₆H_{4:} 4-methoxyphenyl C₆F₅: 2,3,4,5,6-pentafluorophenyl 2-Cl-C₆H₄: 2-chlorophenyl 4-CN-PV: 4-cyanophenylvinyl 2,6-Cl₂-C₆H₃: 2,6-dichlorophenyl 2,6-F₂-C₆H₃: 2,6-difluorophenyl C₆Cl₅: 2,3,4,5,6-pentachlorophenyl 2-F-C₆H₄: 2-fluorophenyl DIPPP: 4-(2,6-diisopropylphenoxy)phenyl | | | | | | | |

Amongst these, more preference is given to a compound of formula (I.b), wherein R¹, R³, R⁴ and R⁶ are each methyl and R^{7b} is phenyl or mesityl.

Amongst these, more preference is given to a compound of formula (I.b), wherein R¹ and R⁶ are each phenyl, R³ and R⁴ are each 4-methoxyphenyl and R^{7b} is mesityl.

Amonst these, more preference is given to a compound of formula (I.b), wherein R¹ and R⁶ are each methyl, R³ and R⁴ are each 2-(4-cyanophenyl)vinyl and R^{7b} is mesityl.

Another aspect of the present invention are novel compounds of the formula (I.b), wherein
R¹ and R⁶ are each phenyl;
R³ and R⁴ are each 4-methoxyphenyl or 4-(2,6-diisopropylphenoxy)phenyl;
EGW1 and EWG2 are each cyano; and
R^{7b} is phenyl which is unsubstituted or substituted with 1, 2, 3, 4 or 5 radicals R¹¹ selected from EWG1, fluorine, chlorine, C₁-C₁₀-alkyl, C₁-C₁₀-alkoxy, phenyl, biphenylyl, terphenylyl or phenyl-C₁C₁₀-alkylene.

Among these, preference is given to those compounds (I.b), wherein
R¹ and R⁶ are each phenyl;
R³ and R⁴ are each 4-methoxyphenyl;
EGW1 and EWG2 are each cyano; and
R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

Among these, likewise preference is given to those compounds (I.b), wherein
R¹ and R⁶ are each phenyl;
R³ and R⁴ are each 4-(2,6-diisopropylphenoxy)phenyl;
EGW1 and EWG2 are each cyano; and
R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

Another aspect of the present invention are novel compounds of the formula (I.b), wherein
R¹, R³, R⁴ and R⁶ are each methyl;
EWG1 and EWG2 are each cyano; and
R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

Another aspect of the present invention are novel compounds of the formula (I.b), wherein
R¹ and R⁶ are each methyl;
R³ and R⁴ are each 4-cyanophenylvinyl;
EWG1 and EWG2 are each cyano; and
R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

Some of the compounds of the formulae (I.a), (I.b) and (I.c) are known in the art, for example from US 2018/0134952, US 2018/0208838 and US 2017/0247610. Compounds according to the present invention and compounds used according to the present invention which are not described in prior art can be prepared in analogy to the methods of US 2018/0134952, US 2018/0208838 and US 2017/0247610 or in analogy to the methods described below and in the experimental part of this application.

For example, the compounds of the formulae (I.a), (I.b) and (I.c) can be prepared as described below, wherein in the schemes the variables, if not stated otherwise, are as defined above. Apart from that, a skilled person will easily find suitable reaction conditions for the synthesis depicted in the schemes below by routine experiments. Further details can also be taken from the preparation examples contained herein. All reactions are typically carried out in dry glassware under inert atmosphere, especially unde argon.

Compounds of the formula (I.b), wherein EWG1 and EWG2 are each cyano can be prepared as outlined in Scheme 1.

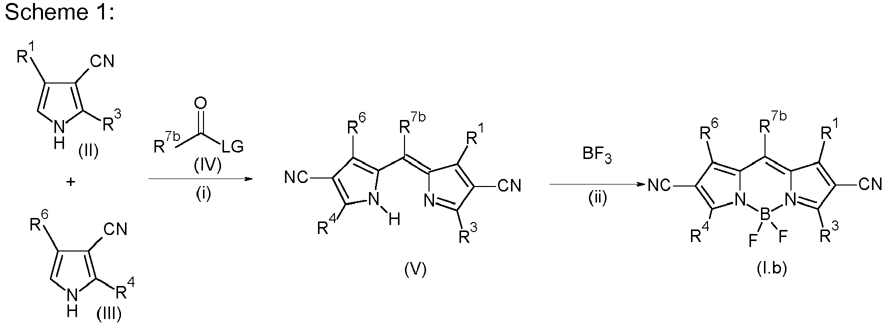

In Scheme 1, LG is a leaving group such as chloride, bromide or R'-C(=O)-O with R' being C₁-C₆-alkyl. The condensation of the activated carbonyl compound of formula (IV) with a pyrrole of formula (II) and subsequently with a pyrrole of formula (III) in step (i) of Scheme 1 yields the dipyrromethene compound of formula (V). Without wishing to be bound to any theory, it is believed that the reaction of the activated carbonyl compound of formula (IV) with the pyrrole of formula (II) affords a monoacylated pyrrole that then reacts with the pyrrole of formula (III). This monoacylated pyrrole is isolated in case the pyrrole of formula (II) is different from the pyrrole of formula (III). In step (ii) of Scheme 1, the compound of formula (V) readily complexes with a BF₃ source such as BF₃ etherate. Advantageously, the complexation is carried out in the presence of a base. Suitable bases are in particular secondary and tertiary amines, especially tertiary amines such as a tri(C₁-C₁₀-alkyl)amine, in particular triethylamine or diisopropyl ethyl amine.

The compound of formula (II) can be prepared by a condensation reaction between an alpha amino ketone of formula (VI) with an alpha cyano ketone of formula (VII) as outlined in Scheme 2.

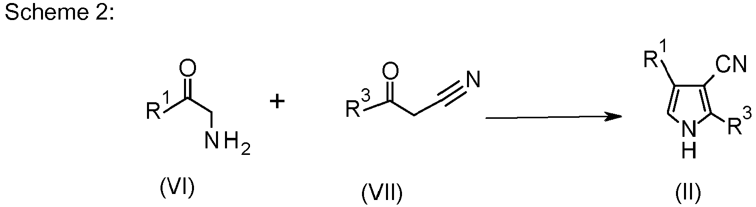

The compound of formula (III) can be prepared in an analogous manner as the compound of formula (II).

The compound of formula (VI) can be prepared as outlined in Scheme 3 below starting from a 2-oxoaldehyde of formula (VIII). The condensation reaction of the 2-oxoaldehyde of formula (VIII) with hydroxylamine affords an 2-oxoaldoxime of formula (IX). Subsequently, the compound of formula (IX) is reduced to the amine of formula (VI).

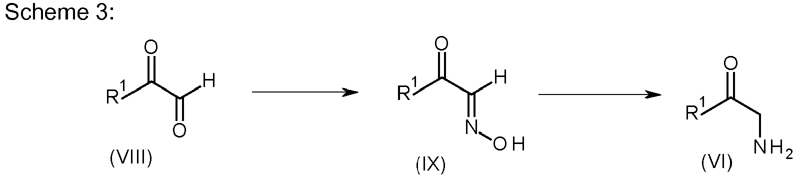

The compound of formula (VII) can be prepared as outlined in Scheme 4 below by treating an ester of formula (X) with acetonitrile in the presence of a base.

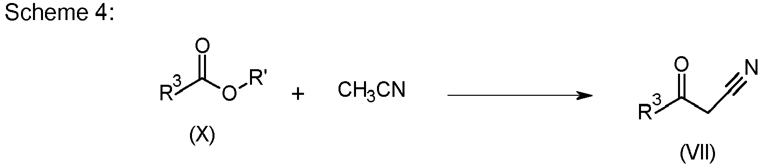

In Scheme 4, R' is C₁-C₆-alkyl, preferably C₁-C₄-alkyl.

Compounds of formula (I.c), wherein EWG1 and EWG2 are each cyano can be prepared in a similar manner as compounds of formula (I.b) but starting from a 3-cyanopyrrole compound of formula (XI), a 3-cyanopyrrole compound of formula (XII) and a compound of formula (XIII) as depicted below in Scheme 5.

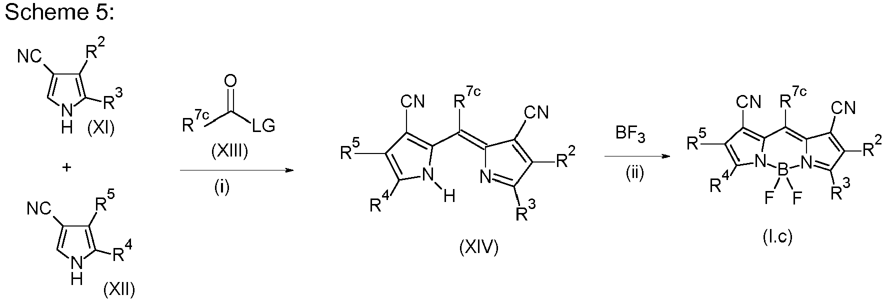

In Scheme 5, LG is chloride, bromide or R'-C(=O)-O with R' being C₁-C₆-alkyl. The condensation reaction in step (i) of Scheme 5 is carried out in analogy to step (i) in Scheme 1. The complexation in step (ii) of Scheme 5 is carried out in analogy to step (ii) in Scheme 1.

The compound of formula (XI) can be prepared as outlined below in Scheme 6. In step (i) of Scheme 6, the oxime of formula (XV) is treated with 1,2-dichloroethane in the presence of a base, such as an alkalimetal or earth alkali metal hydroxide, e.g. KOH to give a pyrrole compound of formula (XVI). N-protection of the pyrrole of formula (XVI) in step (ii) of Scheme 6 to afford an N-protected pyrrole of formula (XVII) can be performed according to a method known per se, for example using a silylating reagent such as tert-butyldimethylsilyl chloride, triisopropylsilyl chloride or tert-butyldiphenylsilyl chloride. Bromination in step (iii) of Scheme 6, followed by nucleophilic substitution of bromine with a cyanide source in step (iv) and finally deprotection in step (v) of Scheme 6 gives the pyrrole compound of formula (XI). The bromination in step (iii) of Scheme 6 can be carried out with bromine or N-bromosuccinimide. The bromination may be carried out in the presence of a base. The cyanide source in step (iv) of Scheme 6 may be copper(I) cyanide. The protection group PG can be removed in step (v) of Scheme 6 by a method known per se, for example a method described in T. Greene and P. Wuts, Protective Groups in Organic Synthesis (3rd ed.), John Wiley & Sons, NY (1999). For example, the silylprotection group can be removed by deprotecting agents selected from tetrabutyl ammonium bromide or tetrabutyl ammonium fluoride in the presence of solvent.

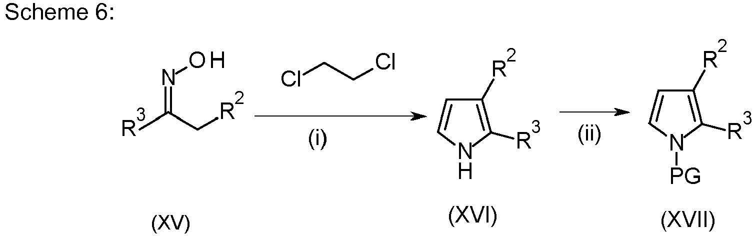

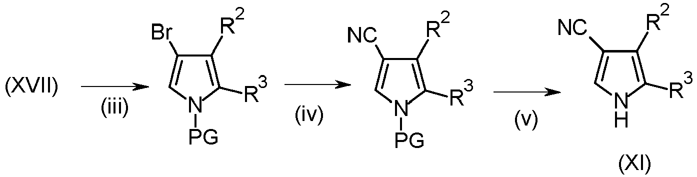

In Scheme 6, PG means a protection group, preferably a silyl protection group.

The compound of formula (XII) can be prepared in analogy to the method for preparing the compound of formula (XI) depicted in Scheme 6.

Alternatively, the compound of formula (I.b) can also be prepared by postfunctionalization of a dihalogenated boron dipyrrin of formula (XVIII) as depicted in Scheme 7 below.

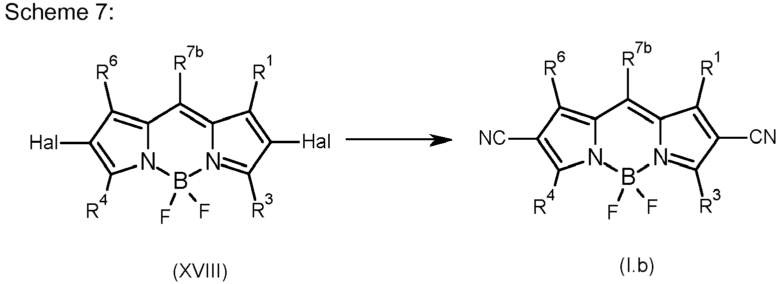

In Scheme 7, Hal is chlorine or bromine, preferably bromine. The cyanation of the compound of the formula (XVIII) with the cyanide anion is carried out in the presence of a transition metal catalyst. A suitable cyanide source is zinc cyanide. Suitable transition metal catalysts are in particular palladium catalysts such as tetrakis(triphenylphosphine)palladium(0); bis[bis-(1,2-diphenylphosphino)ethane]palladium(0); bis(dibenzylideneacetone)palladium(0); tris(dibenzylideneacetone)dipalladium(0); bis(triphenylphosphine)palladium(II) chloride; bis(acetonitrile)palladium(II) chloride; [1,1'-bis(diphenylphosphino)ferrocene]-palladium(II) chloride/methylene chloride (1:1) complex; bis(bis-(1,2-diphenylphosphino)butane]-palladium(II) chloride; palladium(II) acetate; palladium(II) chloride; and palladium(II) acetate/tri-o-tolylphosphine complex or mixtures of phosphines and Pd salts or phosphines and Pd-complexes e.g. dibenzylideneacetone-palladium and tri-tert-butylphosphine (or its tetrafluoroborate); tris(dibenzylideneacetone)dipalladium(0) and tri-tert-butylphosphine; palladium acetate and 1,2-bis(diphenylphosphino)ethane in the presence of tetramethylethylenediamine; or a polymer-bound Pd-triphenylphosphine catalyst system, e.g. tetrakistriphenyl-phosphinepalladium on polystyrene.

The reaction is usually carried out in a solvent. Suitable solvents are e.g. polar aprotic solvents, such as acetonitrile, nitrogen-containing heterocycles, N,N-disubstituted aliphatic carboxamides (preferably N,N-di(C₁-C₄-alkyl)(C₁-C₄)carboxamides) and N-alkyllactams such as dimethylformamide, diethylformamide, dimethylacetamide, dimethylbutyramide and N-methylpyrrolidone (NMP); non-polar solvents such as ether, e.g. tetrahydrofuran or 1,4-dioxane, or aromatic solvents such as benzene, toluene or xylenes.

The compound of formula (XVIII), wherein each Hal is bromine or each Hal is chlorine can be prepared as outlined in Scheme 8 below. The bromination of the compound of formula (XIX) may be carried out in analogy to step (iii) of Scheme 6. The compound of formula (XVIII), wherein each Hal is chlorine can be prepared by treating the compound of formula (XIX) with N-chlorosuccinimide.

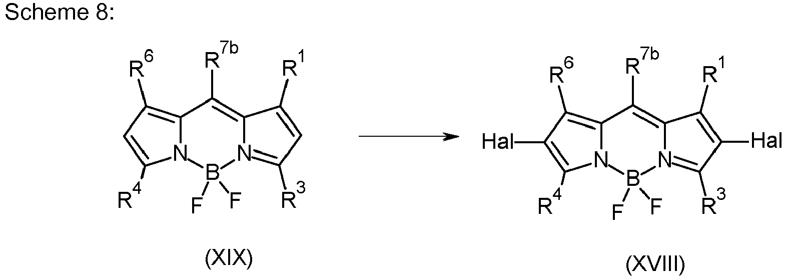

A compound of formula (I.a) can be prepared by postfunctionalization of a dihalogenated boron dipyrrin of formula (XX) with a cyanation reagent such as trimethylsilyl cyanide in the presence of a Lewis acid such as tin tetrachloride as depicted in Scheme 9 below. The cyanation can be carried out in analogy to the method described in Biorg. Med. Chem. Lett. 18 (2008), 3112-3116.

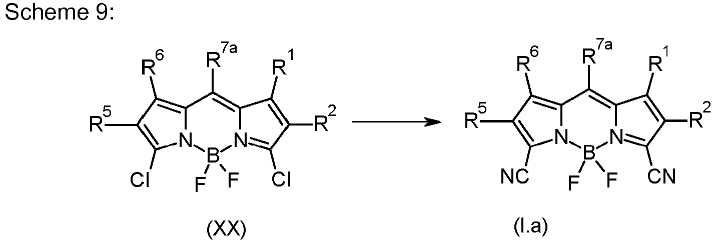

Compounds of formula (XX) can be prepared as outlined in Scheme 10. In step (i) of Scheme 10, a hemiacetal of formula (XXI) and the pyrroles of formulae (XXII) and (XXIII) are reacted under acidic conditions to afford a dipyrromethane compound of formula (XXIV). In step (ii) of Scheme 10, the dipyrromethane of formula (XXIV) is treated with a chlorination agent such as N-chlorosuccinimide in tetrahydrofuran to give a dichloropyrromethane which, in step (iii) of Scheme 10, is subsequentially treated with an oxidizing agent such as 5,6-dicyano-1,4-benzoquinone to afford a dichloro-pyrromethene compound of formula (XXV). The complexation in step (iv) of Scheme 10 is carried out in analogy to step (ii) in Scheme 1.

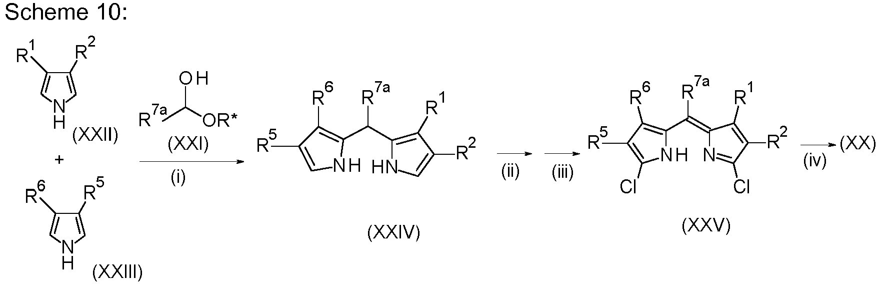

Compounds of formulae (I.a), (I.b) and (I.c), respectively, with aryl or hetaryl group attached at the meso-position may also be prepared by an acid-catalyzed condensation of an (hetero)arometic aldehyde with pyrrole compounds in question to give a dipyrromethane compound as outlined in Scheme 11 for compounds of formula (I.b) by way of example.The dipyrromethane compound is then oxidized, for example using 2,3-dichloro-5,6-dicyanobenzoquinone (DDQ) or p-chloranil to yield a dipyrromethene compound. The complexation is carried out in analogy to step (ii) in Scheme 1. A skilled person will readily appreciate that compounds of formula (I.c), where the substituent in meso position is an optionally substituted aryl or hetaryl may be prepared in an analogous manner.

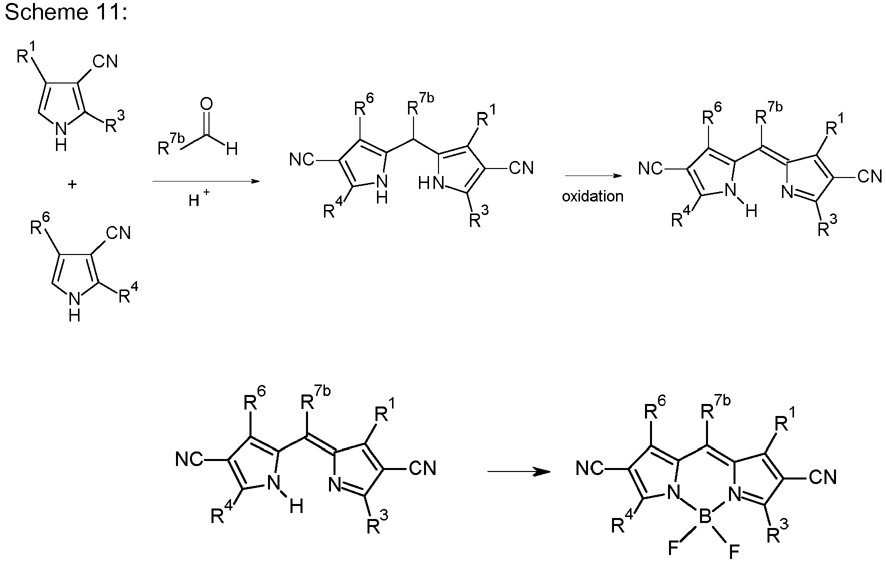

Asymmetric compounds of the formulae (I.a), (I.b) and (I.c), respectively, with meso aryl or hetaryl group, where EWG1 and EWG2 are cyano, can be pepared by condensation of an acylated pyrrole in question with a second pyrrole in question to give a dipyrromethene compound which is then subjected to a base and boron trifluoride etherate to give the title compound.

Alkenyl-substituted BODIPY dyes can be prepared by subjecting the corresponding chloro-substituted BODIPY to a Pd-catalyzed C-C coupling in the sense of a Suzuki, Heck or Sanogashira reaction.

Styryl-substituted BODIPY dyes can be prepared via a one-step Knoevenagel-type condensation reaction of methyl-substituted BODIPYs of formulae (I.a), (I.b) or (I.c) with an optionally substituted benzaldehyde in the presence of a base, especially an organic nitrogen base such as piperidine. Typically, the reaction is carried out in the presence of an acid. Suitable acids are acetic acid or p-toluene sulfonic acid. It may be advantageous to carry out the reaction under microwave radiation. It may also be advantageous to add molecular sieve to remove the resulting water of reaction. Compounds of formulae (I.a), (I.b) and (I.c), respectively, where EWG1 and EWG2 are each formyl (-CH(O)) may be prepared via Vilsmeier formylation. The functionalization of BODIPY dyes through formyl groups can be performed in analogy to the method described in literature, for example Dyes and Pigments 136 (2017) 852-858; RSC Adv., 2013,3,4793-4800.This route is exemplified for compounds of formula (I.b) in Scheme 12.

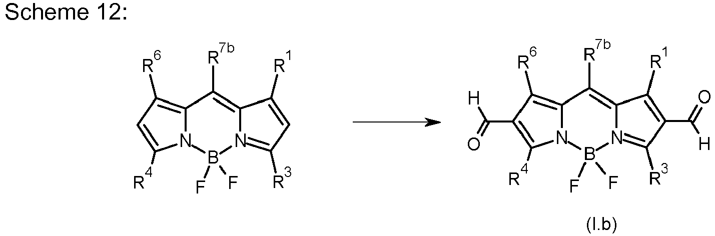

Compounds of formula (I.b), where EWG1 and EWG2 are each C(O)R¹³ may be prepared starting from pyrroles carrying a group C(O)R¹³ at the 3-position of the starting pyrrole. Said pyrole compounds are available via Knorr-pyrrole synthesis in analogy to the method described in Journal of Organic Chemistry, 2008, 73, 2146-2154.

Compounds of formulae (I.b), where EWG1 and EWG2 are each C(O)OR¹⁴ may be prepared in analogy to the method outlined in scheme 1 but using a 1H-pyrrole-3-carboxylic acid ester (XXV) instead of the cyano-substituted pyrroles (II) and (III). The ester is available by a condensation between an alpha-amino-ketone and an ester in the sense of a Knorr-pyrrole synthesis.

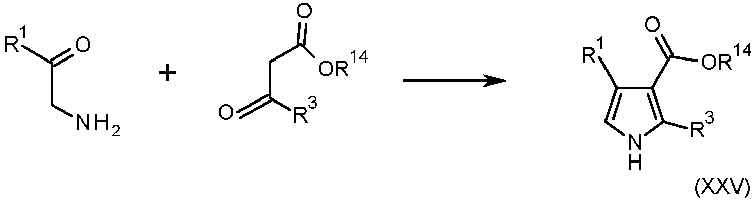

Some of the compounds (XXV) are commercially available, for example ethyl 2,4-dimethyl-1H-pyrrole-3-carboxylate.

The color converter according to the present invention preferably comprises at least one compound of formulae (I.a), (I.b), (I.c) or mixtures thereof, which emits green light in the wavelength region from 500 to 560 nm by use of excitation light. This excitation light ordinarily has a center wavelength of emission in the wavelength range from 420 to 480 nm.

Likewise preferably, the color converter according to the present invention comprises at least one compound of formulae (I.a), (I.b), (I.c) or mixtures thereof, which emits red light in the wavelength region from 595 to 700 nm, preferably 610 to 660 nm, by use of excitation light. This excitation light ordinarily has a center wavelength of emission in the wavelength range from 420 to 600 nm.

The excitation light may be generated by a blue LED, including a mini LED and a micro-LED and/or by any luminescent material included in the color converter. The luminescent material emits light in a wavelength range, where the least one compound of formulae (I.a), (I.b) and (I.c) can absorb light. Said luminescent material can be an organic fluorescent dye, for example a sensitizer that absorbs energy in the form of electromagnetic radiation and transfers the energy to the compound of formulae (I.a), (I.b) and (I.c) via a resonant energy transfer mechanism; e.g., via Forster exchange. Alternatively, the organic fluorescent dye can be any compound whose emitted photons are re-absorped by the compound of formulae (I.a), (I.b) and (I.c). Representative examples for the organic fluorescent dye include coumarin derivatives, cyanine derivatives, fluorescein derivatives, phthalocyanine derivatives, perylene derivatives, pyrromethene derivatives including the compounds of formulae (I.a), (I.b) and (I.c), stilbene derivatives, oxazine derivatives, naphthalimide derivatives, pyrazine derivaives, benzimidazole derivatives, benzoxazole derivatives, benzothiazole derivatives, imidazopyridine derivatives and azole derivatives.

More preferably, the color converter comprises a first compound of formulae (I.a), (I.b), (I.c) or mixtures thereof emitting light having a center wavelength of emission in the range from 500 to 560 nm by use of excitation light having a wavelength in the range from 420 to 480 nm; and a second compound of the formulae (I.a), (I.b), (I.c) or mixtures thereof emitting light having a center wavelength of emission in the range from 595 to 700 nm, preferably 610 to 660 nm by use of excitation light having a wavelength in the range from 420 to less than 600 nm. The first compound(s) of the formulae (I.a), (I.b) and (I.c) typcially has (have) emission spectrum in the wavelength range from 500-560 nm with a FWHM of 60 nm or less. The first compound of the formulae (I.a), (I.b),or (I.c) preferably has an emission spectrum in the wavelength range from 500-560 nm with a FWHM of 45 nm or less. More preferably, the first compound of the formulae (I.a), (I.b),or (I.c) preferably has an emission spectrum in the wavelength range from 520-540 nm with a FWHM of 45 nm or less. The second compound of formulae (I.a), (I.b), or (I.c) preferably has an emission spectrum in the range from from 610 to 660 nm with a FWHM of 90 nm or less, preferably 70 nm or less, in particular 60 nm or less. More preferably, the second compound of the formulae (I.a), (I.b),or (I.c) preferably has an emission spectrum in the wavelength range from 610-640 nm with a FWHM of 60 nm or less.

According to another embodiment of the present application, the color converter further comprises at least one light scattering agent. By using a scattering agent, higher luminance may be obtained. Suitable light scattering agents are inorganic white pigments, for example titanium dioxide, barium sulfate, lithopone, zinc oxide, zinc sulfide, calcium carbonate with a mean particle size to DIN 13320 of 0.01 to 10 µm, preferably 0.1 to 1 µm, more preferably 0.15 to 0.4 µm. These light scattering agents are included typically in an amount of 0.01 to 5.0% by weight, preferably 0.05 to 0.5% by weight, more preferably 0.1 to 0.4% by weight, based on the total polymer content of the polyethylene terephthalate matrix material comprising scattering bodies.

Examples of suitable organic light scattering agents include those based on poly(acrylates); poly (alkyl methacrylates), for example poly(methyl methacrylate) (PMMA); poly (tetrafluoroethylene) (PTFE); silicone-based scattering agents, for example hydrolyzed poly(alkyl trialkoxysilanes), and mixtures thereof. The size of these light scattering agents (average diameter-weight average) is usually in the range from 0.5 to 50 µm, prefeably 1 to 10 µm. These light scattering agents are typically included in an amount of 1 to 10% by weight, based in each case on the polymer of the layer comprising scattering bodies. Useful light scattering agents are for example a mixture of 3-5 % by weight of PMMA based scattering agent and 1.5 to 2 % by weight of silicone based scattering agent.

Also suitable are light-scattering compositions which contain polymeric particles based on vinyl acrylate with a core/shell morphology in combination with TiO₂ as described in EP-A 634 445.

According to another embodiment of the present invention, the color converter according to the embodiments described above may further comprise one or several inorganic components serving to fine-tune the optical properties of the film (e.g., refractive index) such as micronized silica.

According to another embodiment of the present application, the color converter according to the embodiments described above may comprise further additives such as flame retardants, antioxidants, light stabilizers, free-radical scavengers, singlet oxygen quenchers, antistats. Stabilizers of this kind are known to those skilled in the art.

An antioxidant refers to an agent that inhibits oxidation and thus is used to prevent the deterioration of components which are sensitive to oxidation. Suitable antioxidants or free-radical scavengers are, for example, phenols, especially sterically hindered phenols such as butylhydroxyanisole (BHA) or butylhydroxytoluene (BHT), or sterically hindered amines (HALS). Stabilizers of this kind are sold, for example, by BASF under the Irganox^{®} trade name. In some cases, antioxidants and free-radical scavengers can be supplemented by secondary stabilizers such as phosphites or phosphonites, as sold, for example, by BASF under the Irgafos^{®} trade name.

In a preferred embodiment of the invention, the color converter does not comprise any antioxidants or free-radical scavengers. In a further preferred embodiment of the invention, the color converter does not comprise any tertiary amine, catechol derivative and nickel compound.

According to a preferred embodiment, the color converter according to the present invention does not comprise any added solvent.

The color converter according to the invention comprises or consists of one or more layers comprising the polyethylene terephthalate matrix material and the least one organic fluorescent dye according to the present invention.

Advantageously, the compounds of formulae (I.a), (I.b), (I.c) are thermally stable. Therefore, the compound of formula (I.a), (I.b), (I.c) or mixtures thereof can be incorporated into the polyethylen therephthalate matrix material by extrusion, for example in an extrusion line. The extrusion line usually comprises an extruder as plastication unit, a sheet die as shaping tool, optionally a polishing stack/calender as calibration die, optionally a cooling bed and/or a roller conveyor for aftercooling, optionally a take-off roll and a separating saw. The extrusion line may be a single layer extrusion line or a multi-layer coextrusion line. The extruder can be either a single-screw, twin-screw, multi-screw extruder or planetary roller extruder. Alternatively, the extruding force may be exerted by a piston or ram (ram extrusion).Advantageously, the extrusion method is carried out in the absence of any added solvents.

The polyethylene terephthalate matrix material is preferably dried at from 130 to 180°C for 4 to 10 hours before extrusion.

In accordance with the invention, the polyethylene matrix material, the at least one organic fluorescent dye according to the invention, if present, the light scattering and, if present, the further additives as defined above, can be metered jointly or separately, into the extruder. It is also possible to meter the compound of formulae (I.a), (I.b), (I.c) or mixtures thereof via masterbatch technology. The light scattering agent may also be added via masterbatch technology, where the light scattering agent is fully dispersed in a solid carrier material. Suitable carrier materials are thermoplastics, for example polyethylene terephthalate or other polymers which are sufficiently compatible with the polyethylene terephthalate matrix material.

The polyethylene terephthalate matrix material is melted or softened in the extruder, i.e. the feed is plastified. It can be advantageous that the extruder possesses multiple separate temperature controllable heating zones. The temperature of the melt is preferably in the range from 250 to 280°C, it being possible for the temperature of the melt to be adjusted essentially through the temperature of the extruder, heating zone length, the residence time of the melt in the extruder, extruder torque and/or screw rotation speed.

The concentration of the at least one compound of the formulae (I.a), (I.b), (I.c) or mixtures thereof in the color converter according to the present invention depends on factors including absorption intensity at the excitation wavelength of the compound of the formulae (I.a), (I.b) and (I.c) and the thickness of the layer formed. If the layer is thin, the concentration of the at least one compound of the formulae (I.a), (I.b), (I.c) or mixtures thereof is generally higher than in the case of a thick layer.

The total concentration of the compound(s) of the formulae (I.a), (I.b) and (I.c) in the color converter according to the present invention is usually in the range from 0.0005 to 8% by weight, preferably 0.001 to 5% by weight, more preferably 0.001 to 1% by weight, based on the total polymer weight of the polyethylene terephthalate matrix material.

Preferably, for use in display applications, the color converter comprises the green-emitting compound of the formulae (I.a), (I.b), (I.c) or mixtures thereof and the red-emitting compound of the formulae (I.a), (I.b), (I.c) or mixtures thereof, in a weight ratio of all green-emitting compound(s) to all red-emitting compound(s) of 5:1 to 50:1.

Specially, for use in display applications, the concentration of the green-emitting compound of formulae (I.a), (I.b), (I.c) and mixtures thereof in the color converter typically is 0.005 to 5% by weight, preferably 0.01 to 4% by weight, more preferably 0.01 to 1% by weight, most preferably 0.01 to 0.5% by weight, based on the total polymer weight of the polyethylene terephthalate matrix material. Specially, for use in display applications, the concentration of the red-emitting compound of the formulae (I.a), (I.b), (I.c) and mixtures thereof in the color converter typically is 0.001 to 2% by weight, preferably 0.001 to 1% by weight, more preferably 0.002 to 0.8% by weight, most preferably 0.002 to 0.5% by weight, based on the total polymer weight of the polyethylene terephthalate matrix material.

Specially, for use in general lighting applications, the concentration of red-emitting compound of the formulae (I.a), (I.b), (I.c) and mixtures thereof in the color converter is in the range from 0.0001 to 0.5% by weight, preferably 0.001 to 0.1% by weight, based on the total polymer weight of the polyethylene terephthalate matrix material. Specially, for use in general lighting applications, the concentration of the green-emitting compound of the formulae (I.a), (I.b), (I.c) and mixtures thereof in the color converter typically is in the range from 0.001 to 0.8% by weight, preferably 0.002 to 0.6% by weight, more preferably 0.003 to 0.5% by weight, based on the total polymer content of the polyethylene terephthalate matrix material.

In a special embodiment, the color converter has a multi-layer structure. In this embodiment, one of the layers or more than one but not all of the layers or all of the layers comprise a scattering body, preferably TiO₂. Thus, it is possible in one embodiment of the present invention that the green-emitting compound(s) of the formulae (I.a), (I.b), (I.c) or mixtures thereof and the red-emitting compound(s) of the formulae (I.a), (I.b), (I.c) or mixtures thereof are present in different layers. In a further, preferred embodiment, the green-emitting compound(s) of the formulae (I.a), (I.b), (I.c) or mixtures thereof and the red-emitting compound(s) of the formulae (I.a), (I.b), (I.c) or mixtures thereof are present in the same layer.

In one embodiment of the invention, especially for use in display applications, the thickness of each layer is generally is 2 to 1000 micrometres (µm), preferably 5 to 500 µm and more preferably 10 to 350 µm. In another embodiment, especially for use in general lighting applications, the thickness of each layer comprising the fluorescent dye according to the present invention is 2 micrometer to 5 millimetres.

When the color converter consists of one layer or has a layer structure, the individual layer(s) comprising the at least one fluorescent dye according to the invention, is preferably continuous, such that light emitted by the LED must in any case pass through the polyethylene terephthalate matrix comprising the at least one compound of the formulae (I.a), (I.b), (I.c) or mixtures thereof.

The color converter may include at least one substrate layer and/or at least one barrier film layer to prevent deterioration of the color converter. The color converter according to the present invention may include at least one barrier layer against oxygen and/or water to prevent deterioration of the organic fluorescent dye used according to the present invention, as disclosed in WO 2012/152812. The barrier film layer may be provided on both sides of the color converter or the color converter is surrounded on all sides by at least one barrier layer. Suitable barrier layers may themselves have a multilayer structure. The multilayer structure can be a two-layer structure, three-layer structure, four-layer structure, five-layer structure or more than five-layer structure. Examples of suitable materials for barrier layers are, for example, polyvinyl alcohol, polyacrylonitrile, polyvinylidene chloride (PVDC), liquid crystal polymers (LCP), polystyrene-acrylonitrile (SAN), polyethylene terephtalate (PET), polyvinyl chloride (PVC), polyamides, polyoxymethylenes, polyimides, polyetherimides, epoxy resins, polymers which derive from ethylene-vinyl acetate (EVA) and polymers which derive from ethylene-vinyl alcohol (EVOH). An additional adhesive or glueing layer for adhering the barrier layer to the layer comprising the at least one fluorescent dye according to the invention may be provided. The barrier layer may also be laminated on the color layer comprising the at least one fluorescent dye according to the invention. In general, barrier layers have the geometric shape of the layer with which they are in contact. However, this is not absolutely necessary, provided that it is ensured that the barrier layer prevents the ingress of oxygen to the layer(s) comprising the at least one fluorescent dye according to the invention. In general, barrier layers have a thickness of 0.01 µm to 5 mm, preferably 0.1 µm to 1000 µm and more preferably 1 µm to 100 µm. Barrier layers of glass preferably have a thickness of 0.01 to 5000 µm and more preferably of 0.1 to 1000 µm. These layers may be combined with other layers during extrusion and/or finishing to form laminates or multilayer sheets.

In one embodiment of the present invention, the inventive color converter does not include any barrier layer. In another embodiment of the present invention, the inventive color converter includes at least one barrier layer.

The color converter according to the present invention for use in lighting devices and in backlight units is used in a remote phosphor setup. In this case, the color converter is spatially separated from the LED. Between color converter and LED may be different media such as air, noble gases, nitrogen or other gases or mixtures thereof.

When the color converter consists of one layer or has a layer structure, the individual layer(s) comprising the at least one organic fluorescent dye according to the inventionis usually a free-standing film but may also be applied on a substrate layer. In the context of the present invention, a free-standing film is a film a part of which is not in contact with a support material such as a substrate. Support layers usually serve to impart mechanical stability to the color cconverter. The type of material of the support layer is usually not crucial, provided that it is transparent and has the desired mechanical strength. Representative substrate layers are a film of plastic such as cellulose acetate, polyethylene terephthalate, polyolefin such as polyethylene and polypropylene, polymethacrylate, polymethyl methacrylate, aliphatic polyester, polyamide, aramid, polyimide, polyphenylene sulfide, polystyrene, polycarbonate and silicone. The substrate layer generally has a thickness of 5 µm to 3000 µm. In a preferred embodiment, the color converter according to the present invention does not include a substrate.

Likewise, when the color converter consists of one layer or has a layer structure, the individual layer(s) comprising the at least one organic fluorescent dye according to the inventionmay be applied on a base layer such as glasses, metal plates and foils, paper sheets an the like.

In a further preferred embodiment, the color converter according to the present invention neither includes a substrate nor a barrier layer.

In a still further embodiment, the color converter according to the present invention may include additional scattering layers or layers for thermal stability and/or for avoiding mura (avoiding clouding effects seen on screens). For example, the color converter according to the invention may be prepared by coextrusion with polycarbonate on both sides.

Owing to their narrow-band emission in the green spectral range from 500 to 560 nm, especially 510 to 540 nm with a FWHM of 60 nm or less, especially 45 nm or less, compounds of formulae (I.a), (I.b) and (I.c) are of particular interest for use in non-emissive displays. They significantly increase the color gamut of displays with RGB filters. Likewise, owing to their narrow-band emission in the red spectral range range from 595 to 700 nm, especially 610 to 660 nm with a FWHM of 90 nm or less, especially 70 nm or less, more especially 60 nm or less compounds of formulae (I.a), (I.b) and (I.c) are of particular interest for use in non-emissive displays. They also significantly increase the color gamut of displays with RGB filters.

Thus, the present invention further relates to a backlight unit, comprising
(i) a light source configured to emit light; and
(ii) at least one color converter as defined herein.

The light source in a standard LCD backlight unit (BLU) usually is a plurality of LEDs. Preferably, the LED is a blue LED having a center wavelength of emission from 400 nm to 480 nm. Suitable blue LEDs are, for example, those based on gallium nitride (GaN) or indium gallium nitride (InGaN). Current white light emitting diodes for LCD panels use a Ce:YAG down-conversion phosphor layer over a plurality of blue light emitting LED chips. These WLEDs usuaslly have a correlated color temperature between 6000 and 12000 K, preferably between 6500 and 11000 K. In particular, the light emitted from the white LED comprises wavelengths in the range from 400 to 700 nm.

The backlight unit can be an edge-lit backlight or a full-array backlight. The edge-lit backlight differs from the full-array backlight in the placement of the light sources. In an edge-lit configuration, the LEDs are assembled at the edge(s) of a rectangular light guide plate, and the light from LEDs undergoes total internal reflections at the inner surface of the light guide plate and finally get extracted through top surface of the light guide plate. The color converter faces the top side of the light guide plate. In full-array backlights, the color converter is arranged above an array of LEDs in a remote phosphor arrangement.

According to the invention, the backlight unit comprises at least one color converter as defined above.

The backlight unit may further include a reflector disposed under the light guide, a lower diffuser disposed on the light guide, a brightness enhancement film and/or a diffuser film.

According to an embodiment of the invention, the color converter does not comprise any light scattering agents.

According to a preferred embodiment of the invention, the color converter comprises inorganic or organic light scattering agents. Suitable inorganic and organic light scattering agents are those mentioned above, especially those mentioned as being preferred. Light scattering agents used in color converters for display applications usually have a diameter in the range from 5 to 500 nm.

According to the invention, the color converter is physically separated from the light source, i.e. the color converter is in a remote phosphor arrangement from the at least one light source. For use in backlight units, the distance between LED light source and the color converter may range from 0.01 to 20 mm, e.g. 0.01 to 10 mm or 0.01 to 5 mm or as 0.05 to 3.5 mm. The backlight unit is incorporated into a liquid crystal display module.

Thus, the present invention further relates to a liquid crystal display module comprising
(i) a liquid crystal panel comprising a thin film transistor (TFT) array, a liquid crystal layer, and a color filter array comprising red, green and blue color filters;
(ii) at least one of light source, and
(iii) at least one converter as defined herein.

The light source usually is a plurality of LEDs. Suitable light sources are white light-emitting diodes or blue light emitting diodes including micro LEDs and mini LEDs as defined above.

Especially, the color converter may comprise light scattering agents as defined above.

According to the invention, the color converter is physically separated from the light source, i.e. the color converter is in a remote phosphor arrangement from the light source. The distance between light source and color converter may range from 0.01 to 20 mm, e.g. 0.01 to 10 mm or 0.01 to 5 mm or 0.05 to 3.5 mm. Typically, the color converter is arranged between light source and liquid crystal panel, i.e, the color converter and the light source are part of the backlight unit as defined above. The liquid crystal display panel comprises a color filter array, a thin-film transistor (TFT) array opposite to the color filter substrate and a liquid crystal layer.

No matter, whether the liquid crystal display is configured with full array or edge-lit LED light source, the light passes through the liquid crystal layer and the color filter array sequentially.

The color filter array comprises a plurality of red, green and blue color filters, a red filter for red pixel; a green filter for green pixel and a blue filter for blue pixel. Each of the three color filters is independently operated, and the color of a single pixel is represented by one of the three colors or by a combintion of at least two of the three colors. The color filter array usually comprises a light blocking member for defining a matrix of pixel areas. The light blocking member is also referrred to as black matrix. The black matrix blocks light that is extraneous to the display that would otherwise emerge on the viewing side of substrate, and thereby reduce the overall contrast. The color filter array may additionally comprise white pixels in the array.

The liquid crystal layer comprises a plurality of liquid crystal molecules. The liquid crystal display device further comprises a pair of polarizers.

The liquid crystal display panel can be a transmissive display panel, a reflective display panel or a transflective display panel.

The liquid crystal display module described above is either a passive matrix one or an active matrix one. The active matrix liquid crystal display comprises an active drive element such as thin film transistor (TFT) or diode in each pixel element.

The active matrix LCD device can be operated according to the twisted-nematic (TN), in plane switching (IPS), vertical alignment (VA) or multi-domain vertical alignment (MVA) technology.

Advantageously, due to the use of the inventive color converter, most of the light is created in the primary wavelengths. Thus, less energy is wasted, since less light is filtered out compared to LED backlights of prior art. The LCD device according to the invention produces concentrated peaks in the primary wavelengths green and/or red which can be mixed to create a larger color gamut with more natural, vivid colors.

Additionally, in some embodiments, the liquid crystal display module may be provided in conjunction with a touch-sensitive display element.

In a further aspect, the present invention relates to a device selected from a stationary visual display device; mobile visual display device and illumination device comprising the color converter as defined above. Stationary visual display units are, for example, visual display units of computers, televisions, visual display units in printers, kitchen appliances and advertising panels, illuminations and information panels. Mobile visual display units are, for example, visual display units in smart phones, laptops, tablet PCs, digital cameras, mp-3 players, vehicles, and destination displays on buses and trains.

In a further aspect the present invention relates to a television device comprising the display device as defined above.

A further aspect of the present invention relates to a lighting device (illumination device) comprising at least one color converter as defined herein above.

Especially, the present invention relates to a lighting device comprising
(i) at least one LED selected from the group consisting of a blue LED with a center wavelength of emission from 400 nm to 480 nm and a white LED having a correlated color temperature between 3 000 K and 20 000 K; and
(ii) at least one color converter as defined herein above;
wherein the color converter is in a remote arrangement from the at least one LED, i.e. the color converter is spatially separated from the LED.

In one embodiment, inventive lighting devices comprise exactly one LED. In a preferred embodiment, inventive lighting devices comprise a plurality of LEDs. In one embodiment, inventive lighting devices comprise a plurality of LEDs, all of which are blue. In another embodiment, inventive lighting devices comprise several LEDs, at least one LED being blue and at least one LED not being blue, but rather emitting light in another color.

For use in general lightings, the distance between LED and color converter is usually larger than 0.1 mm, such as 0.2 mm or more, and in some embodiments equal to or larger than 0.1 to 10 cm such as 0.3 to 5 cm or 0.5 to 3 cm.

In general, the type of LED used is not crucial for the inventive lighting devices. In a preferred embodiment, the power density of the blue LED light impinging the surface of the converter is usually less than 200 mW/cm², preferably less than 120 mW/cm², more preferably less than 80 mW/cm². The use of LEDs of higher power densities, such as 150 or 200 mW/cm², is likewise possible.

The color converter may, for example, be arranged concentrically around the LED or have a planar geometry. It may take the form, for example, of a plaque, sheet or film, be in droplet form or take the form of a casting.

Inventive lighting devices are suitable for lighting in interiors, outdoors, of offices, of vehicles, in torches, games consoles, streetlights, traffic signs.

Inventive lighting devices exhibit excellent optical performances with a high luminous efficacy. They exhibit warm-tone white light at a CCT below 4000 K, especially below 3500 K, with high average color rendering index of greater 90, preferably at least 92 and especially at least 95; a high R9 value of greater than 60, preferably at least 70 and especially at least 75; together with a high luminous efficacy greater 80 lumen/watt.

The invention is illustrated in detail by the examples described hereinafter.

### EXAMPLES

Abbreviations used: conc. means concentration; ex. means example; FQY means fluorescence quantum yield; PC means polycarbonate; PET means polyethylene terephthalate; Rf means retention factor; TLC means thin layer chromatography

### I. Preparation of compounds of formula (I.b)

All experiments were carried out in dry glassware under argon

### Example 1: Compound of formula (I.b), wherein EWG1 = EWG2 = CN; R¹, R³, R⁴ and R⁶ are each methyl; and R^{7b} is ethyl

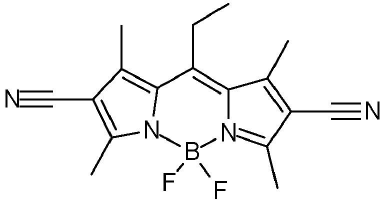

### 1.1 Preparation of

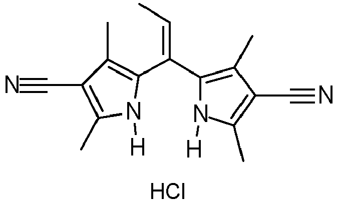

The title compound was prepared according to Heteroatom Chemistry Vol 5, No 4, 1994 403-407

### 1.2 Preparation of

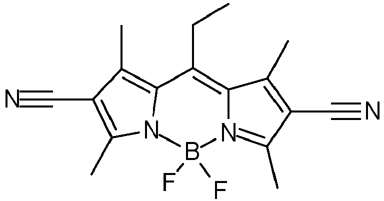

A mixture of 1.96 g (0.0074 mol) of the above mentioned dipyrromethene from example 1.1, 525 mL of toluene, 8.4 g (0.065 mol) of N-ethyl-N,N-diisopropylamine and 13.2 g (0.089 mol) of boron trifluoride diethyletherate was heated to 75°C for two hours. Afterwards the mixture was cooled to room temperature. The mixture was washed four times with 500 mL of water. The toluene phase was concentrated in vacuo and subjected to column chromatography using dichloromethane as solvent. 589 mg (25 %) of a red compound was isolated with an HPLC purity of 99.6%. According to DSC (glass) the onset of decomposition is 286°C.

### Example 2: Compound of formula (I.b), wherein EWG1 = EWG2 = CN; R¹ = R⁶ = phenyl; R³ = R⁴ are each 4-methoxyphenyl; and R^{7b} is 2,4,6-trimethylphenyl

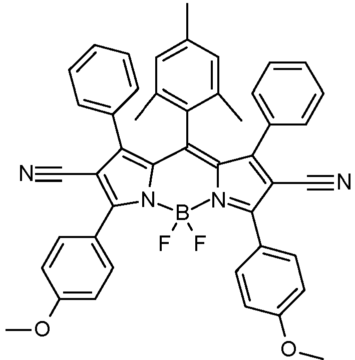

### 2.1 Preparation of

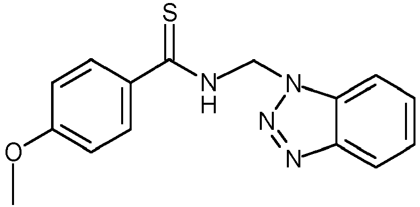

The reaction was carried out analogous to A.R. Katritzky, J. Org. Chem. 2000, 65, 8819-8821.

A mixture of 12.5 g (71 mmol) 4-methoxythiobenzamide, 10.81 g (71 mmol) of 1-H-benzotriazol-1-methanol, 200 mL of toluene and 68 mg (0.35 mmol) of paratoluenesulfonic acid were heated to reflux for 19 hours. The formed water was stripped out during the reaction. The reaction mixture was cooled to room temperature, 100 mL of cyclohexane were added and the precipitate was collected by filtration, washed three times with 10 mL of cyclohexane. The product was purified by column chromatography on silica using ethyl acetate and dichloromethane as eluent. 12.05 g (57%) of yellow solid were obtained.

Rf (CH₂Cl₂ ethyl acetate 5:1) = 0.53

### 2.2 Preparation of

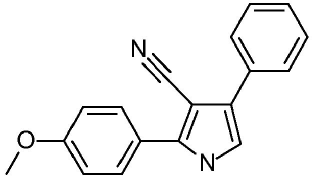

The reaction was carried out analogous to A.R. Katritzky, J. Org. Chem. 2000, 65, 8819-8821. A mixture of 3.00 g (10.1 mmol) of the compound from 2.1 in 70 mL of THF and 1.57 g (11.1 mmol) of methyl iodide were cooled to 0°C. Then 1.27 (11 mmol) g of potassium tert.-butylate were added in 8 mL of THF within 10 minutes. The yellow solution turns into a yellow suspension. 1.46 g (11.1 mmol) trans cinnamyl nitrile were added after 10 minutes of stirring. 3.42 g (30 mmol) of potassium tert.-butylate dissolved in 12 mL of THF were added within 10 minutes. The mixture was stirred for 5 minutes at 0°C, afterwards it was heated to reflux for 60 minutes. Afterwards the reaction mixture was cooled to room temperature. The solvent was evaporated under vacuo and the residue taken up in a mixture of dichloromethane and water. The precipitate is insoluble in dichloromethane and can be filtered, washed with dichloromethane and water. 1.33 g (48%) of a white solid were obtained.

Rf = 0.86 (CH₂Cl₂: ethyl acetate = 10:1)

### 2.3 Preparation of

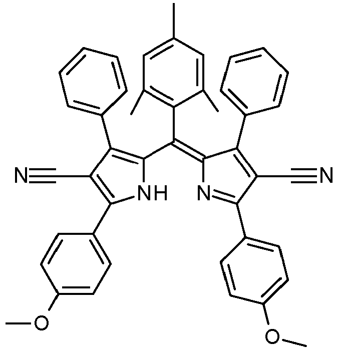

A mixture of 0.65 g (2.4 mmol) of the above mentioned compound from 2.2 was dissolved in 30 mL of dichloroethane. Afterwards 0.18 g (1.19 mmol) of mesitaldehyde and 1.1 mL of (14.2 mmol) of trifluoric acid were added. The mixture was heated to reflux and stirred at reflux for 4 hours. The mixture was cooled to room temperature. Afterwards 0.36 g (1.54 mmol) of dichlorodicyanobenzoquinone were added and the mixture was stirred for 5 minutes turning to a dark green color. The mixture was diluted with dichloromethane, the washed with aqueous NaHCO₃ solution, hydrochloric acid, water and dried with Mg SO₄. The solvent was evaporated under reduced pressure. 0.72 g (90%) of a red solid were obtained.

Rf (CH₂Cl₂) = 0.49

### 2.4 Preparation of

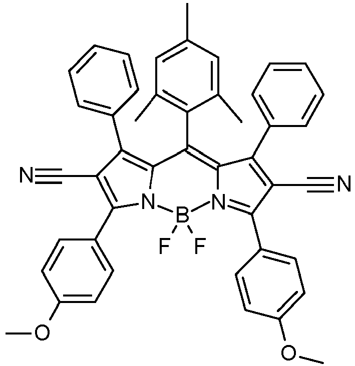

To a mixture of 0.79 g (1.2 mmol) of the above mentioned compound from 2.3, 0.84 g (6.42 mmol) of N,N-diisopropylethylamine dissolved in 40 mL of dichloroethane were added at room temperature and 1.82 g (12.84 mmol) of boron trifluoride etherate. The mixture was stirred at room temperature for 10 minutes and the reaction mixture diluted with dichloromethane. The solution was washed with NaHCO₃ solution, with hydrochloric acid and dried with Mg SO₄. The solvent was evaporated under reduced pressure and the residue was purified by column chromatography using cyclohexane ethyl acetate as eluent. 0.67 g (79%) of a red solid were obtained.

Rf (cyclohexane ethyl acetate 2:1) = 0.55.

### Example 3: Compound of formula (I.b), wherein EWG1 = EWG2 = CN; R¹ = R³ = R⁴ = CH₃; and R^{7b} is 2, 6-dichlorophenyl

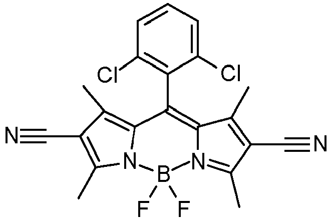

### 3.1 Preparation of potassium salt of 3-oxobutane-1-nitrile

A mixture of 4.40 g (50 mmol) of ethyl acetate, 12.46 g (60 mmol) of acetonitrile, 100 mL of THF and 6.73 g (60 mmol) of potassium tert.-butylate was stirred at room temperature for 18 hours. The suspension was used as obtained.

### 3.2 Preparation of 1-oximoacetone

A mixture of 9.0 g (40% in H₂O, 50 ml) of methylglyoxale and 3.47 g (50 mmol) hydrox-ylaminehydrochloride was stirred at room temperature for 18 hours. The solution was used as obtained

### 3.3 Preparation of 2,4-dimethyl-1H-pyrrole-3-carbonitrile

6.54 g zinc were activated using 30 g of acetic acid and 10 mL of water. The above prepared solutions from 3.1 and 3.2 were simultaneously added to this mixture within 2 hours and the mixture heated to 50°C for two further hours. The mixture was filtered; THF was evaporated under reduced pressure. The product was isolated by extraction with dichloromethane and purification using column chromatography. 2.13 g (13%) of a white solid were isolated.

Rf(toluene ethyl acetate 10:1) = 0.27

### 3.4 Preparation of

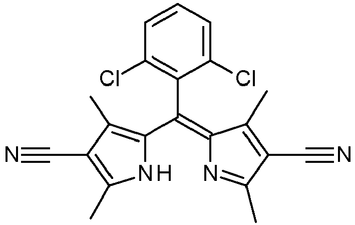

A mixture of 7.56 g (63 mmol) of the above mentioned pyrrole from 3.3, 5.25 g (30 mmol) of 2,6-dichlorobenzaldehyde, 600 mL of dichloromethane and 30 mL of trifluoroacetic acid were stirred for 20 hours at room temperature. A compound with Rf (CH₂Cl₂) = 0.25 was formed. Then 8.88 g (39 mmol) of dichlorodicyanobenzoquinone were added and the mixture stirred at room temperature for 2 hours. Water was added and phases were separated. The aqueous phase was extracted with dichloromethane and the combined organic phases were washed with water and the solvent was removed under reduced pressure. 13 g (quant.) of the title compound were isolated and used without further purification.

Rf(CH₂Cl₂) = 0.55

### 3.5 Preparation of

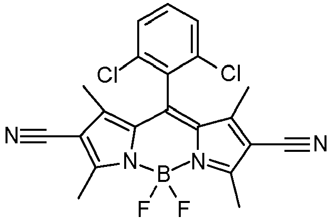

A mixture of 300 mL of toluene, 1.28 g (3.3 mmol) of the above compound from 3.4, 6.72 g (56.4 mmol) of ethyl-diisopropylamine (Hünig's base) was stirred at room 5temperature for 10 minutes. Then 7.66 g (51.5 mmol) of boron trifluoride etherate were added and the mixture heated to 30°C for 1 hour. The reaction mixture was afterwards three times washed with water. The solvent was evaporated and the residue subjected to column chromatography using silica and dichloromethane as eluent. 688 mg (47 %) of a red solid were obtained.

Rf(CH₂Cl₂) = 0.6

### Example 4: Compound of formula (I.b), wherein EWG1 = EWG2 = CN; R¹ = R³ = R⁴ = CH₃; and R^{7b} is phenyl

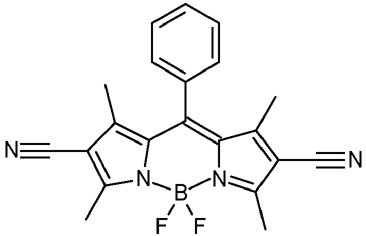

The title compound was prepared in analogy to the method described in example 3 but using benzaldehyde instead of 2,6-dichlorobenzaldehyde.

Rf (dichlorometane)= 0.42

### Example 5: Compound of formula (I.b), wherein EWG1 = EWG2 = CN; R¹ = R³ = R⁴ = CH₃; and R^{7b} is 2,4,6-trimethylphenyl

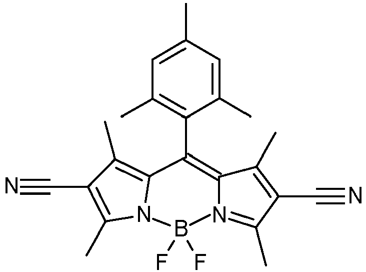

The title compound was prepared in analogy to the method described in example 3 but using mesitylaldehyde instead of 2,6-dichlorobenzaldehyde.

Rf (dichlorometane)= 0.62

### Example 6: Compound of formula (I.b), wherein EWG1 = EWG2 = CN; R¹ = R³ = R⁴ = phenyl; and R^{7b} is 2,4,6-trimethylphenyl (mesityl)

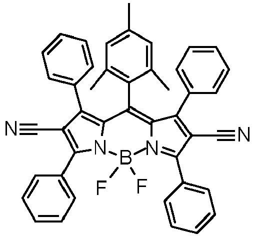

The compound was prepared in analogy to the method described in example 2 but using benzenecarbothioamide instead of 4-methoxythiobenzamide in step 1.

Rf(cyclohexane : ethyl acetate 3:1)= 0.44

### Example 7: Compound of formula (I.b), wherein EWG1 = EWG2 = CN; R¹ = R³ = R⁴ = phenyl; and R^{7b} is 2,3,4,5,6-pentafluorphenyl

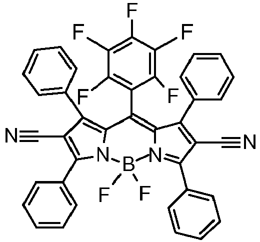

The title compound was prepared in analogy to the method described in example 6 but using pentafluorobenzaldehyde instead of mesitylaldehyde.

Rf(cyclohexane: ethyl acetate 2:1)= 0.64

### Example 8: Compound of formula (I.b), wherein EWG1 = EWG2 = CN; R¹ = R³ = R⁴ = methyl; and R^{7b} is 2-chlorophenyl

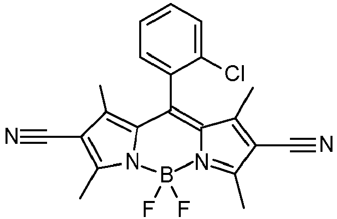

The title compound was prepared in analogy to the method described in example 3 but using 2-chlorobenzaldehyde instead of 2,6-dichlorobenzaldehyde in step 4.

Rf(CH₂Cl₂) = 0.48

### Example 9: Compound of formula (I.b), wherein EWG1 = EWG2 = CN; R¹ = R⁶ = CH₃; R³ = R⁴ = 2-(4-cyanophenyl)vinyl and R^{7b} is 2,4,6-trimethylphenyl

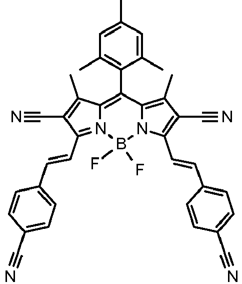

The compound from Example 5 (200 mg, 0.48 mmol), 4-cyanobenzaldehyde (161 mg, 1.2 mmol), piperidine (410 mg, 4.8 mmol) and p-toluenesulfonic acid hydrate (7 mg, 0.04 mmol) in 15 mL of toluene were stirred under reflux for 1.5 h. After cooling to room temperature, the reaction mixture was diluted with ethyl acetate. The reaction mixture was washed with water and saturated saline solution. The resultant organic phase was dried over MgSO₄ and concentrated. The crude title compound was purified by silica gel chromatography (cyclohexane/ethyl acetate gradient) to obtain the title compound (2 mg, 0.6 %) as purple solid. TLC (cyclohexane / dichlormethane 2:1) Rf = 0.53.

### Example 10: Compound of formula (I.b), wherein EWG1 = EWG2 = CN; R¹ = R⁶ = phenyl; R³ = R⁴ = 2-(4-cyanophenyl)vinyl and R^{7b} is 2,4,6-trimethylphenyl

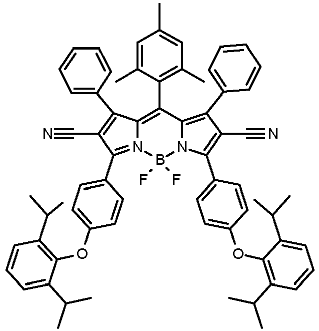

### 10.1 Preparation of 4-(2,6-diisopropylphenoxy)benzonitrile

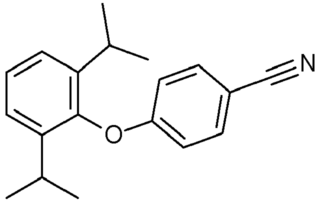

2,6-Diisopropylphenol (10.0 g, 54.4 mmol), 4-fluorobenzonitrile (6.59 g, 54.4 mmol) and K₂CO₃ (8.27 g, 59.9 mmol) in 100 mL of dimethylformamide (DMF) were stirred for 2.5 h at 120 °C (TLC control). After cooling to room temperature, the reaction mixture was poured onto water (900 mL) and extracted with methyl tert-butyl ether (3 × 200 mL). The organic phase was concentrated. The obtained crude product (15.5 g) was purified by silica gel chromatography (cyclohexane/dichloromethane gradient) to obtain the title compound (purity: 95%; 8.09 g, yield: 50.6 %) as yellow oil. TLC (cyclohexane/ dichlormethane 2:1) Rf = 0.40.

### 10.2 4-(2,6-Diisopropylphenoxy)benzamide

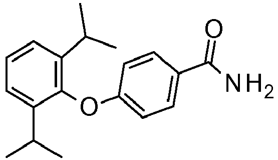

The reaction was carried out in analogy to T. D. Penning et al., J. Med. Chem. 2002, 45, 3482-3490). To a suspension of 4-(2,6-diisopropylphenoxy)benzonitrile (7.60 g, 27 mmol) in *tert*-butanol (60 ml) was added 30 mL of dimethysulfoxide and powdered KOH (6.61 g, 100 mmol). The mixture was stirred and refluxed for 45 minutes (TLC control), followed by cooling to room temperature and poured into 350 mL of water. The obtained precipitate was filtered, washed with water (3 × 15 ml) and dried to obtain the title compound (7.5 g, 93 %) as yellowish solid. TLC (dichlormethane / ethyl acetate 9:1) Rf = 0.17.

### 10.3 N-(Benzotriazol-1-ylmethyl)-4-(2,6-diisopropylphenoxy)benzamide

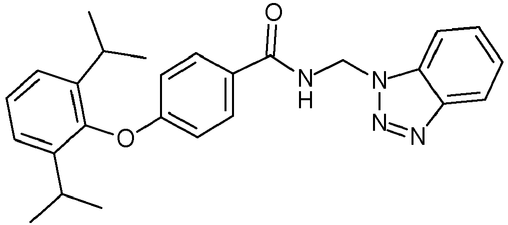

A suspension of 4-(2,6-diisopropylphenoxy)benzamide (4.0 g, 13.5 mmol), 1H-benzotriazol-1-methanol (2.05 g, 13.5 mmol) in toluene (30 mL) with a catalytic amount of p-toluenesulfonic acid (13 mg, 0.1 mmol) was heated under reflux for 4 hours while stirring (TLC control). The water formed was stripped out. After cooling, the obtained precipitate was filtered, washed with toluene (3 × 5 mL) and n-pentane (3 × 10 mL) and dried to obtain the title compound (5.5 g, 95 %) as white solid.

TLC (dichlormethane / ethyl acetate 9:1) Rf = 0.56.

### 10.4 N-(Benzotriazol-1-ylmethyl)-4-(2,6-diisopropylphenoxy)benzenecarbothioamide

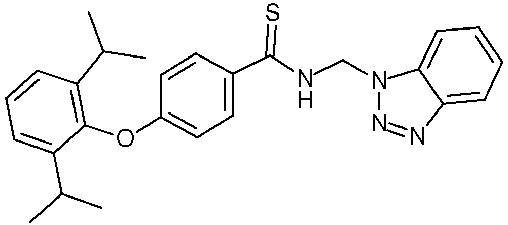

To a suspension of N-(benzotriazol-1-ylmethyl)-4-(2,6-diisopropylphenoxy)benzamide) in toluene (50 mL) was added Lawesson's reagent (2.32 g, 5.7 mmol). The mixture was stirred for 3 h at 90 °C (TLC control), and then cooled. The obtained precipitate was filtered and the obtained solution concentrated. The crude product was purified by silica gel chromatography. (dichloromethane / ethyl acetate gradient) to obtain the title compound (3.57 g, 84 %) as yellow solid. TLC (dichloromethane / ethyl acetate 9:1) Rf = 0.79.

### 10.5 2-[4-(2,6-Diisopropylphenoxy)phenyl]-4-phenyl-1H-pyrrole-3-carbonitrile

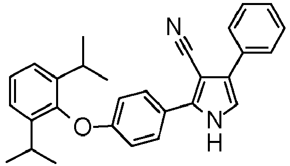

The reaction was carried out in analogy to A. R. Katritzky et al., J. Org. Chem. 2000, 65, 8819-8821). To a solution of N-(Benzotriazol-1-ylmethyl)-4-(2,6-diisopropyl-phenoxy)benzenecarbothioamide (3.71 g, 8.3 mmol) und iodomethane (1.3 g, 9.2 mmol) in tetrahydrofuran (40 mL) was added a solution of *t*-BuOK (5.6 mL, 20 % strength in tetrahydrofuran, 9.2 mmol) during 5 minutes at 0°C. The mixture was stirred for further 10 minutes at 0°C (TLC control). Then, (E)-3-phenylprop-2-enenitrile (1.21 g, 9.2 mmol) was added and further *t*-BuOK (15.4 mL 20 %strength in tetrahydrofuran, 29 mmol) was added at 0 °C within 5 minutes. The reaction mixture was stirred at 0°C for additional 5 minutes and then refluxed for 30 minutes (TLC control). The solvent was removed, and the residue taken up in toluene (40 mL), washed with water, dried with MgSO₄ and concentrated. The crude product was purified by silica gel chromatography (cyclohexane / dichlormethane, gradient) to obtain the title compound (1.82 g, 50 %) as light beige solid, TLC (cyclohexane / ethyl acetate 2:1) Rf = 0.55, and 5-[4-(2,6-diisopropylphenoxy)phenyl]-4-phenyl-1H-pyrrole-3-carbonitrile (0.93 g, 25 %) as light beige solid, TLC (cyclohexane / ethyl acetate 2:1) Rf = 0.35.

### 10.6 Preparation of

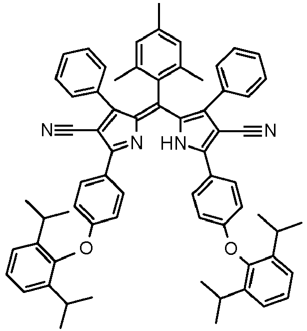

The apparatus was heated and cooled under argon. A solution of 2-[4-(2,6-diisopropylphenoxy)phenyl]-4-phenyl-1H-pyrrole-3-carbonitrile (1.0 g, 2.4 mmol), mesityl aldehyde (0.18 g, 1.2 mmol), trifluoroacetic acid (1.1 mL and acetic anhydride (0.7 mL) in 1,2-dichloroethane (40 mL) was refluxed for 30 minutes while stirring (TLC control) and then cooled. Then, dichlorodicyanobenzochinone (0.36 g, 1.5 mmol) was added at room temperature and the mixture was stirred for 10 minutes (TLC control). The reaction mixture was diluted with dichloromethane (50 mL) and extracted with water, sat. aqueous solution of NaHCO₃ and 0.5M HCI (each 1 × 40 mL), then washed with saturated saline solution and dried with MgSO₄. After concentration, the crude title compound (1.27 g 100 %) in a purity of 91% was obtained as violet solid.

TLC (cyclohexane / ethyl acetate 2:1) Rf = 0.87.

### 10.7 Preparation of

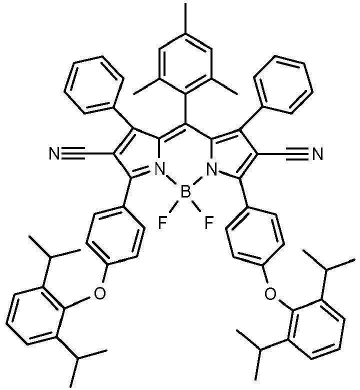

The title compound was obtained in analogy to the method described in example 2.3 but using the compound from 10.6 as starting material. The obtained crude product was purified by silica gel chromatography (cyclohexane / dichlormethane gradient). The obtained fractions were concentrated, taken up in isopropanol (20 mL). The title product was precipitated again by slow addition of water (10 mL) to obtain the title compound (0.66 g, 55 %) as dark violet solid, TLC (cyclohexane / e 2:1) Rf = 0.75.

### II Preparation of color converters

### II.1 By extrusion

### Equipments

| | |
|---|---|
| Mixing | Roller rack |
| Extruder | Twin Screw 16mm / 36 D, Dr.Collin GmbH |
| Granulator | Granulator, Scheer, Stuttgart |
| Foils | Teach-Line Extruder + Chill-Roll, Dr.Collin GmbH |

### Test procedure

| | |
|---|---|
| Polymer | polyethylene terephthalate, PET Terez 3200, from TER HELL PLASTIC GMBH |
| Pre-drying | 150°C for 8 hours |
| Mixing | polymer + Dye 20 min Turbula Fuchs |
| Extrusion | at 260°C max. (cold, 150°,250°, 260°, 260°, 260°and 260°C) |
| Drying | 150°C for 8 hours |
| Foils | Teach-Line Extruder 20 mm / 25D |
| | at 280°C max. (cold, 260°,275°, 280°, 280°, 280°and 280°C) |
| | Slot nozzle 150 mm width |
| | Temperature 280°C |
| | Chill-Roll |
| | Roll temperatures 75°C |

The fluorescent dye used according to the invention was used to produce a color converter by extrusion. For this purpose, the compound of example 1 was incorporated into a matrix composed of polyethylene terephthalate (PET Terez 3200 from TER HELL PLASTIC GMBH) as described above.

For comparison purpose, the procedure was repeated but using the compound C1 instead of the compound of example 1.

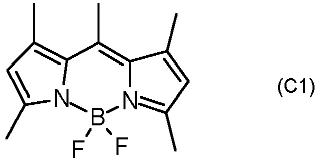

Compound C1 degrades/decomposes during extrusion.

In addition, a color converter film comprising a compound according to the invention and TiO₂ were prepared in analogous manner. The concentration of the compound according to the invention was 0.01% by weight and the concentration of TiO₂ was 0.36% by weight for each film.

### 11.2 By solution processing (for comparison purposes)

Materials used:
Polymer 1: polycarbonate (PC, Macrolon^{®} 2808 from Bayer),
Polymer 2: homopolymer of methyl methacrylate having a Vicat softening temperature of 96°C to DIN EN ISO 306, (PMMA, Plexiglas^{®} 6N from Evonik)
Polymer 3: homopolymer of styrene having a density of 1048 kg/m³ and a Vicat softening temperature of 98°C to DIN EN ISO 306 (PS 168 N from Styrolution)

For comparison purpose solution processed films were produced. For this purpose, the compound according to the invention in question was incorporated as described hereinafter into a matrix composed of polymer in 1, 2 and 3, respectively.

About 2.5 g of polymer 1, 2 or 3 and 0.01% by weight of the dye in question were dissolved in about 5 mL of methylene chloride, and 0.36% by weight of TiO₂ (Kronos 2233) were dispersed therein. The solution/dispersion obtained was coated onto a glass surface using a doctor blade with a wet film thickness of 400 µm. After the solvent had dried off, the film was detached from the glass and dried in a vacuum drying cabinet at 50°C overnight. Two circular film pieces having a diameter of 15 mm were punched out of each film of thickness 67 µm, and these served as analysis samples.

Fluorescence quantum yields (FQY) of the analysis samples were measured with the C9920-02 quantum yield measuring system (from Hamamatsu). This was done by illuminating each of the samples with light of 470 nm in an integration sphere (Ulbricht sphere). By comparison with the reference measurement in the Ulbricht sphere without sample, the unabsorbed fraction of the excitation light and the fluorescent light emitted by the sample are determined by means of a CCD spectrometer. Integration of the intensities over the spectrum of the unabsorbed excitation light or over that of the emitted fluorescent light gives the degree of absorption or fluorescence intensity or fluorescence quantum yield of each sample.

### Results of fluorescence quantum yield (FQY) measurements:

Compound of example 1:
   extruded PET-film: Emission Amax : 523 nm; emission, FWHM: 33 nm; FQY: 86%;
   solution-processed PC-film: FQY: 89%.
Comparison compound C1:
   extruded PET-film: Emission Amax : 527 nm; emission, FWHM: 40 nm; FQY: 30%;
   solution-processed PC-matrix: FQY: 90%.

Surprisingly, the compound of example 1 does not degrade or decompose during extrusion. In contrast thereto, the comparison compound C1 decomposes/degrades during extrusion as evidenced by the low fluorescence quantum yield.

The results for the green emitting compounds of examples 1, 3, 4, 5 and 8, respectively, in PET in a layer having a thickness of 70 µm are compiled below in Table I.

**Table I: Concentration of the green-emitting compound: 0.01% by weight, concentration of TiO₂: 0.36% by weight**

| PET | compound of ex. 1 | compound of ex. 3 | compound of ex. 4 | compound of ex. 5 | compound of ex. 8 |
|---|---|---|---|---|---|
| FQY | 86% | 89% | 88% | 91% | 91% |
| FWHM | 34 nm | 34 nm | 30 nm | 31 nm | 33 nm |
| Emission Amax | 523 nm | 540 nm | 527 nm | 526 nm | 534 nm |

For comparison purpose, solution-processed films in PC having a thickness of 67 µm, containing the compound of examples 1, 3, 4, 5 or 8, respectively, and TiO₂ were prepared. The results are compiled in Table II.

**Table II: Results for solution-processed films in PC, concentration of the green-emitting compound: 0.01% by weight, concentration of TiO₂: 0.36% by weight**

| PC | compound of ex. 1 | compound of ex. 3 | compound of ex. 4 | compound of ex. 5 | compound of ex. 8 |
|---|---|---|---|---|---|
| QY | 89% | 91% | 89% | 92% | 93% |
| FWHM | 38 nm | 34 nm | 31 nm | 31 nm | 33 nm |
| Emission λmax | 524 nm | 539 nm | 526 nm | 525 nm | 534 nm |

The results for the red emitting compounds of examples 2, 6, 7 and 10, respectively, in PET in a layer having a thickness of 70 µm are compiled below in table III.

**Table III: Concentration of the red emitting compound: 0.01% by weight, concentration of TiO₂: 0.36% by weight; lambda excitation: 570 nm**

| PET | compound of ex. 2 | compound of ex. 6 | compound of ex. 7 | compound of ex. 10 |
|---|---|---|---|---|
| QY | 88% | 65% | 86% | 90% |
| FWHM | 56 nm | 45 nm | 45 nm | 56 nm |
| Emission λmax | 636 nm | 596 nm | 613 nm | 628 nm |

For comparison purpose, a solution-processed film in PC having a thickness of 67 µm, containing the compound of examples 2, 6, 7 and 10, respectively, and TiO₂ were prepared. The results are compiled in Table IV.

**Table IV: Concentration of the red-emitting compound: 0.01% by weight, concentration of TiO₂: 0.36% by weight; lambda excitation: 570 nm**

| PC | compound of ex. 2 | compound of ex. 6 | compound of ex. 7 | compound of ex. 10 |
|---|---|---|---|---|
| QY | 92% | 71% | 90% | 91% |
| FWHM | 56 nm | 45 nm | 47 nm | 53 nm |
| Emission λmax | 640 nm | 601 nm | 623 nm | 631 nm |

### III Preparation of a display film containing a green-emitting compound and a red-emitting compound according to the invention by extrusion

Two films were produced using an extrusion line. Film thickness was monitored inline by a capacitive sensor. The extruder had a screw diameter of 30 mm and a process length of 20 D. The nozzle width was 300 mm, resulting in a maximum film width of approx. 250 mm. The extrusion components are followed by a cool/heatable chill-roll/ smoothing unit with edge trimming and winding unit. The maximum take-off speed was 16 m/mm. Rolls with a thickness of 130 µm and 150 µm were produced.

PET pellets comprising the compound used according to the present invention were pre-dried overnight at 150°C in a circulating air dryer.

Two display film comprising 0.027%by weight of the compound of example 4, 0.0041 of the compound of example 2 and 0.3 % by weight of TiO₂ in PET were prepared by extrusion in a thickness of 130 µm and 150 µm.

### Extrusion temperature: 260-290°C

### Chill-roll temperature: 75°C

The obtained films were irradiated with a Fortimo blue LED, where the total light irradiated from the LED was measured by a photometric measurement tool equipped with an optical module in Integrating Sphere from Instrument Systems, see figure 1. The optical parameters such as color coordinates CIE-x and CIE-y, the color coordinate CIE-u' in CIE 1976 (L*, u*,y*), the correlated color temperature CCT in Kelvin, the distance of color point from Planck-curve (BBL), are measured in the integrating sphere. The results are given in table V.

**Table V: Photometric data of inventive converters for Fortimo blue LED**

| No. | CIE-x | CIE-y | CIE-u' | CCT [K] | Planck distance |
|---|---|---|---|---|---|
| Fortimo | 0.1537 | 0.0259 | 0.2048 | 0 | 0.00E+00 |
| 130 µm film | 0.2771 | 0.2698 | 0.1950 | 11977 | -7.78E-03 |
| 150 µm film | 0.2922 | 0.2845 | 0.2005 | 8943 | -9.34E-03 |

These films were measured in a TV display (optical stack + LCD + Color filters), and a DCI coverage of 99% was obtained .

Preparation of a display film containing a green-emitting compound and a red-emitting compound according to the invention by extrusion, co-extrusion with PC on both sides

Three films were produced using an extrusion line. Film thickness was monitored inline by a capacitive sensor. The extruder had a screw diameter of 30 mm and a process length of 20 D. The nozzle width was 300 mm, resulting in a maximum film width of approx. 250 mm. The extrusion components are followed by a cool/heatable chill-roll/ smoothing unit with edge trimming and winding unit. The maximum take-off speed was 16 m/mm. Rolls with a thickness of 200µm, 250µm and 300 µm of the PET film were produced. All films wer co-extruded with PC on both sides, 25µm each.

PET pellets comprising the compound used according to the present invention were pre-dried overnight at 150°C in a circulating air dryer.
- Dyes: Compounds of example 2 and 5:
- PET: Shinkong 5015W
- Silicone-based scattering agent HSP200
- ABA structure for thermal stability and anti-mura
- A layer with 0.3% Sylysia340 (micronized silica particles) in PC, 25 µm (both sides the same: ABA)
- B layer: compound of example 5: 0.017% by weight, compound of example 2: 0.0026% by weight, 1 % silicone HSP 200
- B layer thicknesses: 200 µm, 250 µm and 300 µm

### Extrusion temperature: 260-290°C

### Chill-roll temperature: 75°C

The obtained films were irradiated with a Fortimo blue LED, where the total light irradiated from the LED was measured by a photometric measurement tool equipped with an optical module in Integrating Sphere from Instrument Systems. The optical parameters such as color coordinates CIE-x and CIE-y, the color coordinate CIE-u' in CIE 1976 (L*, u*,y*), are measured in the integrating sphere. The results are given in table VI.

**Table VI: Photometric data of inventive converters for Fortimo blue LED**

| No. | CIE-x | CIE-y | CIE-u' |
|---|---|---|---|
| Fortimo | 0.1537 | 0.0259 | 0.2048 |
| 200 µm film | 0.2322 | 0.1929 | 0.1914 |
| 250 µm film | 0.2522 | 0.2177 | 0.1975 |
| 300 µm film | 0.2643 | 0.2318 | 0.2013 |

The films were also measured in a TV device by replacing the QDF of a commercial TV (TCL U55X9006) by the color converter according to the present invention. The stack is as follow:
Blue LED / Diffuser film / inventive color converter / DBEF (2D-prisms) / BEF (reflective polarizer)

### The following color points (CIE 1931) were measured with a Hera Spectro:

| No. | CIE-x | CIE-y |
|---|---|---|
| 200 µm film | 0.2481 | 0.2074 |
| 250 µm film | 0.2694 | 0.2272 |
| 300 µm film | 0.2797 | 0.2385 |

### III Photostability

The T80 value of the compound of example 1 in different polymer matrices were determined. T80 is the decay of fluorescence (product abs*QY) to 80% of its initial value, while illuminating with 100 mW/cm² of blue light (450 nm). To this end, polyethylene terephthalate(PET) polymer films doped with 0.36% by weight TiO₂ and the compound of example 1 (0.01 % by weight) were prepared as described above. The results are summarized in table VII. Film thickness: 70 µm

**Table VII: Lifetime (days) upon irradiation (T80)**

| Compound | polymer matrix material | T80 |
|---|---|---|
| Compound of example 1 | solution-processed PC | 17 days |
| | solution-processed PMMA | < 1 day |
| | solution-processed PS | 4 days |
| | extruded PET film | 26 days |

It was found that the lifetime of the organic fluorescent compound of example 1 can be considerably increased once embedded in an extruded polyethylene terephthalate film as compared to polymer matrices such as polystyrene, polymethylmethacrylate and polycarbonate.

In addition, T80 blue illumination (450 nm) and T80 white illumination (DLM Flex) were determined for the compounds of examples 2, 4, 5, and 7 in PET and PC. The results are summarized in table VIII and IX.

**Table VIII: Lifetime (days) upon irradiation (T80)**

| | | | | |
|---|---|---|---|---|
| Results for red emitting compounds; lambda excitation: 570 nm | | | | |
| - in PET films, 70 µm, conc. dye 0.01%, conc.TiO₂ 0.36%; and | | | | |
| - in PC films 67 µm, conc. dye 0.01%, conc. TiO₂ 0.36% | | | | |

| | compound ex. 2 in PC | compound ex. 2 in PET | compound ex. 7 in PC | compound ex. 7 in PET |
|---|---|---|---|---|
| T80 blue illumination (450nm) | 106 days | >130 days | 6 days | 49 days |
| T80 white illumination (DLM Flex) | 117 days | >130 days | 15 days | 38 days |

| | | | | |
|---|---|---|---|---|
| > means experiment is still running | | | | |

**Table IX: Lifetime (days) upon irradiation (T80)**

| | | | | |
|---|---|---|---|---|
| Results for green emitting compounds | | | | |
| - in PET films, 70 µm, conc. dye 0.01%, conc.TiO₂ 0.36%; and | | | | |
| - in PC films 67 µm, conc. dye 0.01%, conc. TiO₂ 0.36% | | | | |

| | compound ex. 4 in PC | compound ex. 4 in PET | compound ex. 5 in PC | compound ex. 5 in PET |
|---|---|---|---|---|
| T80 blue illumination (450nm) | 25 days | 36 days | 27 days | 33 days |

In addition, T95 blue illumination (450 nm) and T95 white illumination (DLM Flex) were determined for the compound of example 10 in PET and PC. The results are summarized in table X.

**Table X: Lifetime (days) upon irradiation (T95);**

| | | |
|---|---|---|
| Results for red emitting compound of example 10; lambda excitation: 570 nm | | |
| - in PET film, 70 µm, conc. dye 0.01%, conc.TiO₂ 0.36%; and | | |
| - in PC film 67 µm, conc. dye 0.01%, conc. TiO₂ 0.36%; | | |

| | compound ex. 10 in PC | compound ex. 10 in PET |
|---|---|---|
| T95 blue illumination (450nm) | 21 days | >30 days |
| T95 white illumination (DLM Flex) | 8 days | 21 days |

| | | |
|---|---|---|
| > means experiment is still running | | |

## Claims

1. A color converter comprising
(a) a polyethylene terephthalate matrix material; and
(b) at least one organic fluorescent dye selected from a compound of formulae (I.a), (I.b), (I.c) or mixtures thereof 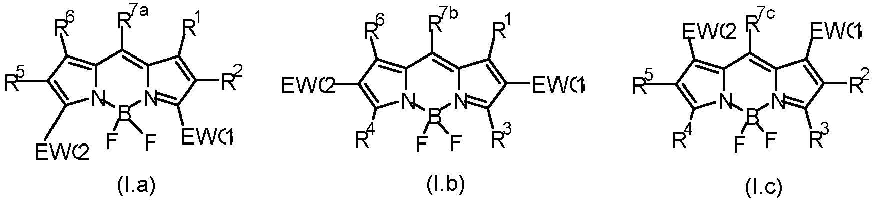
wherein
EWG1 and EWG2, are independently selected from CN, CH(O), C(O)R¹³, OC(O)R¹³, COOR¹⁴, CH(COOR¹⁴)₂, SO₂R¹⁴, C(O)NR¹⁵R¹⁶, SO₂NR₁₅R₁₆ or C₁-C₂₀-fluoroalkyl;
R¹, R², R³, R⁴, R⁵, R⁶, if present, in formulae (I.a), (I.b) and (I.c) are independently selected from hydrogen, fluorine, COOR¹⁴, CH(COOR¹⁴)₂, C₁-C₂₀-alkyl, C₂-C₂₀-alkenyl, C₂-C₂₀-alkynyl, C₃-C₂₀-cycloalkyl, C₄-C₂₀-cycloalkenyl, C₆-C₁₄-aryl, heterocyclyl or hetaryl,
wherein the C₁-C₂₀-alkyl, the C₂-C₂₀-alkenyl and the C₂-C₂₀-alkynyl are unsubstituted or substituted with one or more substituents R⁸,
wherein the C₃-C₂₀-cycloalkyl and the C₄-C₂₀-cycloalkenyl are unsubstituted or substituted with one or more substituents R⁹,
wherein the C₆-C₁₄-aryl is unsubstituted or substituted with one or more substituents R¹⁰,
wherein the heterocyclyl and the hetaryl are unsubstituted or substituted by one or more substituents R¹⁰;
R7a, R^{7b} and R^{7c} are hydrogen, fluorine, cyano, C₁-C₂₀-alkyl, C₂-C₂₀-alkenyl, C₂-C₂₀-alkynyl, C₃-C₂₀-cycloalkyl, C₄-C₂₀-cycloalkenyl, C₆-C₁₄-aryl or hetaryl;
wherein the C₁-C₂₀-alkyl, the C₂-C₂₀-alkenyl and the C₂-C₂₀-alkynyl are unsubstituted or substituted with one or more substituents R⁸,
wherein the C₃-C₂₀-cycloalkyl and the C₄-C₂₀-cycloalkenyl are unsubstituted or substituted with one or more substituents R⁹,
wherein the C₆-C₁₄-aryl is unsubstituted or substituted with one or more substituents R¹¹;
each R⁸ is independently selected from fluorine, C₃-C₂₀-cycloalkyl, C₄-C₂₀-cycloalkenyl, C₆-C₁₄-aryl, C₆-C₁₄-aryloxy or hetaryl,
wherein the C₃-C₂₀-cycloalkyl and the C₄-C₂₀-cycloalkenyl are unsubstituted or substituted with one or more substituents R⁹, and
wherein the C₆-C₁₄-aryl and the C₆-C₁₄-aryloxy are unsubstituted or substituted with one or more substituents R¹⁰;
each R⁹ is independently selected from cyano, fluorine, C₁-C₁₀-alkyl, C₁-C₁₀-fluoroalkyl, C₁-C₁₀-alkoxy, C₁-C₁₀-fluoroalkoxy or tri-(C₁-C₁₀-alkyl)silyl;
each R¹⁰ is independently selected from cyano, fluorine, C₁-C₁₀-alkyl, C₁-C₁₀-fluoroalkyl, C₁-C₁₀-alkoxy, C₁-C₁₀-fluoroalkoxy, tri-(C₁-C₁₀-alkyl)silyl, hetaryl, phenyl or phenoxy, wherein the aromatic ring of the two last-mentioned radicals may be substituted by one or more substituents R¹²;
each R¹¹ is independently selected from EWG1, fluorine, chlorine, bromine, C₁-C₁₀-alkyl, C₁-C₁₀-alkoxy, C₁-C₁₀-fluoroalkoxy, tri-(C₁-C₁₀-alkyl)silyl, N(C₁-C₂₀-alkyl)₂, N(C₆-C₁₄-aryl)₂, hetaryl, biphenylyl, terphenylyl, spirofluorenyl, C₆-C₁₄-aryl, C₆-C₁₄-aryl-C₁-C₁₀-alkylene, C₆-C₁₄-aryl-C₁-C₁₀-alkylene-O-, where the last six radicals mentioned are unsubstituted in the aryl moiety or substituted by one or more substituents R¹²;
each R¹² is independently selected from EWG1, C₁-C₁₀-alkyl, C₁-C₁₀-alkoxy, C₁-C₁₀-fluoroalkoxy, tri-(C₁-C₁₀-alkyl)silyl or C₃-C₂₀-cycloalkyl;
R¹³ is selected from C₁-C₁₀-alkyl, C₁-C₁₀-fluoroalkyl, C₃-C₂₀-cycloalkyl, C₃-C₂₀-cycloalkyl-C₁-C₁₀-alkylene, C₆-C₁₄-aryl or C₆-C₁₄-aryl-C₁-C₁₀-alkylene, wherein the C₆-C₁₄-aryl and the aryl moiety of C₆-C₁₄-aryl-C₁-C₁₀-alkylene is unsubstituted or substituted by one or more substituents R¹⁰;
R¹⁴ is selected from hydrogen, C₁-C₁₀-alkyl, C₁-C₁₀-fluoroalkyl, C₃-C₂₀-cycloalkyl, C₃-C₂₀-cycloalkyl-C₁-C₁₀-alkylene, C₆-C₁₄-aryl or C₆-C₁₄-aryl-C₁-C₁₀-alkylene,
wherein the C₆-C₁₄-aryl and the aryl moiety of C₆-C₁₄-aryl-C₁-C₁₀-alkylene is unsubstituted or substituted by one or more substituents R¹⁰;
R¹⁵ and R¹⁶, at each occurrence, are each independently hydrogen, C₁-C₁₀-alkyl, or C₁-C₁₀-fluoroalkyl.

2. The color converter as claimed in claim 1, wherein the polyethylene terephthalate matrix material comprises at least 90 wt.% of polyethylene terephthalate based on the total polymer content of the polyethylene terephthalate matrix material.

3. The color converter as claimed in claim 1 or 2, wherein each R¹⁰ is independently selected from cyano, fluorine, C₁-C₁₀-alkyl, C₁-C₁₀-fluoroalkyl, C₁-C₁₀-alkoxy, C₁-C₁₀-fluoroalkoxy, tri-(C₁-C₁₀-alkyl)silyl, phenyl, phenoxy or hetaryl.

4. The color converter as claimed in any of claims 1 to 3, wherein EWG1 and EWG2 in formulae (I.a), (I.b) and (I.c) are independently selected at each occurrence from CN, CF₃, CH(O), C(O)(C₁-C₄-alkyl), CH(COO(C₁-C₄-alkyl))₂ or COO(C₁-C₄-alkyl), where preferably EWG1 and EWG2 in formulae (I.a), (I.b) and (I.c) are each cyano.

5. The color converter as claimed in any of the preceding claims, wherein in formulae (I.a), (I.b) and (I.c), R¹, R², R³, R⁴, R⁵ and R⁶, if present, are independently of each other selected from C₁-C₁₀-alkyl, phenyl or phenyl-C₂-C₆-alkenyl, where phenyl and the phenyl moiety in phenyl-C₂-C₆-alkenyl in the two last-mentioned radicals may be substituted by one, two or three substituents R¹⁰;
where preferably
all of R¹, R², R³, R⁴, R⁵ and R⁶, if present, in formulae (I.a), (I.b) and (I.c) are independently of each other selected from C₁-C₁₀-alkyl; or
all of R¹, R², R³, R⁴, R⁵ and R⁶, if present, in formulae (I.a), (I.b) and (I.c), are independently of each other selected from phenyl, which is unsubstituted, or carries one, two, three, four or five substituents R¹⁰.

6. The color converter as claimed in any of the preceding claims, wherein R^{7a} in formula (I.a), R^{7b} in formula (I.b) and R^{7c} in formula (I.c) are hydrogen, cyano, CF₃, C₁-C₄-alkyl, pyridyl, dibenzofuranyl or, phenyl, wherein the phenyl is unsubstituted or substituted with one, two, three, four or five substituents R¹¹.

7. The color converter as claimed in any of the preceding claims, comprising at least a first compound of formulae (I.a), (I.b), (I.c) or mixtures thereof emitting light having a center wavelength of emission in the range from 500 to 560 nm and at least a second compound of formulae (I.a), (I.b), (I.c) or mixtures thereof emitting light having a center wavelength of emission in the range from 595 to 700 nm.

8. The color converter as claimed in any of the preceding claims, wherein the at least one organic fluorescent dye is a fluorescent dye of formula (I.b) selected from the compounds (1), (2), (3), (4), (5), (6), (7), (8), (9), (10), (11), (12), (13), (14), (15), (16), (17), (18), (19), (20) (21), (22), (23), (24), (25), (26), (27), (28), (29), (30), (31), (32), (33), (34), (35), (36), (37), (38), (39) or mixtures thereof
| Compound | R¹ | R³ | R⁴ | R⁶ | EWG1 | EWG2 | R^{7b} |
|---|---|---|---|---|---|---|---|
| (1) | CH₃ | CH₃ | CH₃ | CH₃ | CN | CN | ethyl |
| (2) | CH₃ | CH₃ | CH₃ | CH₃ | CN | CN | phenyl |
| (3) | CH₃ | CH₃ | CH₃ | CH₃ | CN | CN | 2,4,6-(CH₃)₃-C₆H₂ |
| (4) | CH₃ | CH₃ | CH₃ | CH₃ | CN | CN | 2-Cl-C₆H₄ |
| (5) | CH₃ | CH₃ | CH₃ | CH₃ | CN | CN | 2-F-C₆H₄ |
| (6) | CH₃ | CH₃ | CH₃ | CH₃ | CN | CN | 2,6-Cl₂-C₆H₃ |
| (7) | CH₃ | CH₃ | CH₃ | CH₃ | CN | CN | 2,6-F₂-C₆H₃ |
| (8) | CH₃ | CH₃ | CH₃ | CH₃ | CN | CN | C₆F₅ |
| (9) | CH₃ | CH₃ | CH₃ | CH₃ | CN | CN | C₆Cl₅ |
| (10) | phenyl | phenyl | phenyl | phenyl | CN | CN | 2,4,6-(CH₃)₃-C₆H₂ |
| (11) | phenyl | phenyl | phenyl | phenyl | CN | CN | 2-Cl-C₆H₄ |
| (12) | phenyl | phenyl | phenyl | phenyl | CN | CN | 2-F-C₆H₄ |
| (13) | phenyl | phenyl | phenyl | phenyl | CN | CN | 2,6-Cl₂-C₆H₃ |
| (14) | phenyl | phenyl | phenyl | phenyl | CN | CN | 2,6-F₂-C₆H₃ |
| (15) | phenyl | phenyl | phenyl | phenyl | CN | CN | C₆F₅ |
| (16) | phenyl | phenyl | phenyl | phenyl | CN | CN | C₆Cl₅ |
| (17) | phenyl | 4-(CH₃O)-C₆H₄ | 4-(CH₃O)-C₆H₄ | phenyl | CN | CN | 2,4,6-(CH₃)₃-C₆H₂ |
| (18) | phenyl | 4-(CH₃O)-C₆H₄ | 4-(CH₃O)-C₆H₄ | phenyl | CN | CN | 2-Cl-C₆H₄ |
| (19) | phenyl | 4-(CH₃O)-C₆H₄ | 4-(CH₃O)-C₆H₄ | phenyl | CN | CN | 2-F-C₆H₄ |
| (20) | phenyl | 4-(CH₃O)-C₆H₄ | 4-(CH₃O)-C₆H₄ | phenyl | CN | CN | 2,6-Cl₂-C₆H₃ |
| (21) | phenyl | 4-(CH₃O)-C₆H₄ | 4-(CH₃O)-C₆H₄ | phenyl | CN | CN | 2,6-F₂-C₆H₃ |
| (22) | phenyl | 4-(CH₃O)-C₆H₄ | 4-(CH₃O)-C₆H₄ | phenyl | CN | CN | C₆F₅ |
| (23) | phenyl | 4-(CH₃O)-C₆H₄ | 4-(CH₃O)-C₆H₄ | phenyl | CN | CN | C₆Cl₅ |
| (24) | methyl | 4-CN-PV | 4-CN-PV | methyl | CN | CN | phenyl |
| (25) | methyl | 4-CN-PV | 4-CN-PV | methyl | CN | CN | 2,4,6-(CH₃)₃-C₆H₂ |
| (26) | methyl | 4-CN-PV | 4-CN-PV | methyl | CN | CN | 2-Cl-C₆H₄ |
| (27) | methyl | 4-CN-PV | 4-CN-PV | methyl | CN | CN | 2-F-C₆H₄ |
| (28) | methyl | 4-CN-PV | 4-CN-PV | methyl | CN | CN | 2,6-Cl₂-C₆H₃ |
| (29) | methyl | 4-CN-PV | 4-CN-PV | methyl | CN | CN | 2,6-F₂-C₆H₃ |
| (30) | methyl | 4-CN-PV | 4-CN-PV | methyl | CN | CN | C₆F₅ |
| (31) | methyl | 4-CN-PV | 4-CN-PV | methyl | CN | CN | C₆F₅ |
| (32) | phenyl | DIPPP | DIPPP | phenyl | CN | CN | phenyl |
| (33) | phenyl | DIPPP | DIPPP | phenyl | CN | CN | 2,4,6-(CH₃)₃-C₆H₂ |
| (34) | phenyl | DIPPP | DIPPP | phenyl | CN | CN | 2-Cl-C₆H₄ |
| (35) | phenyl | DIPPP | DIPPP | phenyl | CN | CN | 2-F-C₆H₄ |
| (36) | phenyl | DIPPP | DIPPP | phenyl | CN | CN | 2,6-Cl₂-C₆H₃ |
| (37) | phenyl | DIPPP | DIPPP | phenyl | CN | CN | 2,6-F₂-C₆H₃ |
| (38) | phenyl | DIPPP | DIPPP | phenyl | CN | CN | C₆F₅ |
| (39) | phenyl | DIPPP | DIPPP | phenyl | CN | CN | C₆Cl₅ |
| | | | | | | | |
|---|---|---|---|---|---|---|---|
| 4-CN-PV: 2-(4-cyanophenyl)vinyl DIPPP: 4-(2,6-diisopropylphenoxy)phenyl. | | | | | | | |

9. The color converter as claimed in any of the preceding claims, further comprising at least one light scattering agent.

10. A backlight unit, comprising
(i) a light source configured to emit light; and
(ii) at least one converter as defined in any of claims 1 to 9;
where the at least one color converter is in a remote arrangement from the light source.

11. A liquid crystal display module comprising
(i) a liquid crystal panel comprising a thin film transistor (TFT) array, a liquid crystal layer, and a color filter array comprising red, green and blue color filters;
(ii) at least one of light source; and
(iii) at least one color converter as defined in any of claim 1 to 9.

12. Light emitting device comprising
(i) at least one LED selected from a blue LED with a center wavelength of emission from 400 nm to 480 nm or a cool white LED having a correlated color temperature between 3 000 K and 20 000 K; and
(ii) at least one color converter as defined in any of claims 1 to 9;
wherein the at least one color converter is in a remote arrangement from the at least one LED.

13. A compound of formula (I.b), wherein R¹ and R⁶ are each phenyl; R³ and R⁴ are each 4-methoxyphenyl or 4-(2,6-diisopropylphenoxy)phenyl; EGW1 and EWG2 are each cyano; and R^{7b} is phenyl which is unsubstituted or substituted with 1, 2, 3, 4 or 5 radicals R¹¹ selected from EWG1, fluorine, chlorine, C₁-C₁₀-alkyl, C₁-C₁₀-alkoxy, phenyl, biphenylyl, terphenylyl or phenyl-C₁C₁₀-alkylene,
where preferably
R¹ and R⁶ are each phenyl; R³ and R⁴ are each 4-methoxyphenyl; EGW1 and EWG2 are each cyano; and R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl; or
R¹ and R⁶ are each phenyl; R³ and R⁴ are each 4-(2,6-diisopropylphenoxy)phenyl; EGW1 and EWG2 are each cyano; and R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

14. A compound of formula (I.b), wherein R¹, R³, R⁴ and R⁶ are each methyl; EWG1 and EWG2 are each cyano; and R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl; or
wherein R¹ and R⁶ are each methyl; R³ and R⁴ are each 4-cyanophenylvinyl; EWG1 and EWG2 are each cyano; and R^{7b} is mesityl, 2-chlorophenyl, 2-fluorophenyl, 2,6-dichlorophenyl, 2,6-difluorophenyl, 2,3,4,5,6-pentafluorophenyl or 2,3,4,5,6-pentachlorophenyl.

15. The compound of formula (I.b) as claimed in claim 13, wherein
R¹ and R⁶ are each phenyl; R³ and R⁴ are each 4-methoxyphenyl; EGW1 and EWG2 are each cyano; and R^{7b} is mesityl.

## Patentansprüche

1. Farbkonverter, umfassend
(a) ein Polyethylenterephthalat-Matrixmaterial und
(b) mindestens einen organischen Fluoreszenzfarbstoff, ausgewählt aus einer Verbindung der Formeln (I.a), (I.b), (I.c) oder Mischungen davon, 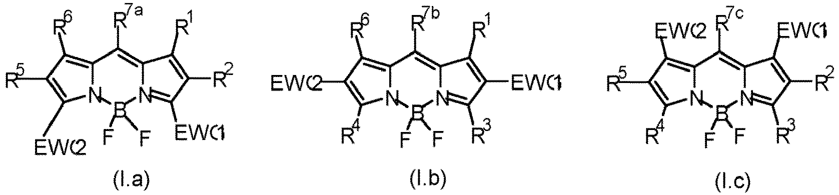
wobei
EWG1 und EWG2 unabhängig aus CN, CH(O), C(O)R¹³, OC(O)R¹³, COOR¹⁴, CH(COOR¹⁴)₂, SO₂R¹⁴, C(O)NR¹⁵R¹⁶, SO₂NR¹⁵R¹⁶ oder C₁-C₂₀-Fluoralkyl ausgewählt sind;
R¹, R², R³, R⁴, R⁵, R⁶, sofern vorhanden, in den Formeln (I.a), (I.b) und (I.c) unabhängig voneinander aus Wasserstoff, Fluor, COOR¹⁴, CH(COOR¹⁴)₂, C₁-C₂₀-Alkyl, C₂-C₂₀-Alkenyl, C₂-C₂₀-Alkinyl, C₃-C₂₀-Cycloalkyl, C₄-C₂₀-Cycloalkenyl, C₆-C₁₄-Aryl, Heterocyclyl oder Hetaryl ausgewählt sind,
wobei das C₁-C₂₀-Alkyl, das C₂-C₂₀-Alkenyl und das C₂-C₂₀-Alkinyl unsubstituiert oder durch einen oder mehrere Substituenten R⁸ substituiert sind,
wobei das C₃-C₂₀-Cycloalkyl und das C₄-C₂₀-Cycloalkenyl unsubstituiert oder durch einen oder mehrere Substituenten R⁹ substituiert sind,
wobei das C₆-C₁₄-Aryl unsubstituiert oder durch einen oder mehrere Substituenten R¹⁰ substituiert ist,
wobei das Heterocyclyl und das Hetaryl unsubstituiert oder durch einen oder mehrere Substituenten R¹⁰ substituiert sind;
R^{7a}, R^{7b} und R^{7c} für Wasserstoff, Fluor, Cyano, C₁-C₂₀-Alkyl, C₂-C₂₀-Alkenyl, C₂-C₂₀-Alkinyl, C₃-C₂₀-Cycloalkyl, C₄-C₂₀-Cycloalkenyl, C₆-C₁₄-Aryl oder Hetaryl stehen;
wobei das C₁-C₂₀-Alkyl, das C₂-C₂₀-Alkenyl und das C₂-C₂₀-Alkinyl unsubstituiert oder durch einen oder mehrere Substituenten R⁸ substituiert sind,
wobei das C₃-C₂₀-Cycloalkyl und das C₄-C₂₀-Cycloalkenyl unsubstituiert oder durch einen oder mehrere Substituenten R⁹ substituiert sind,
wobei das C₆-C₁₄-Aryl unsubstituiert oder durch einen oder mehrere Substituenten R¹¹ substituiert ist,
R⁸ jeweils unabhängig aus Fluor, C₃-C₂₀-Cycloalkyl, C₄-C₂₀)-Cycloalkenyl, C₆-C₁₄-Aryl, C₆-C₁₄-Aryloxy oder Hetaryl ausgewählt ist,
wobei das C₃-C₂₀-Cycloalkyl und das C₄-C₂₀-Cycloalkenyl unsubstituiert oder durch einen oder mehrere Substituenten R⁹ substituiert sind und
wobei das C₆-C₁₄-Aryl und das C₆-C₁₄-Aryloxy unsubstituiert oder durch einen oder mehrere Substituenten R¹⁰ substituiert sind;
R⁹ jeweils unabhängig aus Cyano, Fluor, C₁-C₁₀-Alkyl, C₁-C₁₀-Fluoralkyl, C₁-C₁₀-Alkoxy, C₁-C₁₀-Fluoralkoxy oder Tri (C₁-C₁₀-alkyl) silyl ausgewählt ist;
R¹⁰ jeweils unabhängig aus Cyano, Fluor, C₁-C₁₀-Alkyl, C₁-C₁₀-Fluoralkyl, C₁-C₁₀-Alkoxy, C₁-C₁₀-Fluoralkoxy, Tri (C₁-C₁₀-alkyl) silyl, Hetaryl, Phenyl oder Phenoxy ausgewählt ist, wobei der aromatische Ring der drei letztgenannten Reste durch einen oder mehrere Substituenten R¹² substituiert sein kann;
R¹¹ jeweils unabhängig aus EWG1, Fluor, Chlor, Brom, C₁-C₁₀-Alkyl, C₁-C₁₀-Alkoxy, C₁-C₁₀-Fluoralkoxy, Tri (C₁-C₁₀-alkyl) silyl, N(C₁-C₂₀-Alkyl)₂, N(C₆-C₁₄-Aryl)₂, Hetaryl, Biphenylyl, Terphenylyl, Spirofluorenyl, C₆-C₁₄-Aryl, C₆-C₁₄-Aryl-C₁-C₁₀-alkylen, C₆-C₁₄-Aryl-C₁-C₁₀-alkylen-O- ausgewählt ist, wobei die sechs letztgenannten Reste in der Arylgruppierung unsubstituiert oder durch einen oder mehrere Substituenten R¹² substituiert sind;
R¹² jeweils unabhängig aus EWG1, C₁-C₁₀-Alkyl, C₁-C₁₀-Alkoxy, C₁-C₁₀-Fluoralkoxy, Tri (C₁-C₁₀-alkyl) silyl oder C₃-C₂₀-Cycloalkyl ausgewählt ist;
R¹³ aus C₁-C₁₀-Alkyl, C₁-C₁₀-Fluoralkyl, C₃-C₂₀-Cycloalkyl, C₃-C₂₀-Cycloalkyl-C₁-C₁₀alkylen, C₆-C₁₄-Aryl oder C₆-C₁₄-Aryl-C₁-C₁₀-alkylen ausgewählt ist,
wobei das C₆-C₁₄-Aryl und die Arylgruppierung von C₆-C₁₄-Aryl-C₁-C₁₀-alkylen unsubstituiert oder durch einen oder mehrere Substituenten R¹⁰ substituiert sind;
R¹⁴ aus Wasserstoff, C₁-C₁₀-Alkyl, C₁-C₁₀-Fluoralkyl, C₃-C₂₀-Cycloalkyl, C₃-C₂₀-Cycloalkyl-C₁-C₁₀-alkylen, C₆-C₁₄-Aryl oder C₆-C₁₄-Aryl-C₁-C₁₀-alkylen ausgewählt ist,
wobei das C₆-C₁₄-Aryl und die Arylgruppierung von C₆-C₁₄-Aryl-C₁-C₁₀-alkylen unsubstituiert oder durch einen oder mehrere Substituenten R¹⁰ substituiert sind;
R¹⁵ und R¹⁶ bei jedem Vorkommen jeweils unabhängig für Wasserstoff, C₁-C₁₀-Alkyl oder C₁-C₁₀-Fluoralkyl stehen.

2. Farbkonverter nach Anspruch 1, wobei das Polyethylenterephthalat-Matrixmaterial mindestens 90 Gew.-% Polyethylenterephthalat, bezogen auf den gesamten Polymergehalt des Polyethylenterephthalat-Matrixmaterials, umfasst.

3. Farbkonverter nach Anspruch 1 oder 2, wobei R¹⁰ jeweils unabhängig aus Cyano, Fluor, C₁-C₁₀-Alkyl, C₁-C₁₀-Fluoralkyl, C₁-C₁₀-Alkoxy, C₁-C₁₀-Fluoralkoxy, Tri(C₁-C₁₀-alkyl)silyl, Phenyl, Phenoxy oder Hetaryl ausgewählt ist.

4. Farbkonverter nach einem der Ansprüche 1 bis 3, wobei EWG1 und EWG2 in den Formeln (I.a), (I.b) und (I.c) bei jedem Vorkommen unabhängig aus CN, CF₃, CH(O), C (O)(C₁-C₄-Alkyl), CH(COO(C₁-C₄-Alkyl))₂ oder COO(C₁-C₄-Alkyl) ausgewählt sind, wobei vorzugsweise EWG1 und EWG2 in den Formeln (I.a), (I.b) und (I.c) jeweils für Cyano stehen.

5. Farbkonverter nach einem der vorhergehenden Ansprüche, wobei in den Formeln (I.a), (I.b) und (I.c) R¹, R², R³, R⁴, R⁵ und R⁶, sofern vorhanden, unabhängig voneinander aus C₁-C₁₀-Alkyl, Phenyl oder Phenyl-C₂-C₆-alkenyl ausgewählt sind, wobei Phenyl und die Phenylgruppierung in Phenyl-C₂-C₆-alkenyl in den beiden letztgenannten Resten durch einen, zwei oder drei Substituenten R¹⁰ substituiert sein können;
wobei vorzugsweise
alle von R¹, R², R³, R⁴, R⁵ und R⁶, sofern vorhanden, in den Formeln (I.a), (I.b) und (I.c) unabhängig voneinander aus C₁-C₁₀-Alkyl ausgewählt sind oder alle von R¹, R², R³, R⁴, R⁵ und R⁶, sofern vorhanden, in den Formeln (I.a), (I.b) und (I.c) unabhängig voneinander aus Phenyl, das unsubstituiert ist oder einen, zwei, drei, vier oder fünf Substituenten R¹⁰ trägt, ausgewählt sind.

6. Farbkonverter nach einem der vorhergehenden Ansprüche, wobei R^{7a} in Formel (I.a), R^{7b} in Formel (I.b) und R^{7c} in Formel (I.c) für Wasserstoff, Cyano, CF₃, C₁-C₄-Alkyl, Pyridyl, Dibenzofuranyl oder Phenyl stehen, wobei das Phenyl unsubstituiert oder durch einen, zwei, drei, vier oder fünf Substituenten R¹¹ substituiert ist.

7. Farbkonverter nach einem der vorhergehenden Ansprüche, umfassend mindestens eine erste Verbindung der Formeln (I.a), (I.b), (I.c) oder Mischungen davon, die Licht mit einer Emissionsmittenwellenlänge im Bereich von 500 bis 560 nm emittiert, und mindestens eine zweite Verbindung der Formeln (I.a), (I.b), (I.c) oder Mischungen davon, die Licht mit einer Emissionsmittenwellenlänge im Bereich von 595 bis 700 nm emittiert.

8. Farbkonverter nach einem der vorhergehenden Ansprüche, wobei es sich bei dem mindestens einen organischen Fluoreszenzfarbstoff um einen Fluoreszenzfarbstoff der Formel (I.b) handelt, der aus den Verbindungen (1), (2), (3), (4), (5), (6), (7), (8), (9), (10), (11), (12), (13), (14), (15), (16), (17), (18), (19), (20), (21), (22), (23), (24), (25), (26), (27), (28), (29), (30), (31), (32), (33), (34), (35), (36), (37), (38), (39) oder
Mischungen davon ausgewählt ist:
| Verbindung | R¹ | R³ | R⁴ | R⁶ | EWG1 | EWG2 | R^{7b} |
|---|---|---|---|---|---|---|---|
| (1) | CH₃ | CH₃ | CH₃ | CH₃ | CN | CN | Ethyl |
| (2) | CH₃ | CH₃ | CH₃ | CH₃ | CN | CN | Phenyl |
| (3) | CH₃ | CH₃ | CH₃ | CH₃ | CN | CN | 2,4,6-(CH₃) ₃-C₆H₂ |
| (4) | CH₃ | CH₃ | CH₃ | CH₃ | CN | CN | 2-Cl-C₆H₄ |
| (5) | CH₃ | CH₃ | CH₃ | CH₃ | CN | CN | 2-F-C₆H₄ |
| (6) | CH₃ | CH₃ | CH₃ | CH₃ | CN | CN | 2,6-Cl₂-C₆H₃ |
| (7) | CH₃ | CH₃ | CH₃ | CH₃ | CN | CN | 2, 6-F₂-C₆H₃ |
| (8) | CH₃ | CH₃ | CH₃ | CH₃ | CN | CN | C₆F₅ |
| (9) | CH₃ | CH₃ | CH₃ | CH₃ | CN | CN | C₆Cl₅ |
| (10) | Phenyl | Phenyl | Phenyl | Phenyl | CN | CN | 2,4,6-(CH₃) ₃-C₆H₂ |
| (11) | Phenyl | Phenyl | Phenyl | Phenyl | CN | CN | 2-Cl-C₆H₄ |
| (12) | Phenyl | Phenyl | Phenyl | Phenyl | CN | CN | 2-F-C₆H₄ |
| (13) | Phenyl | Phenyl | Phenyl | Phenyl | CN | CN | 2,6-Cl₂-C₆H₃ |
| (14) | Phenyl | Phenyl | Phenyl | Phenyl | CN | CN | 2, 6-F₂-C₆H₃ |
| (15) | Phenyl | Phenyl | Phenyl | Phenyl | CN | CN | C₆F₅ |
| (16) | Phenyl | Phenyl | Phenyl | Phenyl | CN | CN | C₆Cl₅ |
| (17) | Phenyl | 4-(CH₃O) - C₆H₄ | 4-(CH₃O) - C₆H₄ | Phenyl | CN | CN | 2,4,6-(CH₃)₃-C₆H₂ |
| (18) | Phenyl | 4-(CH₃O) - C₆H₄ | 4-(CH₃O) - C₆H₄ | Phenyl | CN | CN | 2-Cl-C₆H₄ |
| (19) | Phenyl | 4-(CH₃O) - C₆H₄ | 4-(CH₃O) - C₆H₄ | Phenyl | CN | CN | 2-F-C₆H₄ |
| (20) | Phenyl | 4-(CH₃O) - C₆H₄ | 4-(CH₃O) - C₆H₄ | Phenyl | CN | CN | 2,6-Cl₂-C₆H₃ |
| (21) | Phenyl | 4-(CH₃O) - C₆H₄ | 4-(CH₃O) - C₆H₄ | Phenyl | CN | CN | 2, 6-F₂-C₆H₃ |
| (22) | Phenyl | 4-(CH₃O) - C₆H₄ | 4-(CH₃O) - C₆H₄ | Phenyl | CN | CN | C₆F₅ |
| (23) | Phenyl | 4-(CH₃O) - C₆H₄ | 4-(CH₃O) - C₆H₄ | Phenyl | CN | CN | C₆Cl₅ |
| (24) | Methyl | 4-CN-PV | 4-CN-PV | Methyl | CN | CN | Phenyl |
| (25) | Methyl | 4-CN-PV | 4-CN-PV | Methyl | CN | CN | 2,4,6-(CH₃)₃-C₆H₂ |
| (26) | Methyl | 4-CN-PV | 4-CN-PV | Methyl | CN | CN | 2-Cl-C₆H₄ |
| (27) | Methyl | 4-CN-PV | 4-CN-PV | Methyl | CN | CN | 2-F-C₆H₄ |
| (28) | Methyl | 4-CN-PV | 4-CN-PV | Methyl | CN | CN | 2,6-Cl₂-C₆H₃ |
| (29) | Methyl | 4-CN-PV | 4-CN-PV | Methyl | CN | CN | 2, 6-F₂-C₆H₃ |
| (30) | Methyl | 4-CN-PV | 4-CN-PV | Methyl | CN | CN | C₆F₅ |
| (31) | Methyl | 4-CN-PV | 4-CN-PV | Methyl | CN | CN | C₆F₅ |
| (32) | Phenyl | DIPPP | DIPPP | Phenyl | CN | CN | Phenyl |
| (33) | Phenyl | DIPPP | DIPPP | Phenyl | CN | CN | 2,4,6-(CH₃) ₃-C₆H₂ |
| (34) | Phenyl | DIPPP | DIPPP | Phenyl | CN | CN | 2-Cl-C₆H₄ |
| (35) | Phenyl | DIPPP | DIPPP | Phenyl | CN | CN | 2-F-C₆H₄ |
| (36) | Phenyl | DIPPP | DIPPP | Phenyl | CN | CN | 2,6-Cl₂-C₆H₃ |
| (37) | Phenyl | DIPPP | DIPPP | Phenyl | CN | CN | 2, 6-F₂-C₆H₃ |
| (38) | Phenyl | DIPPP | DIPPP | Phenyl | CN | CN | C₆F₅ |
| (39) | Phenyl | DIPPP | DIPPP | Phenyl | CN | CN | C₆Cl₅ |
| | | | | | | | |
|---|---|---|---|---|---|---|---|
| 4-CN-PV: 2-(4-Cyanophenyl)vinyl DIPPP: 4-(2,6-Diisopropylphenoxy)phenyl. | | | | | | | |

9. Farbkonverter nach einem der vorhergehenden Ansprüche, ferner umfassend mindestens ein Lichtstreumittel.

10. Hintergrundbeleuchtungseinheit, umfassend
(i) eine Lichtquelle, die zur Emission von Licht ausgelegt ist, und
(ii) mindestens einen Konverter gemäß einem der Ansprüche 1 bis 9;
wobei sich der mindestens eine Farbkonverter in einer entfernten Anordnung von der Lichtquelle befindet.

11. Flüssigkristallanzeigemodul, umfassend
(i) ein Flüssigkristallfeld, umfassend ein Dünnschichttransistor(TFT)-Array, eine Flüssigkristallschicht und ein Farbfilterarray, das rote, grüne und blaue Farbfilter umfasst;
(ii) mindestens eine Lichtquelle und
(iii) mindestens einen Farbkonverter gemäß einem der Ansprüche 1 bis 9.

12. Lichtemittierende Vorrichtung, umfassend
(i) mindestens eine LED, die aus einer blauen LED mit einer Emissionsmittenwellenlänge von 400 nm bis 480 nm oder einer kaltweißen LED mit einer korrelierten Farbtemperatur zwischen 3000 K und 20.000 K ausgewählt ist; und
(ii) mindestens einen Farbkonverter gemäß einem der Ansprüche 1 bis 9;
wobei sich der mindestens eine Farbkonverter in einer entfernten Anordnung von der mindestens einen LED befindet.

13. Verbindung der Formel (I.b), wobei R¹ und R⁶ jeweils für Phenyl stehen; R³ und R⁴ jeweils für 4-Methoxyphenyl oder 4-(2,6-Diisopropylphenoxy)phenyl stehen; EWG1 und EWG2 jeweils für Cyano stehen und R^{7b} für Phenyl, das unsubstituiert oder durch 1, 2, 3, 4 oder 5 Reste R¹¹, die aus EWG1, Fluor, Chlor, C₁-C₁₀-Alkyl, C₁-C₁₀-Alkoxy, Phenyl, Biphenylyl, Terphenylyl oder Phenyl-C₁-C₁₀-alkylen ausgewählt sind, substituiert ist, steht,
wobei vorzugsweise
R¹ und R⁶ jeweils für Phenyl stehen; R³ und R⁴ jeweils für 4-Methoxyphenyl stehen; EWG1 und EWG2 jeweils für Cyano stehen und R^{7b} für Mesityl, 2-Chlorphenyl, 2-Fluorphenyl, 2,6-Dichlorphenyl, 2,6-Difluorphenyl, 2,3,4,5,6-Pentafluorphenyl oder 2,3,4,5,6-Pentachlorphenyl steht oder
R¹ und R⁶ jeweils für Phenyl stehen; R³ und R⁴ jeweils für 4-(2,6-Diisopropylphenoxy)phenyl stehen; EWG1 und EWG2 jeweils für Cyano stehen und R^{7b} für Mesityl, 2-Chlorphenyl, 2-Fluorphenyl, 2,6-Dichlorphenyl, 2,6-Difluorphenyl, 2,3,4,5,6-Pentafluorphenyl oder 2,3,4,5,6-Pentachlorphenyl steht.

14. Verbindung der Formel (I.b), wobei R¹, R³, R⁴ und R⁶ jeweils für Methyl stehen; EWG1 und EWG2 jeweils für Cyano stehen und R^{7b} für Mesityl, 2-Chlorphenyl, 2-Fluorphenyl, 2,6-Dichlorphenyl, 2,6-Difluorphenyl, 2,3,4,5,6-Pentafluorphenyl oder 2,3,4,5,6-Pentachlorphenyl steht oder
wobei R¹ und R⁶ jeweils für Methyl stehen; R³ und R⁴ jeweils für 4-Cyanophenylvinyl stehen; EWG1 und EWG2 jeweils für Cyano stehen und R^{7b} für Mesityl, 2-Chlorphenyl, 2-Fluorphenyl, 2,6-Dichlorphenyl, 2,6-Difluorphenyl, 2,3,4,5,6-Pentafluorphenyl oder 2,3,4,5,6-Pentachlorphenyl steht.

15. Verbindung der Formel (I.b) nach Anspruch 13, wobei R¹ und R⁶ jeweils für Phenyl stehen; R³ und R⁴ jeweils für 4-Methoxyphenyl stehen; EWG1 und EWG2 jeweils für Cyano stehen und R^{7b} für Mesityl steht.

## Revendications

1. Convertisseur de couleur comprenant
(a) un matériau de matrice de poly(téréphtalate d'éthylène) ; et
(b) au moins un colorant fluorescent organique choisi parmi un composé des formules (I.a), (I.b), (I.c) ou des mélanges correspondants 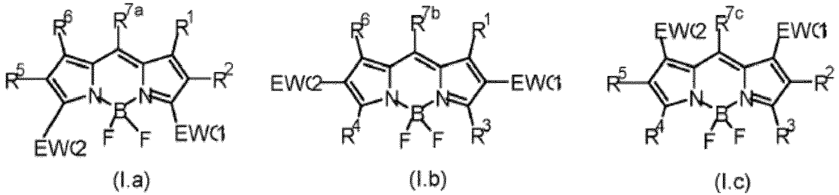
EWG1 et EWG2, étant indépendamment choisis parmi CN, CH(O), C(O)R¹³, OC(O)R¹³, COOR¹⁴, CH(COOR¹⁴)₂, SO₂R¹⁴, C(O)NR¹⁵R¹⁶, SO₂NR¹⁵R¹⁶ ou C₁-C₂₀-fluoroalkyle ;
R¹, R², R³, R⁴, R⁵, R⁶, s'ils sont présents, dans les formules (I.a), (I.b) et (I.c) étant indépendamment choisis parmi hydrogène, fluor, COOR¹⁴, CH(COOR¹⁴)₂, C₁-C₂₀-alkyle, C₂-C₂₀-alcényle, C₂-C₂₀-alcynyle, C₃-C₂₀-cycloalkyle, C₄-C₂₀-cycloalcényle, C₆-C₁₄-aryle, hétérocyclyle ou hétaryle,
le C₁-C₂₀-alkyle, le C₂-C₂₀-alcényle et le C₂-C₂₀-alcynyle étant non substitués ou substitués par un ou plusieurs substituants R⁸,
le C₃-C₂₀-cycloalkyle et le C₄-C₂₀-cycloalcényle étant non substitués ou substitués par un ou plusieurs substituants R⁹,
le C₆-C₁₄-aryle étant non substitué ou substitué par un ou plusieurs substituants R¹⁰, l'hétérocyclyle et l'hétaryle étant non substitués ou substitués par un ou plusieurs substituants R¹⁰ ;
R^{7a}, R^{7b} et R^{7c} étant hydrogène, fluor, cyano, C₁-C₂₀-alkyle, C₂-C₂₀-alcényle, C₂-C₂₀-alcynyle, C₃-C₂₀-cycloalkyle, C₄-C₂₀-cycloalcényle, C₆-C₁₄-aryle ou hétaryle ;
le C₁-C₂₀-alkyle, le C₂-C₂₀-alcényle et le C₂-C₂₀-alcynyle étant non substitués ou substitués par un ou plusieurs substituants R⁸,
le C₃-C₂₀-cycloalkyle et le C₄-C₂₀-cycloalcényle étant non substitués ou substitués par un ou plusieurs substituants R⁹,
le C₆-C₁₄-aryle étant non substitué ou substitué par un ou plusieurs substituants R¹¹;
chaque R⁸ étant indépendamment choisi parmi fluor, C₃-C₂₀-cycloalkyle, C₄-C₂₀-cycloalcényle, C₆-C₁₄-aryle, C₆-C₁₄-aryloxy ou hétaryle,
le C₃-C₂₀-cycloalkyle et le C₄-C₂₀-cycloalcényle étant non substitués ou substitués par un ou plusieurs substituants R⁹, et
le C₆-C₁₄-aryle et le C₆-C₁₄-aryloxy étant non substitués ou substitués par un ou plusieurs substituants R¹⁰;
chaque R⁹ étant indépendamment choisi parmi cyano, fluor, C₁-C₁₀-alkyle, C₁-C₁₀-fluoroalkyle, C₁-C₁₀-alcoxy, C₁-C₁₀-fluoroalcoxy ou tri- (C₁-C₁₀-alkyl)silyle ;
chaque R¹⁰ étant indépendamment choisi parmi cyano, fluor, C₁-C₁₀-alkyle, C₁-C₁₀- fluoroalkyle, C₁-C₁₀-alcoxy, C₁-C₁₀-fluoroalcoxy, tri-(C₁-C₁₀-alkyl)silyle, hétaryle, phényle ou phénoxy, le cycle aromatique des deux radicaux mentionnés en dernier pouvant être substitué par un ou plusieurs R¹²; chaque R¹¹ étant indépendamment choisi parmi EWG1, fluor, chlore, brome, C₁-C₁₀-alkyle, C₁-C₁₀-alcoxy, C₁-C₁₀-fluoroalcoxy, tri-(C₁-C₁₀-alkyl) silyle, N(C₁-C₂₀-alkyle)₂, N(C₆-C₁₄-aryle)₂, hétaryle, biphénylyle, terphénylyle, spirofluorényle, C₆- C₁₄-aryle, C₆-C₁₄-aryl-C₁-C₁₀-alkylène, C₆-C₁₄-aryl-C₁-C₁₀-alkylène-O-, les six derniers radicaux mentionnés étant non substitués dans le groupement aryle ou substitués par un ou plusieurs substituants R¹²; chaque R¹² étant indépendamment choisi parmi EWG1, C₁-C₁₀-alkyle, C₁-C₁₀-alcoxy, C₁-C₁₀-fluoroalcoxy, tri-(C₁-C₁₀-alkyl) silyle ou C₃-C₂₀-cycloalkyle ;
R¹³ étant choisi parmi C₁-C₁₀-alkyle, C₁-C₁₀-fluoroalkyle, C₃-C₂₀-cycloalkyle, C₃-C₂₀- cycloalkyl-C₁-C₁₀-alkyléne, C₆-C₁₄-aryle ou C₆-C₁₄-aryl-C₁-C₁₀-alkylène,
le C₆-C₁₄-aryle et le groupement aryle de C₆-C₁₄-aryl-C₁-C₁₀-alkylène étant non substitués ou substitués par un ou plusieurs substituants R¹⁰;
R¹⁴ étant choisi parmi hydrogène, C₁-C₁₀-alkyle, C₁-C₁₀-fluoroalkyle, C₃-C₂₀-cycloalkyle, C₃-C₂₀-cycloalkyl-C₁-C₁₀-alkyléne, C₆-C₁₄-aryle ou C₆-C₁₄-aryl-C₁-C₁₀-alkylène,
le C₆-C₁₄-aryle et le groupement aryle de C₆-C₁₄-aryl-C₁-C₁₀-alkylène étant non substitués ou substitués par un ou plusieurs substituants R¹⁰ ;
R¹⁵ et R¹⁶, en chaque occurrence, étant chacun indépendamment hydrogène, C₁-C₁₀-alkyle, ou C₁-C₁₀-fluoroalkyle.

2. Convertisseur de couleur selon la revendication 1, le matériau de matrice de poly(téréphtalate d'éthylène) comprenant au moins 90 % en poids de poly(téréphtalate d'éthylène) sur la base de la teneur totale en polymère du matériau de matrice de poly(téréphtalate d'éthylène).

3. Convertisseur de couleur selon la revendication 1 ou 2, chaque R¹⁰ étant indépendamment choisi parmi cyano, fluor, C₁-C₁₀-alkyle, C₁-C₁₀-fluoroalkyle, C₁-C₁₀-alcoxy, C₁-C₁₀-fluoroalcoxy, tri-(C₁-C₁₀-alkyl)silyle, phényle, phénoxy ou hétaryle.

4. Convertisseur de couleur selon l'une quelconque des revendications 1 à 3, EWG1 et EWG2 dans les formules (I.a), (I.b) et (I.c) étant indépendamment choisis en chaque occurrence parmi CN, CF₃, CH(O), C(O) (C₁-C₄-alkyle), CH(COO(C₁-C₄-alkyle))₂ ou COO(C₁-C₄-alkyle), préférablement EWG1 et EWG2 dans les formules (I.a), (I.b) et (I.c) étant chacun cyano.

5. Convertisseur de couleur selon l'une quelconque des revendications précédentes, dans lequel dans les formules (I.a), (I.b) et (I.c), R¹, R², R³, R⁴, R⁵ et R⁶, s'ils sont présents, étant indépendamment les uns des autres choisis parmi C₁-C₁₀-alkyle, phényle ou phényl-C₂-C₆-alcényle, où phényle et le groupement phényle dans phényl-C₂-C₆-alcényle dans les deux radicaux mentionnés en dernier peuvent être substitués par un, deux ou trois substituants R¹⁰ ; où préférablement
tous les R¹, R², R³, R⁴, R⁵ et R⁶, s'ils sont présents, dans les formules (I.a), (I.b) et (I.c) sont indépendamment les uns des autres choisis parmi C₁-C₁₀-alkyle ; ou
tous les R¹, R², R³, R⁴, R⁵ et R⁶, s'ils sont présents, dans les formules (I.a), (I.b) et (I.c), sont indépendamment les uns des autres choisis parmi phényle, qui est non substitué, ou porte un, deux, trois, quatre ou cinq substituants R¹⁰.

6. Convertisseur de couleur selon l'une quelconque des revendications précédentes, R^{7a} dans la formule (I.a), R^{7b} dans la formule (I.b) et R^{7c} dans la formule (I.c) étant hydrogène, cyano, CF₃, C₁-C₄-alkyle, pyridinyle, dibenzofurannyle ou phényle, le phényle étant non substitué ou substitué par un, deux, trois, quatre ou cinq substituants R¹¹.

7. Convertisseur de couleur selon l'une quelconque des revendications précédentes, comprenant au moins un premier composé parmi les formules (I.a), (I.b), (I.c) ou des mélanges correspondants émettant de la lumière possédant une longueur d'onde centrale d'émission dans la plage de 500 à 560 nm et au moins un deuxième composé parmi les formules (I.a), (I.b), (I.c) ou des mélanges correspondants émettant de la lumière possédant une longueur d'onde centrale d'émission dans la plage de 595 à 700 nm.

8. Convertisseur de couleur selon l'une quelconque des revendications précédentes, l'au moins un colorant fluorescent organique étant un colorant fluorescent de formule (I.b) choisi parmi les composés (1), (2), (3), (4), (5), (6), (7), (8), (9), (10), (11), (12), (13), (14), (15), (16), (17), (18), (19), (20) (21), (22), (23), (24), (25), (26), (27), (28), (29), (30), (31), (32), (33), (34), (35), (36), (37), (38), (39) ou des mélanges correspondants

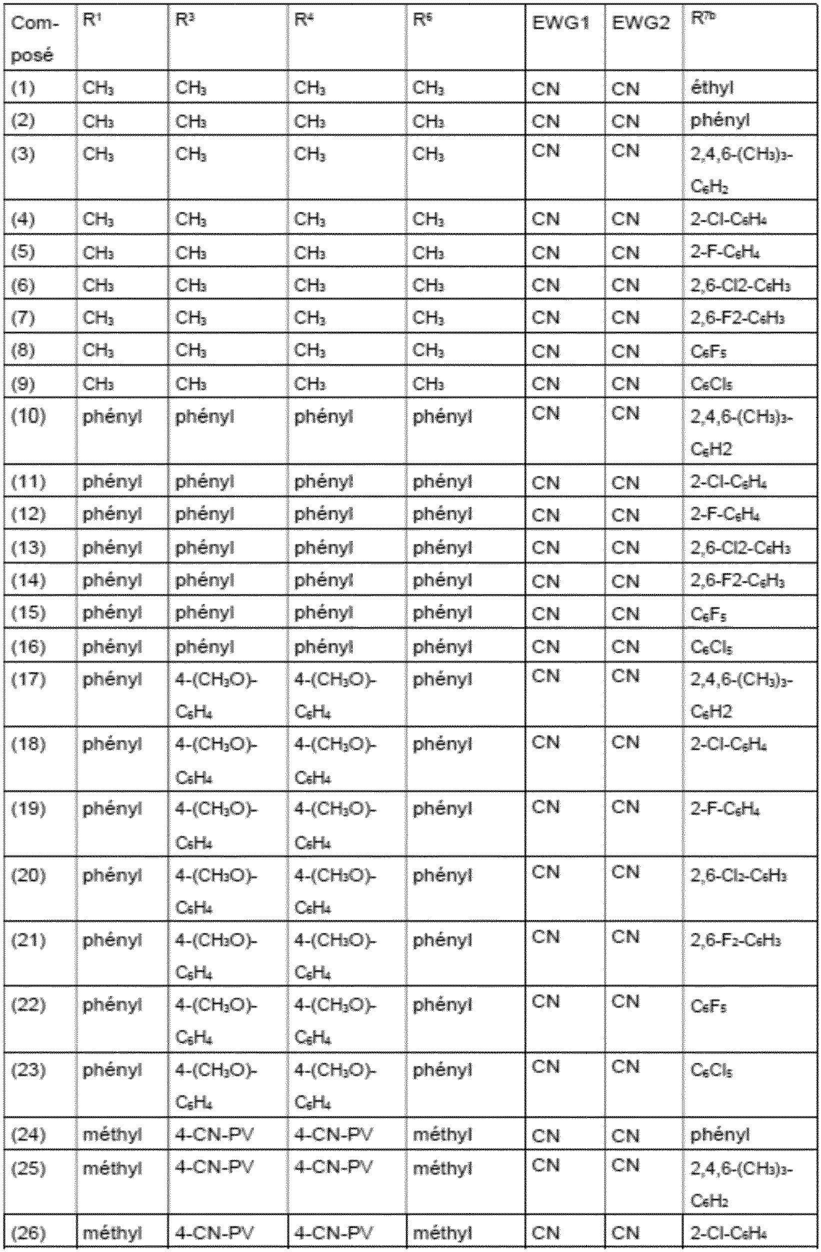

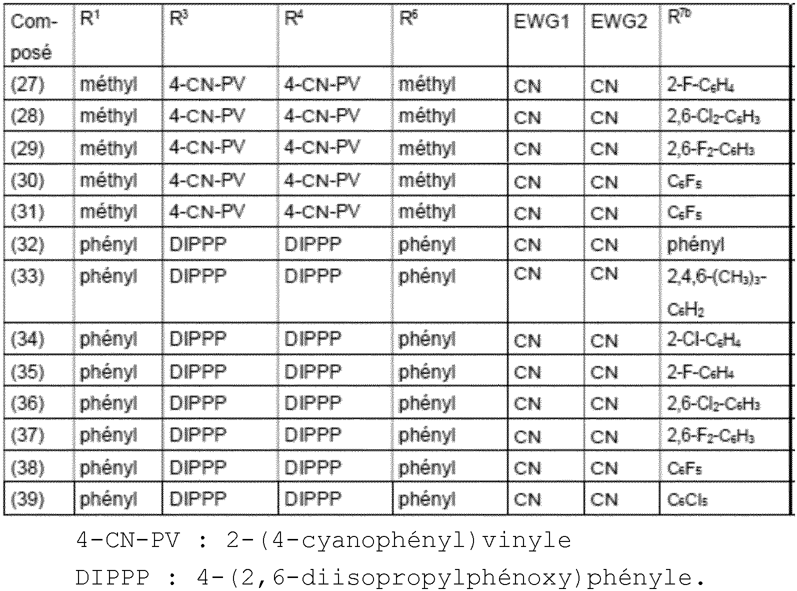

9. Convertisseur de couleur selon l'une quelconque des revendications précédentes, comprenant en outre au moins un agent de diffusion de lumière.

10. Unité de rétroéclairage, comprenant
(i) une source de lumière configurée pour émettre de la lumière ; et
(ii) au moins un convertisseur tel que défini dans l'une quelconque des revendications 1 à 9 ;
où l'au moins un convertisseur de couleur est dans un agencement à distance de la source de lumière.

11. Module d'affichage à cristaux liquides comprenant
(i) un panneau à cristaux liquides comprenant un réseau de transistors en film mince (TFT), une couche de cristaux liquides, et un réseau de filtres de couleur comprenant des filtres de couleur rouge, verte et bleue ;
(ii) au moins une source de lumière ; et
(iii) au moins un convertisseur de couleur tel que défini dans l'une quelconque des revendications 1 à 9.

12. Dispositif luminescent comprenant
(i) au moins une LED choisie parmi une LED bleue dotée d'une longueur d'onde centrale d'émission de 400 nm à 480 nm ou une LED blanche froide possédant une température de couleur corrélée comprise entre 3 000 K et 20 000 K ; et
(ii) au moins un convertisseur de couleur tel que défini dans l'une quelconque des revendications 1 à 9.
l'au moins un convertisseur de couleur étant dans un agencement à distance de l'au moins une LED.

13. Composé de formule (I.b), R¹ et R⁶ étant chacun phényle ; R³ et R⁴ étant chacun 4-méthoxyphényle ou 4-(2,6-diisopropylphénoxy)phényle ; EGW1 et EWG2 étant chacun cyano ; et R^{7b} étant phényle qui est non substitué ou substitué par 1, 2, 3, 4 ou 5 radicaux R¹¹ choisis parmi EWG1, fluor, chlore, C₁-C₁₀-alkyle, C₁-C₁₀-alcoxy, phényle, biphénylyle, terphénylyle ou phényl-C₁-C₁₀-alkylène,
où préférablement
R¹ et R⁶ sont chacun phényle ; R³ et R⁴ sont chacun 4-méthoxyphényle ; EGW1 et EWG2 sont chacun cyano ; et R^{7b} est mésityle, 2-chlorophényle, 2-fluorophényle, 2,6-dichlorophényle, 2,6-difluorophényle, 2,3,4,5,6-pentafluorophényle ou 2,3,4,5,6-pentachlorophényle ; ou
R¹ et R⁶ sont chacun phényle ; R³ et R⁴ sont chacun 4-(2,6-diisopropylphénoxy)phényle; EGW1 et EWG2 sont chacun cyano ; et R^{7b} est mésityle, 2-chlorophényle, 2-fluorophényle, 2,6-dichlorophényle, 2,6-difluorophényle, 2,3,4,5,6-pentafluorophényle ou 2,3,4,5,6-pentachlorophényle.

14. Composé de formule (I.b), R¹, R³, R⁴ et R⁶ étant chacun méthyle ; EWG1 et EWG2 étant chacun cyano ; et R^{7b} étant mésityle, 2-chlorophényle, 2-fluorophényle, 2,6-dichlorophényle, 2,6-difluorophényle, 2,3,4,5,6-pentafluorophényle ou 2,3,4,5,6-pentachlorophényle ; ou
R¹ et R⁶ étant chacun méthyle ; R³ et R⁴ étant chacun 4-cyanophénylvinyle ;
EWG1 et EWG2 étant chacun cyano ; et R^{7b} étant mésityle, 2-chlorophényle, 2-fluoro-phényle, 2,6-dichlorophényle, 2,6-difluorophényle, 2,3,4,5,6-pentafluorophényle ou 2,3,4,5,6-pentachlorophényle.

15. Composé de formule (1.b) selon la revendication 13, R¹ et R⁶ étant chacun phényle ; R³ et R⁴ étant chacun 4-méthoxyphényle ; EGW1 et EWG2 étant chacun cyano ; et R^{7b} étant mésityle.
